# EUROPEAN PATENT SPECIFICATION

(11) **EP 3 157 488 B1**
(45) Date of publication and mention of the grant of the patent: **06.11.2019**
(21) Application number: 15810415.8
(22) Date of filing: 18.06.2015
(51) Int. Cl.: A61H 3/00, A63B 22/02, A63B 22/00, A63B 22/06, A63B 71/06, A63B 24/00, A63B 21/00, A63B 22/18

(54) **PRESSURE CHAMBER AND LIFT FOR DIFFERENTIAL AIR PRESSURE SYSTEM WITH MEDICAL DATA COLLECTION CAPABILITIES**
DRUCKKAMMER UND AUFZUG FÜR EIN DIFFERENTIELLES LUFTDRUCKSYSTEM MIT MEDIZINISCHER DATENSAMMLUNGSKAPAZITÄT
CHAMBRE DE PRESSION ET SYSTÈME DE LEVAGE POUR SYSTÈME À PRESSION D'AIR DIFFÉRENTIELLE POURVU DE CAPACITÉS DE COLLECTE DE DONNÉES MÉDICALES

(30) Priority: 18.06.2014 US 201462013999 P; 15.07.2014 US 201462024916 P; 23.09.2014 US 201462054311 P
(43) Date of publication of application: 26.04.2017
(73) Proprietor: Alterg, Inc., Fremont, CA 94538 (US)
(72) Inventor: LONG, Philip, W., Fremont, CA 94538 (US); KUEHNE, Eric, R., Fremont, CA 94538 (US); RAHMAN, Babu, S., Fremont, CA 94538 (US); JUE, Clifford, T., Fremont, CA 94538 (US); WHALEN, Sean, Tremaine, Fremont, CA 94538 (US); MARECEK, Gregory, P., Fremont, CA 94538 (US); HORST, Robert, W., Fremont, CA 94538 (US); ABRAHAMI, Adrian, Fremont, CA 94538 (US); CURTISS, Chase, Camden, Fremont, CA 94538 (US); ESSOCK-BURNS, Emma, Fremont, CA 94538 (US)
(74) Representative: J A Kemp LLP
(86) International application number: PCT/US2015/036530
(87) International publication number: WO 2015/195983

(56) References cited:
- WO-A1-2013/021709
- JP-A- 2002 360 644
- US-A- 2 785 004
- US-A- 3 165 314
- US-A- 5 133 339
- US-A1- 2011 098 615
- US-A1- 2011 120 567
- US-A1- 2011 120 567
- US-A1- 2012 238 921
- US-A1- 2014 113 775

## Description

### FIELD

This application relates to the field of exercise or therapy systems in particular exercise or therapy systems that controllably generate and maintain a differential air pressure (DAP) envelope about a user so as to at least partially or completely unweight the user. This application also relates to improved pressure chambers for use in differential air pressure (DAP) systems including data collection and utilization for medical treadmills and related software systems. Additional support and height adjustment mechanisms are also disclosed.

### BACKGROUND

Conventional treadmills and other cardiovascular load inducing training equipment have historically used analog interfaces for the display of information and interactivity for adjusting various control settings such as treadmill speed, incline degree, amount of unweighting, and the like during the session. As a result, conventional treadmill and exercise equipment data has mostly existed in a fitness environment. As such, the user data collected lacks the necessary privacy and security, communication and payment management features required by the medical industry. To date, utilization of cloud connected exercise equipment has been almost non-existent in medical facilities due to privacy and confidentiality challenges to protected health information (PHI) required by the Health Insurance Portability and Accountability Act (HIPAA) and the Health Information Technology for Economic and Clinical Health (HITECH) Act. HIPAA and HITECH define PHI as individually identifiable health information including demographic information such as date of birth and zip code, that: (A) is created or received by a health care provider, health plan, public health authority, employer, life insurer, school or university, or health care clearinghouse; and (B) relates to the past, present, or future physical or mental health or condition of any individual, the provision of health care to an individual, or the past, present, or future payment for the provision of health care to an individual.

Differential Air Pressure (DAP) partial unweighting systems have typically been designed for Physical Therapists for direct use with their patients. Such systems typically contain a treadmill, a flexible bag that applies air pressure to the lower portion of the user's body, and large, continuous, unobstructed windows in the bag, that allow a therapist to observe a patient's gait mechanics in order to provide feedback and to assess issues or progress. Such windows come at a high cost. First, the windows typically must be bent in order for the user to enter or exit the system. Since the flexible window material and its seams can fail if left in the down or bent position for too long, the user or therapist must remember to return the cockpit and the windows to the "up" or in-use position between uses to avoid damage. Second, a rigid, upward pressure opposing cockpit structure is typically included in such systems to adjust the bag top surface height to different user heights. As the pressure on the cockpit structure is primarily upwards, the most efficient support structure would be directly adjacent to the cockpit. Owing to the desire for an unobstructed view for the PT though, existing support structures are typically cantilevered designs or four post arrangements, which require more, higher strength materials to be used, adding not only to material costs, but to shipping costs as well.

Expanding into markets beyond the specialized requirements of PTs, the need exists for a low cost bag/window/cockpit configuration for DAP systems, that is appropriate for independent users, and adequate for PTs, in terms of cost, usability, and visibility.

Differential Air Pressure (DAP) partial unweighting systems have typically comprised an OEM treadmill enclosed in a flexible bag that applies air pressure to the lower portion of the user's body. These systems are commonly large and costly due to the redundancy of structural elements between the treadmill and the airtight enclosure, and due to the high cost of shipping such bulky systems. Such system are also difficult to maintain, as servicing of the enclosed treadmill must be accomplished within the confines of the airtight enclosure or by disassembling the enclosure. In addition, existing systems usually have step-up heights in excess of 8 inches, making it difficult for low functioning users to enter without the use of a separate, auxiliary step. This step-up challenge is further exacerbated by load cells, which are commonly placed under the treadmill to measure user weight for calibration, and to gauge footfalls during gait measurement.

While the present systems are effective in delivering basic unweighing therapy, the need exists for equally functional systems that are smaller, lighter, less costly, easier to maintain, and easier for users to access as well as equipped to meet the requirements of privacy and confidentiality required for patient medical records, including the data and patient electronic health records created, generated, updated before, during or after performing unweighting therapy.

US 2011/120567 A1 discloses a differential air pressure system, comprising: a positive pressure chamber with a seal interface configured to receive a portion of a user's body and form a seal between the user's body and the chamber; a height adjustment assembly attached to the chamber adjacent to the seal interface; and a control panel attached to the height adjustment assembly. The positive pressure chamber comprises a plurality of transparent panels.

US 2011/098615 A1 discloses differential air pressure systems. The air pressure systems comprise a chamber for receiving at least a portion of a user's body. Pressure in the chamber can be changed to adjust force on the user's body. There are described various methods and related structures for changing the shape and/or height of the chamber and various types and configurations of chambers and support structures for chambers.

### SUMMARY OF THE DISCLOSURE

According to the present invention there is provided a differential air pressure exercise system, comprising:
a frame supporting an exercise device and a user control panel;
a latch-able, pressure resisting cockpit assembly coupled to the frame to support the operating pressure of the differential air pressure system;
a DAP unweighting bag coupled to the cockpit assembly, the bag having a plurality of side windows; and
a support frame adapted and configured to slide-ably support the cockpit assembly along a pair of cockpit supports moving the cockpit relative to the exercise device from an in use position at a first height where the DAP unweighting bag is in an unfolded configuration to an egress position at a second height where the DAP unweighting bag is in a folded configuration,
wherein in the folded configuration none of the plurality of side windows is folded.

Additional aspects of the invention are set out in the dependent claims.

There are hereinafter disclosed and illustrated embodiments of a differential air pressure exercise system including a frame supporting an exercise device and a user control panel; a latch-able, pressure resisting cockpit assembly coupled to the frame to support the operating pressure of the differential air pressure system; a support frame adapted and configured to slide-ably support the cockpit assembly relative to the exercise device wherein a pair of supports of the support frame are coupled to the cockpit proximal to and spaced apart from the user control panel.

This and other embodiments can include one or more of the following features. In one aspect, the latch-able, pressure resisting cockpit assembly where latches can be engaged on both sides of the cockpit by actuating only one of several triggering mechanisms positioned about the user. In another aspect, the latch-able pressure resisting cockpit assembly where all latches and trigger mechanisms can be connected by a cable or cables. In a further aspect, the latch-able pressure resisting cockpit assembly where all latches and trigger mechanisms can be connected by a cable or cables and the cable tension and play can be adjusted by in-line, threaded length adjusters. In an alternative aspect, the latch-able pressure resisting cockpit assembly can further include an opening that accepts the user is round and a DAP unweighting bag with a round opening that accepts the user which can be fixed at multiple points to the round cockpit assembly opening.

This and other embodiments can include one or more of the following features. In one aspect, the DAP unweighting bag where all windows of the bag can be interspersed with flexible, folding, pleated sections. In another aspect, the DAP unweighting bag where all pleated sections can be reinforced by horizontal rods that prevent window folding. In a further aspect, the system can further include a DAP unweighting bag where elastic members enforce folding of the DAP unweighting bag in a predetermined, preferred direction and sequence. In an alternative aspect, a DAP unweighting bag where side window heights between pleated sections can be less than the spacing between the cockpit supports and the cockpit user opening. In yet another aspect, a DAP unweighting bag where pleated sections can be attached to cockpit supports in a vertically slide-able manner. In still another aspect, a cockpit support structure that can include a low friction application to prevent binding and wear of the adjacent DAP unweighting bag as it slides up and down.

In general, in one embodiment, a method of performing a differential air pressure therapy includes positioning a differential air pressure bag and cockpit in a folded position permitting ingress of a user to a loading point in the pressure bag; coupling the user to the differential air pressure bag or cockpit; unfolding at least one preferentially folded portion of the differential air pressure bag while raising the differential air pressure bag or cockpit from the folded position; engaging at least one latch to support the cockpit at a user selected height while performing the differential air pressure therapy.

These and other embodiments can include one or more of the following features. In one aspect, the method can further include releasing at least one latch; lowering the differential air pressure bag and cockpit to a folding position along the support frame; and folding the differential air pressure bag at least partially along at least one preferentially folded portion before reaching the folded position. In another aspect, none of a plurality of windows provided on the differential air pressure bag can be folded during the lowering or the folding step. In a further aspect, the method can further include lowering the differential air pressure bag to the folding position without folding any of a plurality of windows provided on the differential air pressure bag.

In general, in one embodiment, a base for a differential air pressure system includes a treadmill base having a pressure sealed portion and a non-pressure sealed portion; a pair of rollers, a treadmill belt coupled to the pair of rollers and at least one load cell adjacent to the treadmill belt, supporting a portion of the treadmill deck, disposed within the pressure sealed portion, a motor and a drive belt coupled to the motor, the belt also positioned for driving one roller of the pair of rollers wherein, the one roller includes a pressure tight seal; a blower within the non-pressure sealed portion positioned so that a blower flow output is sealed to an inlet to the pressure sealed portion of the treadmill base.

This and other embodiments can include one or more of the following features. In one aspect, the base can further include an electronic control system within the non-pressure sealed portion in communication with the treadmill motor and configured for providing a voltage-controlled signal to the blower. In another aspect, the base can further include a user accessible cover over the non-pressure sealed portion containing the blower and a non-user accessible cover over the non-pressure sealed portion containing the non-user-serviceable treadmill motor and electronic control system. In a further aspect, the base can further include a user accessible cover only over the non-pressure sealed portion containing the blower. In an alternative aspect, the base can further include a plug-in outlet for use with the blower, said outlet being positioned in a bulkhead separating two portions of the non-pressure sealed portion. In yet another aspect, the base can further include one or more pressure tight penetrations in a bulkhead of the pressure sealed portion of the treadmill base wherein the size, shape and position of the penetration can be adapted and configured to permit service, maintenance or adjustment of one or more components accessible through the one or more pressure tight penetrations. In still another aspect, the one or more components can include a roller, a bearing, a treadmill deck, a load cell, a gait sensor, a measurement device, an adjustment device, a treadmill belt or other component within the pressure sealed portion of the treadmill deck.

This and other embodiments can include one or more of the following features. In one aspect, the penetration can be accessed while the treadmill is in operation or in use by a user during a DAP routine without adversely impacting a DAP routine being performed using the DAP system. In another aspect, the DAP system can be serviced without breaking a perimeter formed pressure seal about the base of the differential air pressure system. In a further aspect, the pressure tight seal can be a pressure rotating lip seal, a sealed bearing, or a labyrinth seal. In an alternative aspect, the overall step height for a user can be within an ADA guideline for step height. In yet another aspect, the overall height of the upper pressure-sealing surface of the treadmill base can be less than 7 inches or between about 4 inches to about 7 inches in use. In still another aspect, the base can further include a low profile configuration of a load cell and a cushioning element coupled to the treadmill base and in position relative to the treadmill deck.

This and other embodiments can include one or more of the following features. In one aspect, the base can further include a low profile configuration of a load cell and a gait measurement device coupled to the treadmill base and in position relative to the treadmill deck. In another aspect, the base can further include a low profile configuration of a load cell coupled to the treadmill base and in position relative to the treadmill deck. In a further aspect, the base can further include a front pair of low profile measurement devices and a rear pair of low profile measurement devices coupled to the treadmill base and in position relative to the treadmill deck. In an alternative aspect, the measurement devices can be one or more of a cushioning element, a measurement device, a load cell, a gait measurement device, a dampening device or a sensor. In yet another aspect, the base can further include at least one low profile configuration load cell including: a load cell coupled to a portion of the treadmill base; a damper attached to the load cell; and a treadmill deck mount connected to a bottom surface of the treadmill deck and to the damper. In still another aspect, the damper can be made from rubber or a shock absorbing material.

This and other embodiments can include one or more of the following features. In one aspect, the damper can be replaced with aluminum, a metal or a hard non- or low-shock absorbing material. In another aspect, the treadmill deck top can be about the same height from the treadmill base as an uppermost portion of a treadmill deck frame to damper attachment point. In a further aspect, the base can further include a front pair of low profile cushioned load cells and a rear pair of low profile hard or non-cushioned load cells. In an alternative aspect, the load cell and damper configuration can be adapted and configured to improve load cell signal to noise output. In yet another aspect, the load cell and damper configuration can be adapted and configured to specifically improve load cell signal to noise output for a gait measurement device or process used in conjunction with a therapy performed using a system having the base. In still another aspect, the base can further include an airtight, externally accessible tracking angle adjustment component positioned for adjustment for one or both of the front roller or the rear roller.

This and other embodiments can include one or more of the following features. In one aspect, the base can include a user-accessibly service bay or cover for access to a user-replaceable blower. In another aspect, the base can further include one or more cleanout doors within one or more bulkheads of the pressure volume side of the treadmill base. In a further aspect, the one or more cleanout doors can be adapted or configured for positive pressure sealing against a bulkhead of the base. In an alternative aspect, the one or more cleanout doors can be coupled to a treadmill bulkhead by a screw, a fastener, via a sliding arrangement, or via a hinged arrangement. In yet another aspect, the blower can be activated with one or more of the clean out doors opened and operated at an appropriate level to expel debris from within the treadmill pressure volume. In still another aspect, a portion of the treadmill base can support one side of each of a four bar bag clamping system.

This and other embodiments can include one or more of the following features. In one aspect, a portion of the entire perimeter of the treadmill base about the treadmill tread can be adapted and configured for use to secure a lower portion of a DAP bag to the treadmill base. In another aspect, the base can have a camera attached to, on or within a portion of the treadmill deck. In a further aspect, the camera can be within the pressure volume side of the treadmill base. In an alternative aspect, the camera can be an embedded deck gait camera or a camera with spring loaded recess or a camera having a self-wiping feature. In yet another aspect, the base can further include a housing about the camera to shield the camera from damage during ingress or egress to the treadmill deck. In another aspect, the base can include lighting to improve video and still image capture. In another aspect, the interior of the pressure bag can be selectively reflective to enhance the distribution of light around the user's lower extremities. In still another aspect, the base can further include a current limiting circuit, an automatic current inrush and RMS limiting circuit or a circuit adapted and configured to reduce/eliminate circuit breaker overload.

This and other embodiments can include one or more of the following features. In one aspect, the circuit or circuits can be external to DAP system, external to the treadmill or DAP system electronics and part of the DAP system, or integrated into the DAP system electronics. In another aspect, the circuit can be electrically connected to both of and is between a power supply for a DAP system and the DAP system electronics.

In some embodiments, a method of unweighting system treatment management is provided. The method comprises providing a user's information, the information comprising at least two of the following characteristics: age, weight, gender, location, desired result, current medical condition, height, lift access requirements, therapist access requirements, therapy history, past workout information, and user type, wherein user type comprises at least one of an athlete, a casual user, a rehabilitation user, and a chronic user; analyzing, using a processor, the user's information based, at least in part, on aggregate information in a database comprising other users' characteristics and associated past workout session data including duration, speed, incline, and unweighting level used during workouts; and generating, using a processor, a suggested workout routine including duration, speed, incline, and unweighting level to be used during a workout based on the comparing of the user's information to the other users' information.

The analyzing can comprise comprising matching user characteristics to other users' characteristics. Providing the user's information can comprise prioritizing at least one of the characteristics. The matching step can further comprise a.) determining whether at least a portion of the user's characteristics matches at least a subset of at least one user's of the other users characteristics; b.) omitting a lowest priority characteristic from the at least a portion of the user's characteristics to create a prioritized user information set if step a produces no match using the at least a portion of the user's characteristics; c.) determining whether the prioritized user information set matches at least a subset of at least one user's of the other users characteristics; and d.) repeating steps b and c until the prioritized user information matches at least a subset of the at least one user's characteristics. In some embodiments, analyzing comprises identifying at least one other user sharing characteristics with the user and having a favorable workout outcome. The favorable workout outcome can comprise at least one of user satisfaction, obtaining the desired result and progress towards the desired result. Current medical condition can comprise at least one of original diagnosis, dates of injuries, date or type of illness, date or type of interventions, an indication of rehabilitation progress, and a previous treatment and date of treatment. In some embodiments, therapy history comprises prescribed therapy history, actual therapy history, therapy history on an unweighting system, therapy history using other equipment. The method can further comprise generating a recommended therapy or workout based on a medical guideline. In some embodiments, providing the user's information occurs at a same appointment or workout session as the analyzing and generating steps. In some embodiments, providing the user's information occurs at an earlier appointment or workout session as the analyzing and generating steps. Providing the user's information can comprise creating a user profile or presenting a unique identifier. The method can further comprise sending the suggested workout routine to a medical professional or insurance provider for approval. The method can further comprise modifying, by the medical professional or insurance provider, the suggested workout routine. In some embodiments, the generating step comprising generating more than one suggested workout routines. The method can further comprise transferring funds from the user to a treatment facility or provider. The method can further comprise providing a cost for the suggested workout routine. Differential pricing can be used to determine the cost. The method can further comprise providing a list of unweighting systems appropriate for the suggested workout routine. The method can further comprise providing available appointment times for suitable unweighting systems. The method can further comprise scheduling an appointment. In some embodiments, generating a suggested workout routine comprises generating workout routine on equipment other than an unweighting system. The method can further comprise uploading the suggested workout routine to the database. The method can further comprise performing the suggested workout and uploading performance data to the database. In some embodiments, the method comprises an iterative process, generating periodic updates for the user or a medical professional. The method can further comprise generating subsequent suggested workout routines based on user progress.

In some embodiments, a system for unweighting usage management is provided. The system comprises a storage database comprising past user information and related workout data; a user interface allowing a present user to access information from or add information to the storage database, the information comprising at least two of the following characteristics: age, weight, gender, location, desired result, current medical condition, height, lift access requirements, therapist access requirements, therapy history, past workout information, and user type, wherein user type comprises at least one of an athlete, a casual user, a rehabilitation user, and a chronic user; a processor comprising instructions for comparing present user information and past user information and related workout data and generating a suggested workout routine including suggested duration, speed, incline, and unweighting to be used during a workout based on the comparing of the present user information to the past user information and related workout data.

The system can be configured to connect to one or more unweighting systems. The storage database can comprise a centralized or cloud based database. In some embodiments, the user interface can be accessed through a network interface such as an internet or LAN, a local terminal, laptop, tablet, computer, or smart phone. The system can comprise instructions for sending the suggested workout routine to a particular unweighting system, a medical professional, or an insurance provider.

In some embodiments, a method of finding an available and appropriate unweighting system site is provided. The method comprises identifying a user; providing a user location; providing one or more user system characteristics to identify an appropriate unweighting system, the user system characteristics comprising at least one of a user type, the user type comprising at least one of an athlete, a casual user, a rehabilitation user, and a chronic user, a medical condition, a desired result, and an unweighting system access need; matching, using a processor, the user system characteristics with one or more appropriate unweighting systems based on unweighting system features comprising type of unweighting system, unweighting provided, access provided, and analysis capability; and generating, using a processor, one or more suggested unweighting system sites based on compatibility of the unweighting system sites with the user location and the one or more appropriate unweighting systems.

In some embodiments, access needs comprises at least one of a need for lift assistance and need for a physical therapist on site. In some embodiments, determining one or more appropriate unweighting systems comprises determining one or more appropriate unweighting systems having the most unweighting system features compatible with the user system characteristics. Compatibility of an unweighting system site with a user location can be based on proximity of the unweighting system site to the user location. The method can further comprise providing additional user requirements, the additional user requirements comprising desired time slot, desired day of the week, and insurance requirements. In some embodiments, generating one or more suggested unweighting system sites is based on availability of the additional user requirements at the one or more appropriate unweighting systems and with proximity of the one or more appropriate unweighting systems to the user location. The generating step can comprise providing a list of suggested unweighting system sites sorted with the site having features matching the highest number of criteria including the additional user requirements, the user location, and the one or more appropriate unweighting systems higher than sites having features matching a lower number of criteria including the additional user requirements, the user location, and the one or more appropriate unweighting systems. The method can further comprise prioritizing criteria including the additional user requirements, the user location, and the one or more appropriate unweighting systems. In some embodiments, a criterion related to the one or more appropriate unweighting systems is a highest prioritized criterion. The generating can comprise a) determining whether at least a portion of criteria including the additional user requirements, user location, and the one or more appropriate unweighting systems match at least a subset of features of an unweighting system site; b) omitting a lowest priority criteria from the at least a portion of criteria including the additional user requirements, the user location, and the one or more appropriate unweighting systems to create a prioritized criteria set if there is no match using the at least a portion of the criteria; c) determining whether the prioritized criteria set matches at least a subset of features of an unweighting system site; and d) repeating steps b and c until the prioritized criteria set matches at least a subset of features of an unweighting system site. Providing user system characteristics can comprise providing at least one of a desired result or medical condition. The matching step can further comprise comparing the at least one of a desired result or medical condition with past workout data of other users' having a same desired result or medical condition and determining one or more suggested workouts based on the comparing. The matching step can further comprise determining unweighting system sites capable of providing the one or more suggested workouts. In some embodiments, the suitable unweighting system sites change over time as the user progresses towards a goal or in recovery. The method can further comprise scheduling an appointment for the user at a particular unweighting system site. The method can further comprise creating a workout protocol or modifying pre-programmed workout protocols and attaching the protocol to the appointment. Attaching the protocol to the appointment can override any system-generated protocol. The method can further comprise providing the user's information, the information comprising at least one of the following characteristics: age, weight, gender, location, desired result, current medical condition, height, lift access requirements, therapist access requirements, therapy history, past workout information, and user type, wherein user type comprises at least one of an athlete, a casual user, a rehabilitation user, and a chronic user; analyzing the user's information based, at least in part, on aggregate information in a database comprising other users' information and associated past workout session data including duration, speed, incline, and unweighting level used during workouts; and generating a suggested workout routine including duration, speed, incline, and unweighting level to be used during a workout based on the comparing of the user's information to the other users' information. The method can further comprise allowing payment for a future appointment.

In some embodiments, a system for finding an available and appropriate unweighting system site is provided. The system comprises a user interface for providing a user location and one or more user system criteria to identify an appropriate unweighting system, the user system criteria comprising at least one of a user type, the user type comprising at least one of an athlete, a casual user, a rehabilitation user, and a chronic user, a medical condition, a desired result, and an unweighting system access need; a processor comprising instructions for matching the user system criteria with one or more appropriate unweighting systems based on unweighting system features comprising type of unweighting system, unweighting provided, access provided, and analysis capability, and generating one or more suggested unweighting system sites based on compatibility of the unweighting system sites with the user location and the one or more appropriate unweighting systems. The system can comprise a database of aggregate user information and related workout data. The system can be connected to one or more unweighting systems. In some embodiments, an access need comprises at least one of a need for lift assistance and need for a physical therapist on site. In some embodiments, the user interface is configured for providing additional user requirements, the additional user requirements comprising desired time slot, desired day of the week, and insurance requirements. The processor can comprise instructions to match the one or more appropriate unweighting systems with the additional user requirements.

In some embodiments, a method of using an unweighting system is provided. The method comprises downloading a workout routine to an unweighting system, the workout routine comprising a desired duration, speed, incline, and level of unweighting; identifying a user to the unweighting system; performing the workout routine; and recording performance data during the workout routine in the unweighting system. The method can further comprise connecting the unweighting system to a network. The method can further comprise uploading the performance data to the network. The method can further comprise providing user or therapist feedback to the unweighting system. User feedback can comprise feedback regarding at least one of satisfaction with the workout routine, overall mood and level of pain. Therapist feedback can comprise at least one of observations of the workout routine and rating of user progress. In some embodiments, identifying the user comprises providing user information or providing an identifier configured to access user information through the unweighting system. An appropriate workout routine can be selected based on user information. In some embodiments, the appropriate workout routine is selected based on reviewing past workout routines and performance data of other users sharing one or more user characteristics. The method can further comprise adjusting the downloaded workout routine. The method can further comprise sending performance data to at least one of a doctor, and insurance provider, and a patient file. The method can further comprise sending at least one of performance data, user feedback, and therapist feedback to an aggregate user database. In some embodiments, the method further comprises adjusting future unweighting workouts based on the performance data, user feedback, or technician feedback. The method can further comprise assessing user performance after a workout session to determine whether to modify workout parameters or scheduling.

In some embodiments, an unweighting usage system is provided. The system comprises an unweighting system; a user interface configured to allow identification of a user to the system; and a processor comprising instructions for downloading a workout routine to the unweighting system, the workout routine comprising a desired duration, speed, incline, and level of unweighting, and recording performance data from the workout routine in the unweighting system.

In some embodiments, the system is connected to a network. The user interface can be configured to allow input of user or therapist feedback. User feedback can comprise feedback regarding at least one of satisfaction with the workout routine, overall mood and level of pain. Therapist feedback can comprise at least one of observations of the workout routine and rating of user progress. The system can be connected to a database comprising aggregate user information and related workout data.

In some embodiments, a category 1 DAP is provided. The system comprises a positive pressure chamber with a seal interface configured to receive a portion of a user's body and form a seal between the user's body and the chamber, wherein the system is appropriate for use by users requiring no assistance to use the system.

In some embodiments, a category 2 DAP system is provided. The system comprises a positive pressure chamber with a seal interface configured to receive a portion of a user's body and form a seal between the user's body and the chamber, wherein the system is appropriate for use by users requiring moderate assistance to use the system.

In some embodiments, a category 3 DAP system is provided. The system comprises a positive pressure chamber with a seal interface configured to receive a portion of a user's body and form a seal between the user's body and the chamber, wherein the system is appropriate for use by users requiring full assistance to use the system.

In some embodiments, a method of finding an available and appropriate DAP system site is provided. The method comprises identifying a user; providing a user category, the user categories comprising category 1, comprising users requiring no assistance, category 2, comprising users requiring moderate assistance, and category 3, comprising users requiring full assistance; and matching, using a processor, the user to one of a plurality of categories of DAP systems based on appropriateness of the DAP category to the user category.

In some embodiments, a method of finding an available and appropriate DAP system site is provided. The method comprises identifying a user; providing a user location; providing a user category, the user categories comprising category 1, comprising users requiring no assistance, category 2, comprising users requiring moderate assistance, category 3, comprising users requiring full assistance; matching the user to an appropriate DAP system category comprising one of a plurality of categories of DAP systems based on appropriateness of the DAP system category to the user category; and generating, using a processor, one or more suggested DAP system sites based on proximity of a DAP site to the user location and availability of the appropriate DAP system category at a DAP site.

In some embodiments, providing a user category further comprises providing at least one of a user type, the user type comprising at least one of an athlete, a casual user, a rehabilitation user, and a chronic user, a type of medical condition, a desired result, and a DAP system access need, the DAP system access needs comprising a need for lift assistance and a need for a physical therapist; and matching, using a processor, the at least one of the user type, the type of medical condition, the desired result, and the DAP system access need to a user category. The method can further comprise matching, using a processor, the at least one of the user type, the type of medical condition, the desired result, and the DAP system access need to a user category. The matching step can comprise matching the at least one of the user type, the type of medical condition, the desired result, and the DAP system access need to a DAP system category.

In some embodiments, a method of finding an available and appropriate DAP system site is provided. The method comprises identifying a user; providing a user location; providing a DAP system category, the DAP system categories comprising category 1, comprising systems providing no assistance, category 2, comprising systems providing moderate assistance, category 3, comprising systems providing full assistance; and generating, using a processor, one or more suggested DAP system sites based on proximity of a DAP site to the user location and availability of the appropriate DAP system category at a DAP site.

In general, in one embodiment, an integrated unweighted gait training system, includes an unweighting system comprising a computer controller, a gait measurement system in communication with the controller, and a display in communication with the computer controller adapted and configured to provide real-time feedback to a user of the integrated unweighting gait training system.

This and other embodiments can include one or more of the following features. In one aspect, the unweighting system can be a differential air pressure unweighting system. In another aspect, the unweighting system can be a non-DAP unweighting system. In a further aspect, the non-DAP unweighting system can be a support frame type non-DAP unweighting system. In an alternative aspect, the non-DAP unweighting system can be a curved arch type non-DAP unweighting system. In yet another aspect, the non-DAP unweighting system can be an unweighting arch type non-DAP unweighting system. In still another aspect, the non-DAP unweighting system can be a monocolumn type non-DAP unweighing system. In one aspect, the non-DAP unweighting system can be a cantilevered type non-DAP unweighting system. In another aspect, the gait measurement system can further include an enclosure, a pair of sensors supported by the enclosure and positioned such that when the enclosure is coupled to a treadmill of the integrated unweighting system a portion of the tread is within the detectable range of the pair of sensors, and a processor in communication with the pair of sensors and having computer readable instructions to receive and process an output from the pair of sensors and to perform calculations related to obtaining gait parameters based on the input from the sensors. In a further aspect, the processor can perform calculations to obtain tread belt speed, time of foot impact and left/right foot indication.

In general, in one embodiment, a self-contained gait feedback device for detecting motion of a user on a treadmill includes an enclosure, a pair of sensors supported by the enclosure and positioned such that when the housing is coupled to the treadmill a portion of the tread is within the detectable range of the pair of sensors, a processor supported by the enclosure and in communication with the pair of sensors and having computer readable instructions to receive and process an output from the pair of sensors, and a display in communication with the processor supported by the disclosure.

This and other embodiments can include one or more of the following features. In one aspect, the self-contained feedback device can include the computer readable instructions to receive and process an output from the sensors and can further include performing calculations related to obtaining one of more gait parameters based in part on the output from the pair of sensors. In another aspect, the self-contained feedback device can include the computer readable instructions to receive and process an output from the sensors and can further include outputting the one of more gait parameters to the display. In a further aspect, the self-contained feedback device can include the display and can further include a processor having computer readable instructions for receiving and performing calculations related to obtaining one of more gait parameters based in part on the output from the pair of sensors. In an alternative aspect, the self-contained feedback device can include the computer readable instructions of the processor in the display and can further include outputting the one of more gait parameters on the display. In yet another aspect, the processor can be adapted and configured to provide clock signal synchronized sensor output data from the pair of sensors. In still another aspect, the processor can be adapted and configured to provide clock signal synchronized sensor output data from the pair of sensors. In one aspect, the sensors can be IR sensors, optical mouse sensors, laser sensors, proximity sensors, or light sensors. In another aspect, the display can be a PC, a tablet or a smart phone. In a further aspect, communication with the display can be wired or wirelessly. In an alternative aspect, the display can be in communication with the processor supported by the enclosure. In yet another aspect, the self-contained feedback device can further include an unweighting system positioned to provide controlled unweighting of a user of the treadmill, the unweighting system can have a computer controller in communication with the processor. In still another aspect, the display can be adapted and configured to provide real-time feedback to a user of the unweighting system. In one aspect, the unweighting system can be a differential air pressure unweighting system. In another aspect, the unweighting system can be a non-DAP unweighting system. In a further aspect, the non-DAP unweighting system can be a support frame type non-DAP unweighting system. In an alternative aspect, the non-DAP unweighting system can be a curved arch type non-DAP unweighting system. In yet another aspect, the non-DAP unweighting system can be an unweighting arch type non-DAP unweighting system. In still another aspect, the non-DAP unweighting system can be a monocolumn type non-DAP unweighing system. In still another aspect, the non-DAP unweighting system can be a cantilevered type non-DAP unweighting system.

In general, in one embodiment, an integrated differential air pressure assisted gait training system includes a differential air pressure system having a computer controller, at least one gait measurement or indication system in communication with the computer controller, and a computer readable database stored within or accessible to the computer controller comprising collected DAP system data from the differential air pressure system and gait system data from the at least one gait measurement or indication system

This and other embodiments can include one or more of the following features. In one aspect, the DAP system data can include one or more of pressure setting and control, calibration data, system type, auxiliary systems, exercise system controls. In another aspect, the gait system data can include video, user worn sensor or equipment sensor. In a further aspect, the computer readable database can further include synthesized data from at least one of unweighted system data or gait system data. In an alternative aspect, the synthesized data can be triggered from another data stream. In still another aspect, the synthesized data can be processed data by manipulating one or more data streams. In one aspect, the synthesized data can be calculated data by comparing or relating two or more data streams. In another aspect, the synthesized data can include using algorithms to produce outcomes of one or more data streams. In a further aspect, can further include a display in communication with the computer controller adapted and can be configured to provide real-time feedback to a user of the differential air pressure system. In an alternative aspect, the system can further include video input in database. In yet another aspect, the video data stored can be collected based on a trigger from another component or device of the integrated system. In still another aspect, the database can be accessible to computer controller or accessible to the controller via wired or wireless communication. In one aspect, the system can include at least one gait measurement or indication system and can further include an enclosure, a pair of sensors supported by the enclosure and positioned such that when the enclosure is coupled to a treadmill of the integrated unweighting system a portion of the tread can be within the detectable range of the pair of sensors, and a processor supported by the enclosure and in communication with the pair of sensors and having computer readable instructions to receive and process an output from the pair of sensors and to perform calculations related to obtaining gait parameters based on the input from the sensors.

In general, in one embodiment, a method of training an individual to improve or alter walking or running mechanics by unweighting includes preparing the individual for training in a differential air pressure environment provided by a differential air pressure system, performing a training routine with the individual to improve or alter walking or running mechanics while the user is experiencing unweighting by the differential air pressure system, simultaneously measuring one or more of a user gait parameter or a user biomechanical parameter during the performing step, and collecting the one or more measured user gait parameter or measured user biomechanical parameter under instructions from a controller of the differential air pressure system.

In general, in one embodiment, a method of training an individual to improve or alter walking or running mechanics by unweighting includes preparing the individual for training in a non-differential air pressure environment provided by a non-differential air pressure system, performing a training routine with the individual to improve or alter walking or running mechanics while the user is experiencing unweighting by the non-differential air pressure system, simultaneously measuring one or more of a user gait parameter or a user biomechanical parameter during the performing step, and collecting the one or more measured user gait parameter or measured user biomechanical parameter under instructions from a controller of the non-differential air pressure system.

This and other embodiments can include one or more of the following features. In one aspect, the preparing step can further include the user accessing the differential air pressure environment and initiating the training without assistance. In another aspect, the preparing step can further include the user accessing the differential air pressure environment without assistance and initiating or performing the training with assistance. In a further aspect, the assistance during performing the training can be provided by a person. In an alternative aspect, the assistance during performing the training can be provided automatically by the differential air pressure system. In yet another aspect, the collecting step can further include collecting the individual's heart rate and a treadmill incline measurement. In still another aspect, the collecting step can further include collecting a signal from a heart rate monitor worn by the individual. In one aspect, the collecting step can further include collecting data from a gyroscopic sensor or an accelerometer sensor worn by the patient. In another aspect, the one or more parameters of the user's gait or biomechanics can be one or more of: a stride length, a ground reaction force, a lateral movement of a knee, an angle of a knee, an angle of an ankle, a strike pattern of a forefoot, a strike pattern of a heel, a muscle activation pattern, and a movement symmetry.

In general, in one embodiment, a method of providing integrated differential air pressure assisted gait training includes unweighting the user in an integrated differential air pressure system, performing a therapy routine with the user, collecting under control of the integrated differential air pressure system controller output data from a plurality of components of the integrated differential air pressure system during the unweighting step and the performing step, and recommending a user action for gait correction based on one or more of the output data from the collecting step.

This and other embodiments can include one or more of the following features. In one aspect, the output data can include synthesized data. In another aspect, the collecting step can further include a continuous output data stream, a nearly continuous output data stream, a segmented output data stream, or a synthesized output data stream from the integrated differential air pressure system. In a further aspect, the method can further include storing the output data in a database. In an alternative aspect, the database can contain DAP and gait system data corresponding to a user's progress through a continuum of care. In yet another aspect, the continuum of care can range from immobile, to partially mobile, to fully mobile. In still another aspect, the method can further include comparing the data to data from a device in another segment of the continuum of care. In one aspect, the data from a device from another segment can be gait data collected from a leg worn actuator. In another aspect, the data can be gait data collected from full mobility measurement system. In a further aspect, the recommending step can permit connection of alteration of a parameter of the differential air pressure system or user gait change to real time feedback.

In general, in one embodiment, a self-contained biometric sensor system for detecting motion of a user on a treadmill including an enclosure, a pair of sensors supported by the enclosure and positioned such that when the housing is coupled to a treadmill a portion of the tread is within the detectable range of the pair of sensors, and a processor in communication with the pair of sensors and having computer readable instructions to receive and process an output from the pair of sensors and to perform calculations related to obtaining gait parameters based on the input from the sensors.

This and other embodiments can include one or more of the following features. In one aspect, the processor can be adapted and configured to provide clock signal synchronized sensor output data from the pair of sensors. In another aspect, the sensors can be IR sensors, optical mouse sensors, laser sensors, proximity sensors, or light sensors. In a further aspect, the self-contained biometric sensor system can further include a display in communication with the processor. In an alternative aspect, the display can be a PC, a tablet or a smart phone. In yet another aspect, the display can further include a computer readable code adapted and configured to determine one or more gait parameters based on the processor output. In still another aspect, communication with the display can be wired or wirelessly. In one aspect, the self-contained biometric sensor system can further include an accelerometer attached to the treadmill and configured to provide an output to the processor. In another aspect, the self-contained biometric sensor system can further include an acoustic sensor positioned to detect a footfall sound and configured to provide an output to the processor. In a further aspect, the self-contained biometric sensor system can include the processor computer readable instructions for providing a real-time measurement of a plurality of gait parameters for a user on the treadmill. In an alternative aspect, the plurality of gait parameters of a user on a treadmill can be one or more of speed, cadence, left/right stride length, left/right stride time, foot placement phase asymmetry and stride time jitter.

This and other embodiments can include one or more of the following features. In one aspect, gait measurement or parameters can be provided to the system from a self-contained biometric sensor system that provides accurate, real-time measurement of a plurality of gait parameters of a user on a treadmill within the range of the sensors of the system.

In general, in one embodiment, a system for providing differential air pressure assisted gait training includes a differential air pressure system comprising a computer controller, a gait measurement system in communication with the controller, and a display in communication with the computer controller adapted and configured to provide real-time feedback to a user of the differential air pressure system.

In another aspect, the gait measurement system can be a self-contained biometric sensor system having a computer controller adapted and configured to collect gait data. In a further aspect, there are computer readable instructions in the computer controller of the self-contained biometric sensor system which provides drawing edits on a display. In an alternative aspect, the computer readable instructions in the computer controller which provides for visual indicia on top of a video output. In yet another aspect, the display can be adapted and configured to implement user provided drawings using a touch screen. In one aspect, the display or a touch screen in communication with the system controller can be within reach of the user. In another aspect, the real time feedback to the user of an integrated gait training system can be provided in a representation including a graphic feedback as to the user's gait symmetry. In a further aspect, the real time feedback to the user can be a display of synthesized data. In an alternative aspect, the synthesized data can be triggered from another data stream. In yet another aspect, the synthesized data can be processed data by manipulating one or more data streams. In still another aspect, the synthesized data can be calculated data by comparing or relating two or more data streams. In one aspect, the synthesized data can further include using algorithms to produce outcomes of one or more data streams.

In another aspect, during a user's operation of an integrated gait training system a display output can be changed by a trigger from a sensor or component in a gait measurement system. In a further aspect, the display output can be changed to provide an indication of the user's unweighted assisted force asymmetry data. In an alternative aspect, the display output can be changed to provide an indication of the user's unweighted cadence asymmetry data. In yet another aspect, the display output can be changed to provide an indication of the user's unweighted upper body phase coordination data.

In still another aspect, the display output can be changed. In one aspect, the real time feedback can include an arrow oriented to indicate to the user an indication of a detected force asymmetry. In a further aspect, the real time feedback can include an arrow oriented to indicate to the user an indication of a detected cadence asymmetry. In an alternative aspect, the real time feedback can further include an arrow oriented to indicate to the user an indication of unweighted assisted force asymmetry data.

In yet another aspect, the gait measurement system can further include a camera, a ground force sensor, an inertial sensor on the user's leg, and an inertial sensor on the user's hips.

In still another aspect, the gait measurement system can further include an EEMG sensor and an inertial sensor. In one aspect, the gait measurement system can further include a user sensor In another aspect, the user sensor can be on or implanted in a user. In a further aspect, the user sensor can be an instrumented or a marked article worn by the user. In an alternative aspect, the user sensor can be a prosthesis, an exoskeleton, an active EEM, a passive EEM, a biofeedback device, an instrumented or marked pair of shoes, an instrumented or marked pair of pants, an instrumented or marked shirt, an instrumented or marked article worn by the user. In yet another aspect, an equipment sensor can further include a belt sensor, a force sensor, a feet tracking sensor, or a self-contained biometric sensor adapted and configured to obtain gait parameters. In still another aspect, the gait measurement system can further include a user sensor and an equipment sensor.

In one aspect, the gait measurement system can further include a video camera. In another aspect, the gait measurement system can include one or more of an instrumented treadmill, a biological sensor for muscle activity, and a video system for monitoring and analyzing gait mechanics.

In a further aspect, the system can further include an output device for communication to a user of an integrated unweighting training system that can be one or more of a visual output device, an audible output device or a tactile device.

In an alternative aspect, the gait measurement system can provide a user's left and right heel strike data and a user's hip rotation accelerometer data to the computer controller.

In yet another aspect, an output of the computer controller sent to the display can provide an indication of unweighting upper body phase coordination data. In still another aspect, the gait measurement system can provide a user's left and right load cell contact time data and the matching belt speed data to the computer controller. In one aspect, an output of the computer controller sent to the display can provide an indication of unweighting cadence asymmetry data. In another aspect, a user's left and right load cell force data can be matched with a clock signal data in the computer controller. In a further aspect, an output of the computer controller sent to the display can provide an indication of unweighted assisted force asymmetry data. In an alternative aspect, the differential air pressure system can include a category 1 system, a category 2 system, or a category 3 system. In yet another aspect, the gait measurement system can be adapted and configured to monitor and provide data related to user force asymmetry, user cadence asymmetry or user upper body phase coordination. In one aspect, processing can include applying a patient specific factor, a calibration factor or a metric associated with the user to a portion of the data stream. In another aspect, the collected data can include left and right load cell force data matched with a clock signal to provide an indication of unweighted assisted force asymmetry data.

In a further aspect, the unweighted assisted force asymmetry data can be provided to the display or a feedback indicator. In an alternative aspect, the display output can be based on or representing a portion of the limbs of the user within the differential air pressure system. In yet another aspect, the display output can further include markings to indicate desired gait motion. In still another aspect, the display output can further include a real time overlay. In one aspect, the display output can be triggered by an equipment sensor or a sensor worn on the user.

In another aspect, the display output can be a triggered limited time duration video. This and other embodiments can include one or more of the following features. In one aspect, feedback provided to a user can further include one or a variety of types of biofeedback providing in conjunction with the integrated gait therapy system. In another aspect, the biofeedback can be an audible feedback signal triggered to when a user is to perform a move.

In a further aspect, the biofeedback can be an electronic stimulation sequence that starts a muscle firing sequence in the user. In an alternative aspect, the biofeedback can be a visual cue and an audible sensory stimulator triggered in synchrony with the therapy performed by the integrated unweighting and gait training system. In yet another aspect, biofeedback can include the stimulation of designated and associated action groups to help with training of a targeting muscle group. In still another aspect, providing biofeedback can include a step of causing electronic stimulation controlling one or more muscle groups as well as mechanical apparatuses that work to augment the function of one or more muscle groups the stimulation. In one aspect, the targeted stimulation area can be a muscle group. In another aspect, the targeted muscle group can be a tendon group or area. In a further aspect, while raising a leg activating a vibrator acting on a flexor and associated tendons in the lower hamstring area of the leg. In an alternative aspect, the biofeedback can include providing on or more sensory stimulators triggered in synchrony with the therapy. In yet another aspect, the sensory stimulator can provide an electrical stimulation, a vibration stimulation or another tactile stimulation. In still another aspect, the therapy can include feedback for force, cadence or phase coordination. Wherein the therapy includes training for desired cadence, training cadence or footfall pattern.

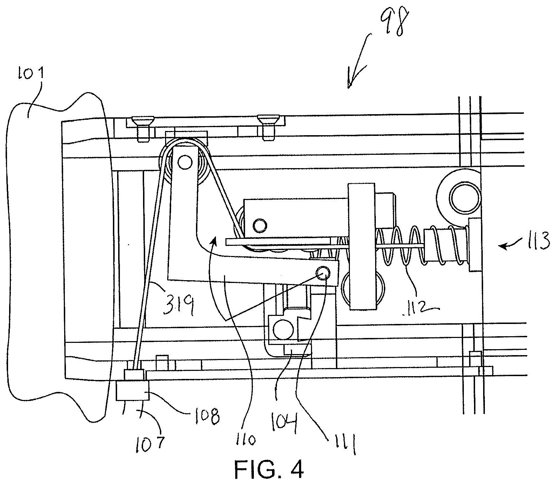

In general, in one embodiment, there is a patient worn data sensor, such as for example a shoe based sensor system for collecting and storing or transmitting data appropriate to the type of sensor to the integrated unweighted gait training system In one aspect, the integrated unweighting gait system receives the patient worn sensor data and integrates the patient worn sensor data from or collected by the patient worn sensor into a feedback loop to unweight a patient to achieve a desired gait. Thereafter, optionally, is the step of capturing additional patient worn sensor data. Thereafter the step of providing a biofeedback signal to the user based upon patient worn sensor inputs is performed when the user is using the patient worn sensor in an environment outside of the integrated unweighting gait training system. Thereafter, in some embodiments, there is a step of during an additional unweighted training session the patient worn sensor data from an environment outside of the integrated unweighting gait training system is used as part of the data in a subsequent unweighted gait therapy treatment session. In one specific exemplary aspect the patient worn sensor is a shoe sensor. In other exemplary embodiments, the patient worn sensor is any of the patient worn sensors described herein or as is appropriate for any of those listed in FIGs. 4, 5A, 5B, and 17, for example.

This and other embodiments can include one or more of the following features. In one aspect, the feedback loop can further include providing biomechanics feedback to the user for biomechanics modification.

In still other variations to an integrated gait training system, the gait measurement or parameters are provided to a controller or processor the integrated gait training system from a self-contained biometric sensor system that provides accurate, real-time measurement of a plurality of gait parameters of a user on a treadmill within the range of the sensors of the system. In one aspect, the plurality of gait parameters of a user on a treadmill are: speed, cadence, Left/Right Stride Length, and Left/Right Stride Time. In still other aspects, the plurality of gait parameters of a user on a treadmill further comprising foot placement phase asymmetry and stride time jitter.

In still another aspect there is provided a method of determining tread belt speed using an embodiment of the self-contained biometric sensor system described herein. In one specific embodiment, the sensors of the self-contained biometric sensor system are positioned over the treadmill belt so that reflectivity of the belt surface under the sensor(s) can be measured. In one specific embodiment, the sensors are an infrared emitter/detector pair (sensor). Next, applying a strip of reflective material of a precise, known length to the treadmill belt. The applying step is performed so that reflectivity of the belt surface changes dramatically while the strip is under the sensor. The type of strip and placement will vary depending upon the specific sensor type and placement on the treadmill. Next, using sensor output signals in conjunction with microprocessor clock timestamp a period of high reflectivity is used to determine the treadmill speed. In one example, if a one-foot strip of reflective material takes one second to pass under the sensor, the speed of the tread belt is 1 foot/second, or approximately 0.68 miles per hour. In further embodiments configured for higher treadmill speeds, once the system has been calibrated to the known length marker, front to front or rear to rear edge detection can also be used for greater accuracy for a given sampling rate. The method may further include input from a foot fall or foot impact sensor such as an accelerometer, load cell or acoustic sensor.

This and other embodiments can include one or more of the following features.

In one aspect, the operations of the integrated system during a user therapy session can include at least one user action recommendation or system control function related to using synthesized data.

In another aspect, the at least one action related to control using synthesized data can include the use of unweighting system data or gait system data triggered from another data stream.

In a further aspect, the at least one action related to control using synthesized data can include the use of processed unweighting system data or gait system data by manipulating one or more data streams.

In an alternative aspect, the at least one action related to control using synthesized data can include the use of calculated unweighting system data or gait system data produced by comparing or relating two or more data streams.

In yet another aspect, the at least one action related to control using synthesized data can include the use of algorithms to produce outcomes of one or more unweighting system data streams or gait system data streams

In general, in one embodiment, a method of providing integrated unweighting assisted gait training for a user having impaired walking biomechanics includes unweighting the user in an appropriate unweighting system, performing a therapy routine with the user, collecting data under control of a controller or a computer processor of the appropriate unweighting system from a plurality of components of the integrated differential air pressure system during the unweighting step and the performing step, and analyzing one or more of the output data from the collecting step to determine whether to adapt the performing step. Thereafter, determining to adapt the performing step wherein an adaptive step or an adjustment step comes from a therapist, from the system or as part of a data controlled therapy. In still other aspects, the step of analyzing is done by person or by the controller of an unweighting system. Still further, after the analyzing step, optionally, there follows a step of continuing the performing step without adapting the therapy routine. Still further, after the analyzing step there follows a step of continuing the performing step after adapting the therapy routine. Other optional steps include: providing the user with feedback regarding how the user's impaired walking biomechanics are changing; repeating the unweighting, performing, collecting and analyzing steps to progressively re-train the user for walking or running with proper biomechanics; or repeating the unweighting, performing, collecting and analyzing steps to progressively proceed from a partial unweighting environment during the unweighting step to a full weight bearing environment during the unweighting step.

In one aspect, the unweighting step can be adapted and configured to provide a partial unweighting environment specific to the rehabilitation of a patient diagnosed with a disease or an injury. In another aspect, the unweighting environment can be adjusted to achieve a symmetrical walking pattern for the patient. In a further aspect, the unweighted environment can be adjusted by the user. In an alternative aspect, the unweighted environment can be adjusted by the differential air pressure system according to a predetermined protocol. In yet another aspect, the collecting step can be initiated by detecting a heel strike and triggering a video stream capture.

In still another aspect, the video capture can run for a set time limit. In one aspect, a loop recorder can be used in conjunction with a high definition video stream. In another aspect, the collecting step can further include using a timing offset to trigger the capture of a portion of the high definition stream in the loop just prior to the heel strike reading. In a further aspect, the collecting step can further include storing the data stream that, optionally, can be stored for an additional timing factor after heel strike. In an alternative aspect, there is a step of cutting down the size of the collected video stream to that portion synchronized with a trigger event. In yet another aspect, there is a step of providing one or more of visual feedback, audible feedback or tactile feedback based on the analyzing step. In still another aspect, the providing step can be performed by a therapeutic stimulator. In one aspect, the providing step can be performed by a tactile stimulator, an electrical stimulation or a vibration triggered in synchrony with the therapy.

In still other aspects of the various embodiments described herein, the system processor or controller of an integrated gait training system or the processor of a self-contained biometric sensor system contains computer readable instructions adapted and configured according to system configuration for receiving, collecting and processing as appropriate under a common time stamp the data provided from the multiple data streams of the integrated gait training system or the self-contained biometric sensor system.

In still further additional aspects, the system processor or controller of a gait training system or the processor of a self-contained biometric sensor system is adapted and configured for collection of simultaneous, synthesized data from one or more components of the gait training system or the self-contained biometric sensor system. In some further aspects, the integrated gait training system includes an unweighting system. In one embodiment, the unweighting system is a differential air pressure unweighting system. In still another embodiment, the unweighting system is a non-differential air pressure unweighting system. In still further embodiments the non-DAP unweighting system is a support frame type non-DAP unweighting system or a curved arch type non-DAP unweighting system, or an unweighting arch type non-DAP unweighting system, or a monocolumn type non-DAP unweighing system or a cantilevered type non-DAP unweighting system.

In still other aspects of the various embodiments described herein, the system processor or controller of an integrated gait training system or the processor of a self-contained biometric sensor system contains computer readable instructions adapted and configured for storing, in a computer readable database stored within or accessible to the processor, the collected, synchronized or synthesized data of the unweighting system and the gait system. In some aspects, the collected, synchronized or synthesized data includes, depending upon system configuration and therapy performed data of one or more of: pressure setting and control, calibration data, system type, auxiliary systems, exercise system controls, video, user worn sensor or equipment sensor, synthesized data triggered from another data stream, synthesized data from processed data from manipulating one or more data streams, synthesized data calculated by comparing or relating two or more data streams, or, optionally, synthesized data obtained using algorithms to produce outcomes of one or more data streams. In still other aspects, collected, synchronized or synthesized data is displayed, output or provided to provide real-time feedback to a user of the system. In still further aspects, there are computer readable instructions for synthesizing the system by integration of independent data streams collected into another set of data or stream of data used in conjunction with the therapy or training performed using the system. In still other aspects, collected, synchronized or synthesized data is derived from the type of patient receiving therapy and the specific system selected for his patient category (i.e., class 1, 2 or 3). In some aspects, the type of patient or system is one factor in determining the type of data synthesis applied to a specific patient therapy session or course of therapy. In still other aspects, collected, synchronized or synthesized data from one component is used to indicate the relevance of a subset of data from another component or source. It is to be appreciated that the resulting data or data stream can be presented in real time, or packaged in a way to inform another person or system or process of the state of the patient.

In still other embodiments any of the above systems or methods are performed on cloud connected medical treadmill software system having a treadmill exercise system having a computer controller with a computer readable memory medium and computer controlling instructions within the memory; the computer readable memory medium containing one or more software applications having computer readable instructions for performing a function within the memory of the computer controller or via communication with a remote server to perform one or more of: authenticating a user to access patient information on a touch-screen interface in communication with the treadmill exercise system; searching for a particular patient using one or more patient search features adapted and configured for preventing the identification of other patients or users stored in the memory accessible to the treadmill exercise system or for preventing the display of protected health information of other patients or users.

In one aspect of the above embodiments performed using a medical treadmill system, one or more software applications is configured to collectively perform one or more of the steps of: establishing a patient profile; entering protected health information from the patient, searching for existing patient records with patient identification shielding, initiating an exercise therapy or diagnostic session with said patient; displaying real-time or near real-time treadmill metrics and analysis tools; or collecting treadmill session data and communicating to remote server.

In still other further aspects of using a cloud connected medical treadmill software system as described herein there is also a secondary verification of identity is performed using video capture or biometrics.

In still other embodiments any of the above systems or methods are performed on cloud connected medical treadmill software system, the step of selecting of a patient record from a database within the medical treadmill memory or in a remotely accessed database further comprises the steps of: searching for said patient name by entering the letters of the patient's first name; delaying the presentation of any search results accessed from the remote server until three letters have been entered; differentiating between similar search results by displaying the results obtained by the searching step to include the patient's first name, initial letter of the patient's last name, and the patient's birth month and day. In yet another aspect, a comparison of said patient's outcome to normative data matching a single or multitude of characteristics of similar users passes through a filter to ensure a minimum number of matching records. In yet a further aspect, the cloud connected medical treadmill software system has a database or is in communication with a database for storing stores information in an activities table that indicates any access, modification or utilization to the system. In yet other aspects, the cloud connected medical treadmill software system as described above includes steps for the integration of exercise data with varied levels of body weight support through differential air pressure or harnessing is pushed into the electronic medical record through an application programming interface. In yet an additional aspect, the cloud connected medical treadmill software system described herein wherein patient information is pulled from the electronic medical record through an application programming interface to compare to exercise data with varied levels of body weight support through differential air pressure or harnessing. In another aspect, there is a cloud connected medical treadmill software system as described herein that also includes a differential air pressure system adapted and configured for use with the medical treadmill and the differential air pressure system is used for the treatment of conditions that benefit from the reduction in load bearing. In another aspect, the cloud connected medical treadmill software system as detailed herein wherein subjective metrics can be input into the system and embedded into the exercise session data which may include one or more of: a pain scale indicating current pain being experienced by the user of the treadmill; a Level of perceived exertion of the user on the treadmill on a scale of 6 to 20 or 10 point scale; or goal for the exercise session including level of unweighting to achieve pain-free walking running or other exercises performed on the treadmill.

In still other embodiments any of the above systems or methods are performed on cloud connected medical treadmill software system adapted and configured for use with an exercise prescription software system having a software application or group of interactive software applications contained in computer readable instructions within the memory of a computer controlled exercise system or stored within a remote server computer memory accessible to the computer control system of the exercise system via a communication system, the computer readable instructions for authenticating a user using said software application and said remote server prior to permitting access to patient information using a touch-screen interface in communication with the computer controlled exercise system. In another aspect the exercise prescription software system, the software application contains computer readable instructions adapted and configured for performing one or more steps of: establishing a patient user account; establishing an association of a payments means to said patient user account; providing an prescription of a specific treatment modality or programmed session in part, in conjunction with or in whole, by a medical professional or automated software algorithm; initiating an exercise therapy or diagnostic session on the computer controlled exercise system with or without supervision from a medical professional; displaying real-time or near real-time treadmill metrics and analysis tools based on information collected from the use of the computer controlled exercise system; collecting treadmill session data and communicating said session data to a remote server; or reporting of periodic updates or final outcome at the completion of prescribed treatment.

In still other embodiments any of the above systems or methods are performed on cloud connected medical treadmill software system, wherein the software system includes computer readable instructions for a patient to perform a financial transaction for services provided and payment is distributed through the remote server to a medical professional, equipment owner or software system owner. In still another aspect, the cloud connected medical treadmill software system includes computer readable instructions wherein an outcome of a single exercise session or a set of exercise sessions is reported back to a medical professional or entity via accessing the remote server. In still another aspect the software system includes computer readable instructions for an outcome of a single exercise session or a set of exercise sessions to be reported back electronically to a medical professional or entity with an electronic payment related to the level of improvement made by the patient. In still another aspect of the cloud connected medical treadmill software system includes computer readable instructions for an outcome of a single exercise session or a set of exercise sessions to be electronically reported back to a group of medical professionals and an electronic payment is distributed according to one or a combination of: the payment being evenly distributed among multiple medical professionals or a portion of the payment being sent to a prescribing medical professional or a portion of the payment being sent to an ancillary care team professional. In still another aspect, the cloud connected medical treadmill software system includes computer readable instructions for a third party to electronically submit a payment for a prescribed exercise session or set of sessions prescribed by a health care provider. In another aspect, the software system includes computer readable instructions for a third party to electronically submit payment following completion of a prescribed exercise session or set of sessions based on improvement in metrics measured by the software system. In yet another aspect, the cloud connected medical treadmill software system includes computer readable instructions for a third party to electronically submit payment for a preventative exercise session or set of sessions requested by a third party or the paying third party based on user meeting a single or multitude of health risk criteria. In still another aspect, the cloud connected medical treadmill software system includes computer readable instructions enabling a treadmill owner and a medical professional to distinguish availability of a treadmill to be used for the medical professional's therapy sessions or open availability for unsupervised sessions.

In still other embodiments any of the above systems or methods are performed on cloud connected medical treadmill software system wherein the software system includes computer readable instructions for scheduling use of a treadmill system wherein said scheduling is performed by the user or a medical professional on a computer, a mobile device or a wearable device that accesses the remote server to check available treatment times and allows the user or medical profession to reserve available time. In yet other additional embodiments, there is a software application, or multiple of software applications including computer readable instructions, said software applications and said instructions within the memory of an exercise system in electronic communication with a remote server, the software system including computer readable instructions for said software application and remote server to collect and analyze treadmill performance metrics using a software program with computer readable instructions adapted and configured to perform one or more of: remotely requesting treadmill performance data from a single machine or a multiple of machines in real-time or at predetermined intervals; aggregating data collected from one or more exercise machines into a database; or analyzing the collected data for specific trends between variables. In yet still further embodiments of any of the above, there is a cloud connected medical treadmill software system that includes computer readable instructions wherein predictive algorithms alert the treadmill owner, customer support team or parties responsible maintenance of increased risk of service or part replacement. In still another embodiment, the cloud connected medical treadmill software system includes computer readable instructions wherein the treadmill owner, customer support team or parties responsible for maintenance can access the remote server to view expected life of the whole treadmill unit or specific parts of the unit based on part performance data. In yet an additional aspect of any of the above, the cloud connected medical treadmill software system includes computer readable instructions wherein a warranty may be purchased or provided and adjusted as a result of timely maintenance, preventative actions, and corrective actions resulting from system generated warnings.

### BRIEF DESCRIPTION OF THE DRAWINGS

The novel features of the invention are set forth with particularity in the claims that follow. A better understanding of the features and advantages of the present invention will be obtained by reference to the following detailed description that sets forth illustrative embodiments, in which the principles of the invention are utilized, and the accompanying drawings of which:
FIG. 1A is an isometric view of a differential air pressure system having an air bag cockpit supported by a cockpit support (the air bag is omitted for clarity)
FIG. 1B is an isometric view of the differential air pressure system of FIG. 1A configured for removal of railings and user interface and screen for compact storage or shipping.
FIG. 1C is an isometric view of the differential air pressure system of FIG. 1A in an alternative configuration for removal of railings and a folding user interface and screen for compact storage or shipping.
FIG. 1D is an isometric view of the differential air pressure system of FIG. 23A in an alternative configuration for removal of railings and a folding user interface and screen for compact storage or shipping.
FIG. 2 is an enlarged portion of the right side attachment between the cockpit assembly and cockpit support or side stanchion of FIG. 1.
FIG. 3 is a roller support system shown in phantom within the cockpit support or side stanchion shown in FIG. 2.
FIG. 4 is a top down view of the cockpit support assembly of FIG. 3 with a cover removed to reveal interior details of a latch pin release assembly.
FIGs. 5A, 5B and 5C are isometric, rear and side views respectively of the differential air pressure system of FIG. 1A showing a cockpit support in a raised and locked position and an air bag inflated to operating pressure. Note that a normally present user within and sealed to the cockpit or air bag is omitted for clarity. FIG. 67 illustrates a rear view of the DAP system of FIG. 1A modified to include down angle cockpit side arms and corresponding reduced height stanchions.
FIG. 5D is an interior view of a section through the differential air pressure system of FIG. 5A showing the interior bag attachment location for a side fold bias member, a side-rear fold bias member, interior lighting, and an upper interior reflective surface.
FIGs. 5E and 5F are top down and side interior views, respectively, of a portion of a bag attached to a cleat in a sliding arrangement within a side stanchion as shown in FIG. 5A.
FIG. 5G is a perspective view of a side stanchion having an exterior cleat channel.
FIG. 5H is a perspective view of a cockpit and support in a lowered position used in conjunction with the external cleat channel of FIG. 5G.
FIG. 6A is an exploded view of an air bag of FIGs. 5A, 5B and 5C illustrating additional details of bag fold lines and window alignment and positions.
FIG. 6B is a top down partial view of an air bag in a folded configuration illustrating the relative relationship of preferentially folded panels of FIG. 6A along with the clearance between various windows in a when the air bag is in a nearly flat or preferentially folded configuration.
FIG. 6C is an isometric view of a portion of an embodiment of a differential air pressure bag having modified fold lines to cause an accordion folding action for a reduced step height when the cockpit is lowered.
FIG. 7 is a top down view of the differential air pressure system in FIG. 5A illustrating one configuration of air bag attachment points for coupling the air bag to the cockpit ring assembly.
FIG. 8 is a perspective view of an embodiment of a treadmill base with service covers removed to show components within a user serviceable component area and a non-user serviceable component area along with a frame and pressure wall to separate the pressurized volume portion from the non-pressurized portion.
FIG. 9 is an enlarged perspective view of a forward portion of the treadmill base in FIG. 8. This view further illustrates components within the serviceable and non-serviceable components and the bulkhead separating those two areas. The cover plates (shown above the respective portions of the non-pressure area in FIG. 8) are removed for clarity.
FIG. 10 is a top down view of the forward portion of the treadmill base shown in FIG. 9, along with the front roller angular adjustment that is accessible from the user serviceable component area.
FIG. 11A is a top down view of a rear portion of the treadmill base showing the relationship of roller angle and belt tension adjustment screws and the relative position of one portion of the bag pressure seal frame along the perimeter of the treadmill base where the adjustments can be made external to the pressure controlled portion of the base.

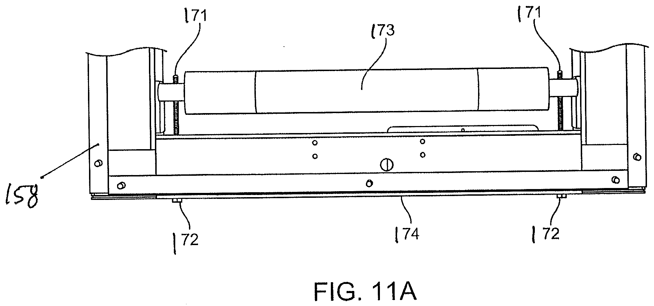

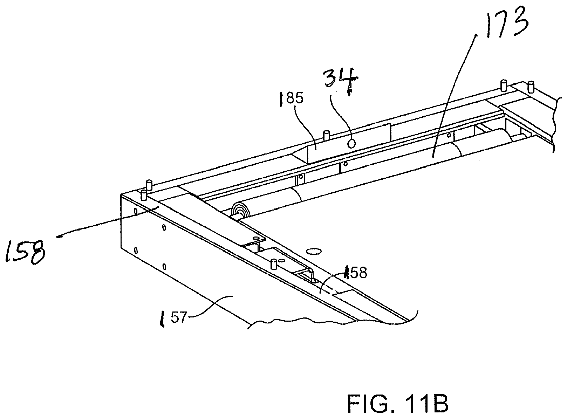

FIG. 11B is a rearward looking perspective view of the treadmill rear portion of FIG. 11A illustrating one of several alternative camera or camera with mount locations for a rear mounted camera located within the pressure controlled volume of the treadmill base. In one embodiment, there is an embedded deck gait camera. The camera location may also be modified so that the camera is flush with the mounting surface or configured to be protected from damage such as when users step on the camera or its mounting position. There may be a low profile protective shell provide over the camera housing in some embodiments. Still further aspects of a camera embodiment include a spring-loaded recess and/or providing self-wiping in one or more alternate embodiments.
FIG. 12 is an enlarged view of the front left portion of the treadmill base of FIG. 8 with the treadmill belt removed.
FIG. 13 is a top down view between the front and rear rollers of the treadmill of FIG. 8 showing the relative locations of the load cells/sensors as well as the available support areas within the pressure seal frame available for mounting other additional components or accessories within the treadmill pressure volume. Also shown is one of several possible locations for a within pressure volume treadmill deck mounted gait sensor or appropriately configured gait metrology unit and interior lighting elements.
FIG. 14A is an enlarged perspective view of a load cell and treadmill deck mount of the treadmill base of FIG. 8 with the treadmill deck and belt removed.
FIG. 14B is a perspective view similar to FIG. 14A with the treadmill deck in place to illustrate the comparable height between the treadmill deck height and the overall height of a load cell, a damper and a deck mount bracket.
FIG. 14C is a cross section view of the mount and bracket of FIG. 14B including typical dimensions of the associated components.
FIG. 15 is an enlarged perspective view of a rear portion of the treadmill base of FIG. 8 illustrating a pair of pressure tight cleanout doors in a shut and an open position.
FIG. 16 is a block diagram illustrating a conventional wiring configuration used for typical exercise equipment installation.
FIG. 17 is a block diagram illustrating the use of a current limiter embodiment as described herein in position between the building wiring and the exercise equipment.
FIG. 18 is a block diagram of an exemplary current limiter according to one embodiment for use as a component integrated into the treadmill of FIG. 8 or for use as a separate component electrically between a piece of electrical exercise equipment and the source of electrical power for that equipment.
FIG. 19A illustrates a side view of an embodiment of a differential air pressure system superimposing the relative position of a zero angle cockpit and a declined angle cockpit with the treadmill of the differential air pressure system without any incline angle.
FIG. 19B illustrates a side view of an embodiment of a differential air pressure system superimposing the relative position of a zero angle cockpit and a declined angle cockpit with the treadmill of the differential air pressure system at an inclined angle.
FIG. 20A is a view from within a bag through a front window aligned with a camera housed within a front support or stanchion of a differential air pressure system.
FIG. 20B is a partial side view of a differential air pressure system showing the alignment of a bag front window to a biased camera mount supported by the front support or stanchion of the differential air pressure system.
FIG. 21A is an isometric view of an alternative differential air pressure system having a strap based cockpit height adjustment system along with a user input supported between the side rails and a front support rail.
FIG. 21B is a close up view of the strap and cockpit interface of the differential air pressure system of FIG. 21A.
FIG. 21C is a perspective view of the system base of the differential air pressure system in FIG. 21A and 21B showing the attachment openings for the cockpit adjustment straps.
FIG. 21D is a section view through an attachment opening of FIG. 21C with the strap in position around a pin.
FIG. 22A is a side view of a differential air pressure system embodiment having an inclined profile center actuated cockpit locking mechanism, a large touch screen user interface and a curved front stanchion.
FIG. 22B is an isometric view of the differential air pressure system embodiment of FIG. 22A showing having an inclined profile center actuated cockpit locking mechanism with the cockpit locked in a raised or in use height position. Also shown in this view are the large touch-screen user interface and an external cleat guide extending along the side stanchions.
FIG. 23A is an isometric view of a differential air pressure system embodiment having a flat profile center actuated cockpit locking mechanism, a large touch screen user interface and a curved front stanchion supporting the console and conveying electrical power and signal cables from the base to the console.
FIG. 23B is a top down view of the differential air pressure system of FIG. 23A showing the cockpit in an upper position in relation to the large screen user interface. The cockpit locking mechanism cover is shown in place in this view.
FIG. 23C is a top perspective view of the differential air pressure system of FIG. 23A showing a cockpit cover over the user opening and the cockpit in a lowered position in relation to the large screen user interface. The cover of the cockpit locking mechanism is removed in this view.
FIG. 24A is a top isometric view of the center-mounted cockpit locking device of FIG. 23C with the cover removed.
FIG. 24B is a top down view of the center-operated cockpit locking device with the cover removed.
FIG. 24C is a top down view of the left cockpit locking pin mechanism of FIG. 23B that is actuated by the center mounted cockpit locking device mechanism of FIG. 24B. The cover shown in FIG. 24B is removed in this view.
FIG. 24D is an isometric view of the locking pin mechanism in the left side stanchion of FIG. 23B with the stanchion walls removed to show the details of an exemplary cockpit guide roller.
FIG. 24E is a front view of the guide roller shown in FIG. 24D showing a counter force spring that eases lifting of the cockpit and the attached pressure bag.
FIGs. 24F and 24G are perspective side views of the cockpit locking pins of FIG. 24D with the locking plate removed with the pins retracted (FIG. 24F) to permit cockpit movement and extended (FIG. 24G) to lock cockpit to locking plate.
FIG. 25 is a block diagram of an embodiment of a treadmill motor brake.
FIG. 26 is a flowchart of an exemplary treadmill motor brake activation.
FIG. 27 is a graph of braking current and power versus duty cycle of a 1 ms period.
FIG. 28 is a cross section view of an exemplary user unweighting and stabilizing interface having modifications to the amount of material between the cockpit attachment points and the user bag seal to accommodate additional vertical and horizontal user movement during DAP system use by ensuring that the plane of the cockpit attachments and the plane of the user bag seal are not coincident.
FIG. 29 is a top down view of a DAP system having increased stanchion span and modified handrails to accommodate the stanchion position while keeping handrails closer to the system centerline fore and aft of the stanchions. User is shown positioned between the stanchions.
FIG. 30 is a bottom up perspective view of a stanchion reference bracket adjacent to a portion of the base and stanchion of the system of FIG. 23A.
FIG. 31 illustrates modified stanchion mounting holes that allow the stanchions to be positioned vertically by the stanchion reference plate and bracket shown in FIG 30, and not by the horizontal stanchion mounting fasteners.
FIG. 32 illustrates a side view of a locking plate with elongated pin apertures that allow left and right locking pins to engage both left and right locking plates in the presence of vertical and angular misalignment.
FIG. 33 is a flow chart of an exemplary method of performing an authenticated user exercise session
FIG. 34 is schematic diagram of an exemplary computer communications system for exchanging data generated in medical treadmills and medical unweighting systems.
FIG. 35 is a screen shot of an exemplary log in screen to access a medical treadmill system that includes a drop down provider listing.
FIG. 36 is a screen shot of an exemplary provider user pin creation.
FIG. 37 is a flow chart of a method of patient identification for use with medical exercise equipment systems.
FIG. 38 illustrates a front facing camera using image capture of manual and automatic ID verification.
FIG. 39 is a screen shot a search result implementing patient search shielding.
FIG. 40 is a screen shot of a search shielding process without patient name.
FIG. 41 illustrates a work flow to achieve normative results.
FIG. 42 is a screen shot of an exemplary audit log.
FIG. 43 is an exemplary table showing the data fields present for an exemplary activities table in database.
FIG. 44 is a screen shot for an interface used in the creation of a patient record with the input of specific medical conditions about the patient and additional patient medical details.
FIG. 45 is a screen shot of a medical treadmill system dashboard display showing options for user session goals.
FIG. 46 illustrates a screen shot of a medical treadmill system display being used to provide in session feedback to a user.
FIG. 47 is a screen shot of a medical treadmill system display indicating the status is a user session and an indication on a pain scale.
FIG. 48 is a screen shot of a medical treadmill system display indicating profile selection and the ability to create a plan of care.
FIG. 49 is a screen shot of a medical treadmill system display for interacting with the system for creating and customizing a workout program.
FIG. 50 illustrates an exemplary referral method for accessing available medical treadmills.
FIG. 51 illustrates a screen shot of a medical treadmill system display being used to review previous medical treadmill sessions.
FIG. 52 illustrates a screen shot of a medical treadmill system display being used to compare live video in a current session to a past session video recording
FIG. 53 illustrates a screen shot of a medical treadmill system display being used to retrieve prior session videos for comparison.
FIG. 54 is a screen shot of a medical treadmill system display indicating the status is a user session and an indication of GAIT metrics.
FIG. 55 illustrates a screen shot of a medical treadmill system display being used for machine health monitoring or use in a maintenance mode.
FIG. 56 is a flow chart for a method of provider account creation and pin code. access
FIG. 57 illustrates an exemplary method to generate and push DAP scores to an EMR.
FIG. 58 is a method of payment and example.
FIG. 59 is a method of an exemplary medical session performance escrow system.
FIG. 60 is a block diagram of an exemplary computer system that may perform one or more of the operations described herein.
FIG. 61 is a block diagram of an exemplary networked computer system.
FIG. 62 is an exemplary method of providing therapy for a patient using a differential pressure system having measured gait feedback capabilities.
FIG. 63 is an exemplary data collection table or summary of data inputs in an exemplary integrated differential pressure control system having gait measurement capabilities.
FIG. 64 is a process for transitioning from a static patient record to a dynamic patient record.
FIG. 65 is a process of user provisioning for access to a facility using a dynamic patient record.
FIG. 66 is a screen shot of a user administrator screen.
FIG. 67 is a modified view of the system in FIG. 5B modified to show an embodiment of angled cockpit side arms and corresponding reduction in vertical support or stanchion.

### DETAILED DESCRIPTION

Exemplary DAP systems, components and operation are illustrated and described in U.S. Patent No. 7,591,795, U.S. Patent Application Publication No. US-2011-0098615-A1, and U.S. Patent No. 8,464,716. The commercially available AlterG P200 and M320 models are typical of existing DAP systems that are designed for physical therapists and athletic trainers. These systems comprise an exercise device, typically a treadmill, a flexible bag that applies air pressure to the lower portion of the user's body, an airtight garment which interfaces between the flexible bag and the user, and a height adjustable cockpit structure to set the height of the bag top surface to accommodate different height users.

Aspects of various embodiments described herein generally relate to systems and methods for collecting and analyzing data to aid in scheduling and managing treatment and diagnostic information provided by assisted training systems such as unweighting systems as well as other personal assistance systems. More particularly, embodiments may relate to management of treatment resources and schedules such that patients in need of therapeutic treatment can access available appropriate treatments (e.g., treatments, assessments) from unweighting and assistive training systems regardless of type of treatment or location and timing of treatments. Further embodiments may relate to multimodality therapy involving unweighting, personalized assistive, and various types of other forms of rehabilitation therapy, and relate to the scheduling and integration of multiple modes of therapy such as alternating time on an unweighting system to improve walking with flexibility, stretching or strength training protocols. Such multiple modes of therapy can integrate input and data captured from the unweighting therapy or assisted therapy session, patient-provided information, information from the medical records system of the therapy center, or information captured from other therapeutic rehab equipment such as bicycles, or strength testing equipment. Other embodiments may relate to collecting data indicative of a user's gait and can further involve selecting or adapting treatment based on the gait measurements. Still further embodiments may comprise collecting data and analyzing the data to determine whether the user has any balance or concussive impairment.

There are available various unweighting systems suited to training users or patients in different categories based on a number of factors such as, for example, patient ability to access the machine, the specific training needs of the patient and the physical capabilities of the patient as well as whether the patient requires assistance during training and if so to what degree. The systems include air pressure unweighting systems and mechanical unweighting systems.

Air pressure unweighting systems can include differential air pressure (DAP) systems and non-DAP systems. A number of differential air pressure systems for various levels of patient assistance before, during or after use are described in the non-provisional patent application entitled "Differential Air Pressure Systems and Methods of Using and Calibrating Such Systems for Mobility Impaired Users" application serial number 13/423,124 filed on March 16, 2012 ("the '124 application") and U.S. Provisional Application No. 62/049,307, filed 9/11/14, titled "Unweighted Training Systems and Methods of Using and Calibrating Such Systems for Mobility Impaired or Obese Users" ("the '307 application"). The entireties of these applications are incorporated herein by reference.

Other air pressure unweighting systems are described at U.S. Provisional Application No. 62/013,999, filed 6/18/14, titled "Differential Air Pressure Treadmill System" and U.S. Provisional Application No. 62/024,916, filed 7/15/14, titled "Pressure Chamber and Lift for Differential Air Pressure System", the disclosures of which are incorporated herein by reference in their entireties.

Mechanical unweighting systems can include curved arch unweighting systems, unweighting arch systems, and cantilevered systems, among others, and are described at "SUPPORT FRAME AND RELATED UNWEIGHTING SYSTEM," filed 3/14/2013, application no. 61/784,387, attorney no. 10189-708.100; "CURVED ARCH UNWEIGHTING SYSTEMS," application no. 61/772,964, filed 3/5/2013, attorney no. 11889-709.100; "UNWEIGHTING ARCH SYSTEMS," application no. 61/773,019, filed 3/5/2013, attorney no. 11889-710.100; "MONOCOLUMN UNWEIGHTING SYSTEMS," application no. 61/773,037, filed 3/5/2013, attorney no. 11889-711.100; and "CANTILEVERED UNWEIGHTING SYSTEMS," filed 3/14/2013, application no. 61/784,510, attorney no. 11889-713.100, each of which is incorporated by reference in its entirety.

In addition, this application may be related to operation of any of the unweighting systems or auxiliary systems or patient interface embodiments described in any of the following patent applications, each of which is herein incorporated by reference in its entirety: U.S. Provisional Application No. 61/785,402 filed on 3/14/2013; International Application No. PCT/US2014/028032 filed on 3/14/2014. U.S. Patent No. 7,591,795 issued on 9/22/2009; U.S. Application No. 12/236,459 filed on 9/23/2008; U.S. Application No. 12/236,465 filed on 9/23/2008; U.S. Application No. 12/236,468 filed on 9/23/2008; International Application No. PCT/US2006/038591 filed on 9/28/2006; U.S. Provisional Application No. 60/999,102 filed on 10/15/2007; U.S. Provisional Application No. 60/999,101 filed on 10/15/2007; U.S. Provisional Application No. 60/999,061 filed on 10/15/2007; U.S. Provisional Application No. 60/999,060 filed on 10/15/2007; U.S. Application No. 12/761,316 filed on 4/15/2010; U.S. Application No. 12/761,312 filed on 4/15/2010; International Application No. PCT/US2008/011832 filed on 10/15/2008; International Application No. PCT/US2008/011807 filed on 10/15/2008; U.S. Provisional Application No. 61/178,901 filed on 5/15/2009; U.S. Application No. 12/778,747 filed on 5/12/2010; International Application No. PCT/US2010/034518 filed on 5/12/2010; U.S. Design Application No. 29/337,097 filed on 5/14/2009; U.S. Provisional Application No. 61/454,432 filed on 3/18/2011; U.S. Application No. 13/423,124 filed on 3/16/2012; International Application No. PCT/US12/29554 filed on 3/16/2012; U.S. Patent No. 5,133,339 issued on July 28, 1992; U.S. Provisional Application No. 61/651,415 filed on 5/24/2012; U.S. Provisional Application No. 61/785,317 filed on 3/14/2013, titled "METHOD OF GAIT EVALUATION AND TRAINING WITH DIFFERENTIAL PRESSURE SYSTEM"; International Application No. PCT/US2014/029578 filed on 3/14/2014; U.S. Provisional Application No. 61/784,387 filed on 3/14/2013, titled "SUPPORT FRAME AND RELATED UNWEIGHTING SYSTEM"; International Application No. PCT/US2014/029002 filed on 3/14/2014; U.S. Provisional Application No. 61/772,964 filed on 3/5/2013; International Application No. PCT/US2014/020741 filed on 3/5/2014; U.S. Provisional Application No. 61/773,019 filed on 3/5/2013; U.S. Provisional Application No. 61/773,037 filed on 3/5/2013; International Application No. PCT/US2014/020863 filed 3/5/2014; U.S. Provisional Application No. 61/773,048 filed on 3/5/2013; International Application No. PCT/US2014/020934 filed on 3/5/2014; U.S. Provisional Application No. 61/784,664 filed on 3/14/2013 titled "UNWEIGHTING GARMENTS"; U.S. Provisional Application No. 61/784,510 filed on 3/14/2013, titled "CANTILEVERED UNWEIGHTING SYSTEMS"; International Application No. PCT/US2014/028694 filed on 3/14/2014; U.S. Provisional Application No. 62/049,307 filed on 9/11/14, titled "UNWEIGHTED TRAINING SYSTEMS AND METHODS OF USING AND CALIBRATING SUCH SYSTEMS FOR MOBILITY IMPAIRED OR OBESE USERS"; U.S. Provisional Application No. 62/013,999 filed on 6/18/14, titled "DIFFERENTIAL AIR PRESSURE TREADMILL SYSTEM"; U.S. Provisional Application No. 62/042,916 filed pm 7/15/14, titled "PRESSURE CHAMBER AND LIFT FOR DIFFERENTIAL AIR PRESSURE SYSTEM"; U.S. Provisional Application No. 62/049,149 filed on 9/11/14, titled "UNWEIGHTING GARMENTS".

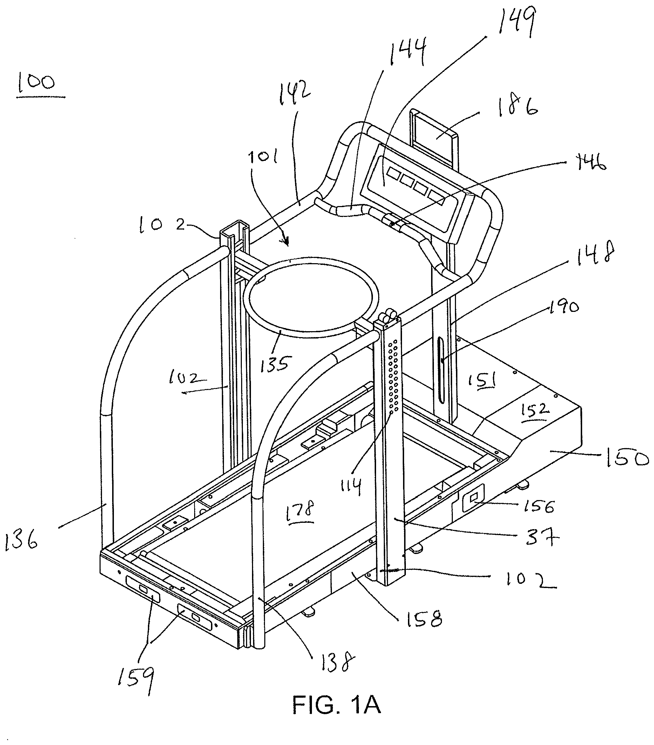

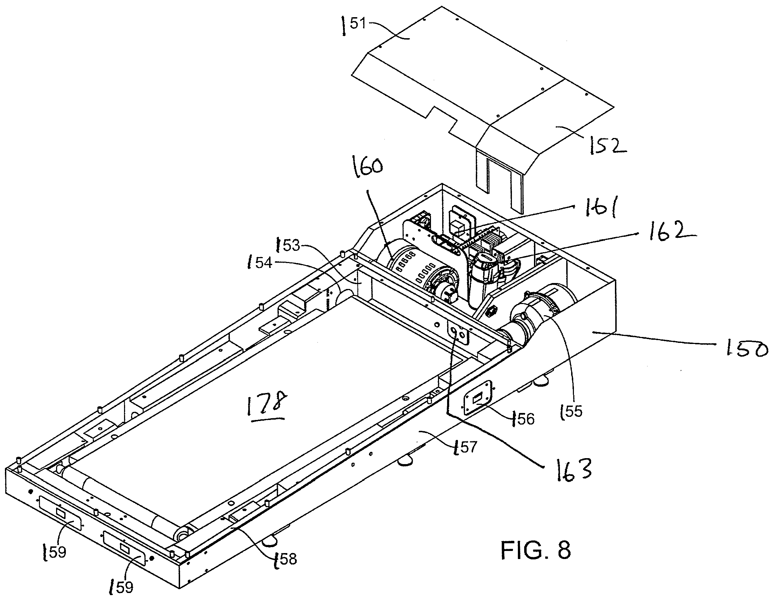

FIG. 1A is an embodiment of a user interface and cockpit assembly for a differential air pressure system 100. Additional differential air pressure system embodiments 200, 300 are further described below. The differential air pressure systems share a common low step height integrated treadmill base 150. The integrated base 150 is further described below with reference to FIGs. 8-15.

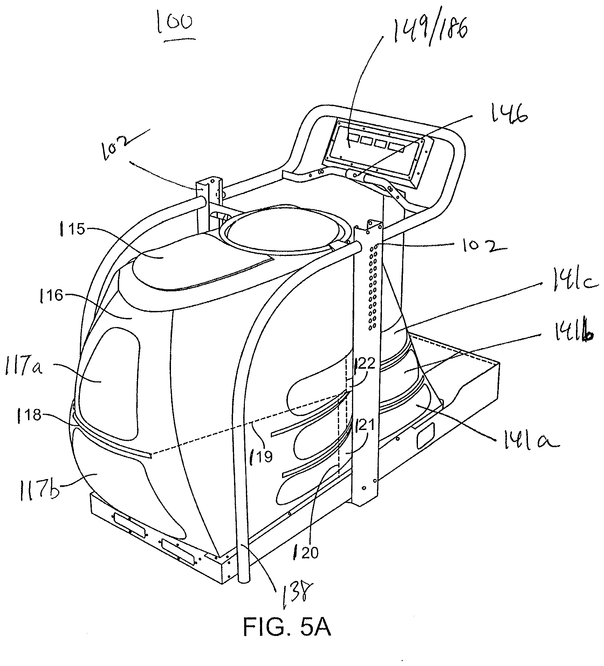

FIG. 1A is an isometric view of a differential air pressure system 100 having an integrated treadmill base, air bag cockpit supported by a cockpit support. The air bag is omitted for clarity but various embodiments are illustrated in FIGs. 5A-5D, 6A-6C, 7, 19A, 19B, 21A, 22A, and 22B for example. Cockpit ring assembly 101 shown with left and right stanchion or vertical cockpit support 102. Cockpit ring assembly 101 moves a ring 135 up and down along support 102, enabling height adjustability to accommodate different height users.

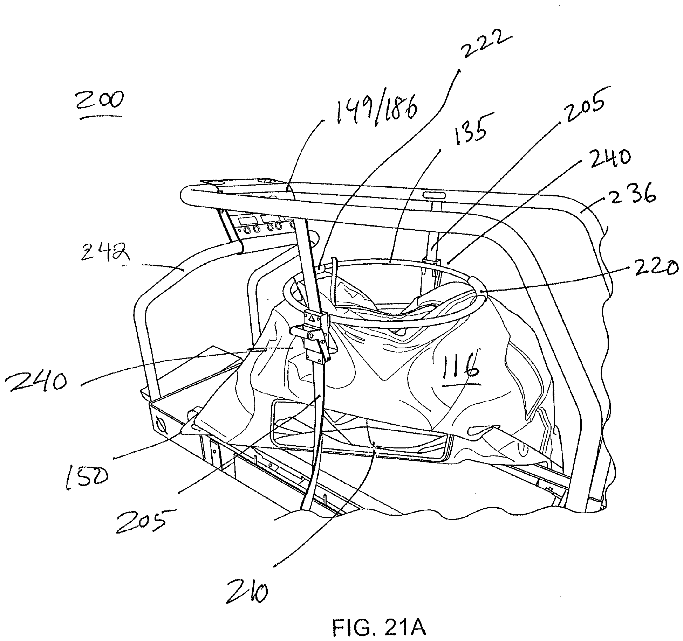

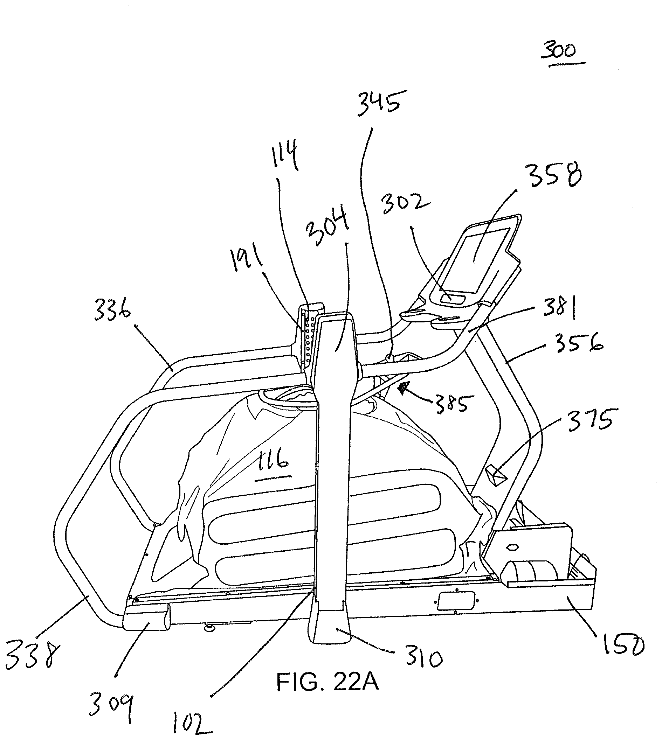

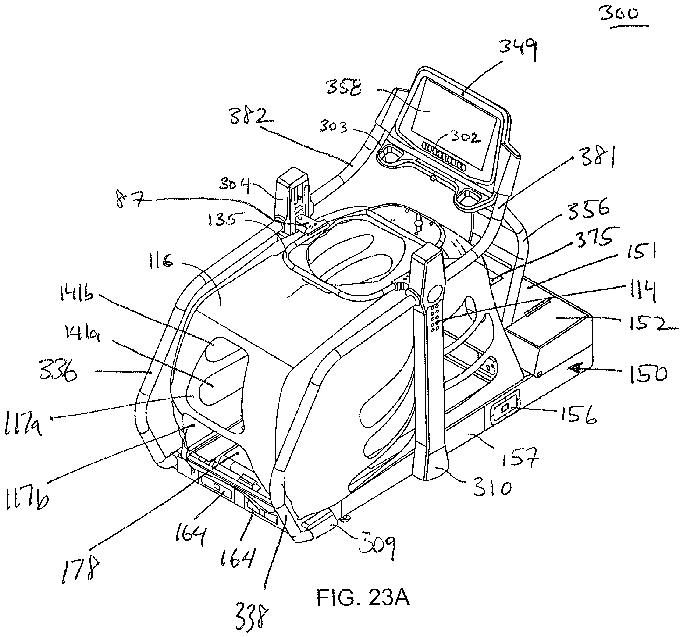

FIG. 1A also shows a left rear handrail 136 and a right rear hand rail 138 attached to the rear face of stanchions 102. The other ends of rails 136, 138 are attached to a portion of the base 150. In the illustrated embodiment of FIG. 1A the support rails 136, 138 attach at an angle to the frame 150. A right angle is illustrated. Different attachment orientations are possible for other angles or to a mount nearly parallel to or alongside the base 125 (see FIGs. 22A, 23A). A front rail 142 is attached to the front face of stanchions 102 and to front stanchion 148. A front cross rail 144 extends across a portion of the front rail 142. A user control interface 149 and a touch screen interface 186 are adjacent to the front rail 142. The user control interface 149 and touch screen 186 may be incorporated into a single unit (see FIGs. 21A, 22A, 22B, 23A).

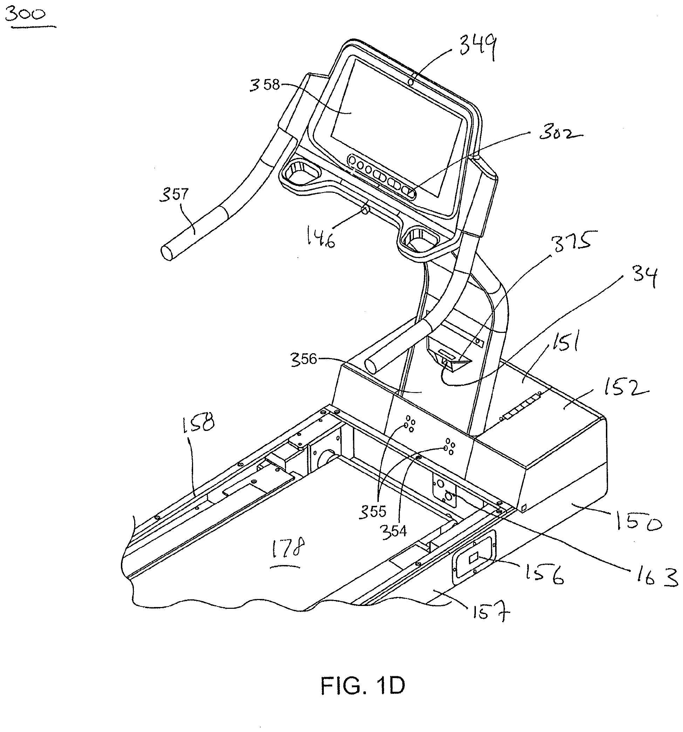

FIG 1D shows console with touchscreen 358, torso camera 349, controls 302, emergency stop 146 and front handrails 357 attached to vertical stanchion assembly 356, pivoting about hinge point 354 and securing with mounting fasteners 355 to provide ease of shipping and assembly.

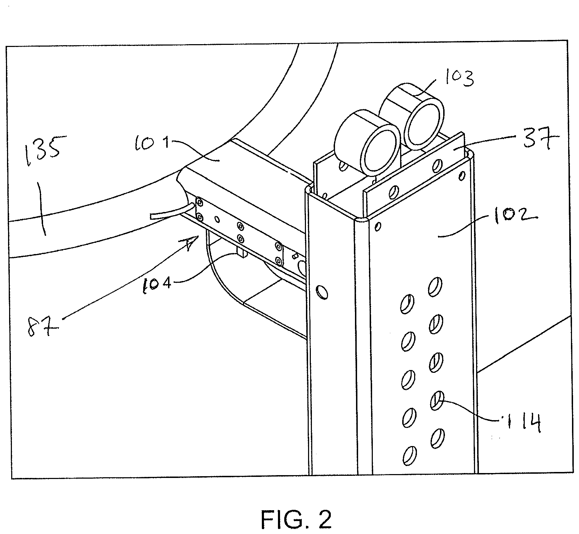

FIG. 2 is an enlarged portion of the right side cockpit arm attachment 87 between the cockpit 101 assembly and stanchion support 102 of FIG. 1A. Cockpit ring 135 and assembly 101 are shown with a stanchion or vertical support 102. Counter-force springs 103 ease movement of the cockpit ring assembly 101 and bag (not shown) by offsetting the weights of said cockpit ring assembly 101 and bag 116. Latch release trigger 104, and associated latching actuator 98 (see FIG. 4) counterforce springs 103, cockpit support or stanchion 102, and latch detent positions 114 are mirrored on the opposite of the user who during use of the DAP system stands inside and is secured to ring 135 of the cockpit ring assembly 101.

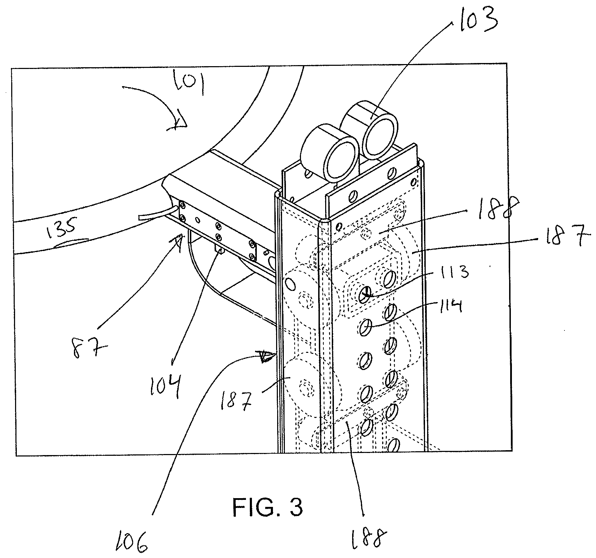

FIG. 3 is the view of FIG. 2 with a cockpit guide roller assembly 106 interior details shown in phantom. The cockpit ring assembly 101 and the guide roller assembly 106 are connected by the cockpit lock trigger mechanism. The relative positions of the catch pins 105 and the latch detents 114 are also shown in this view.

FIG. 4 is a top down view of the cockpit trigger assembly or trigger latching actuator 98 of FIG. 3 with a cover removed to reveal interior details of a latch pin assembly. This view of cockpit ring assembly 101 shows cable housing 107 that connects the release mechanisms 98 within side stanchions 102 on either side of the user, cable tension adjuster 108 which is used to remove cable slack, and cable 319 which transmits force to release both detents 113 on either side of the user simultaneously. In operation, return spring 112 keeps latch 113 detent pin 115 engaged with detent 114. When either left side or right side trigger 104 is depressed, the corresponding release arm 110 is forced to rotate about pivot point 111 putting tension on cable 319 which compresses return spring 112 and moves latch 113 inward, releasing latch pin 105 from detent 114 on each side. As trigger 104, release arm 110, pivot 111, return spring 112 and latch 113 are mirrored on the opposite of cockpit ring assembly 101, depressing either trigger 104 will move both latches 113 inward, releasing the latch pins 105 from detents 114.

A top cover (not shown) is placed above the counterforce springs 103. As the height of the cockpit assembly 101 is adjusted the vertical rollers 187 and horizontal rollers 188 maintain the guide roller assembly within the left and right stanchions and assist in even application of the forces from the counterweight spring 103.

In one embodiment, there is a latch-able pressure resisting cockpit assembly 101 where all latches and trigger mechanisms are connected by a cable or cables. In one aspect, the latch-able pressure resisting cockpit assembly where all latches and trigger mechanisms are connected by a cable or cables and the cable tension and play are adjusted by in-line, threaded length adjusters.

FIGs. 1A, 2, 3 and 4 illustrate various views of an embodiment of a latch-able, pressure resisting cockpit assembly where latches are engaged on both sides of the cockpit by actuating only one of several triggering mechanisms positioned about the user. The triggering mechanism detailed in FIG. 4 is illustrative of one type of cable actuated triggering mechanism. Other cable driven configurations are possible. Moreover, the cable driven cockpit latching mechanism may also be replaced by a different type of latch mechanism. The latches may be operated by any of several different mechanisms such as with one or more pneumatic actuators; one or more hydraulic actuators; one or more shape memory alloys (SMA) based actuators; one or more electro active actuators; one or more electric drives; one or more motor driven or gear driven actuators or other suitable drive system to withdraw, hold, advance or otherwise control the position of one or more latches of other elements to hold the cockpit assembly in position relative to and/or engagement with the cockpit support.

In some embodiments, one or more safety switches or indicators is provided to indicate to the user or to a DAP control system, by way of example and not limitation, a vertical position or height of engagement, a horizontal position or in motion or lateral placement indication and/or a latched condition or indication of one or more latch used in the system. In one embodiment, the latch indicators are for at least one latch of a pair of the the latches on one side of the cockpit support. In one embodiment, the latch indicators are for both or all latches of the latches on one side of the cockpit support. In one embodiment, the latch indicators are for one latch of a pair of latches on of latches on both sides of the cockpit support. In one embodiment, the latch indicators are for both or all latches of the latches on both sides of the cockpit support. Each of the latch variants described herein may also be applied to other cockpit latching configurations and locking devices such as those described below in FIGs. 22A, 22B, 23A, 23C, 23D and 24A-24G.

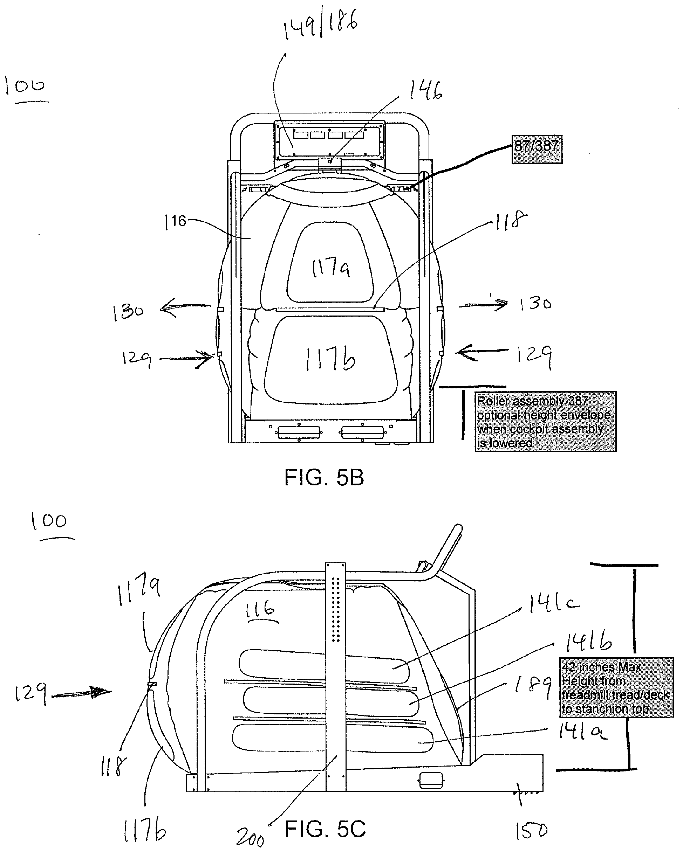

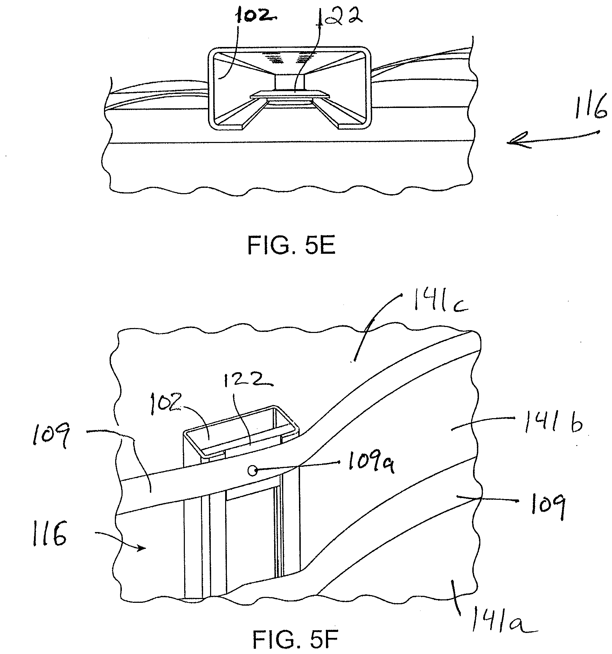

FIGs. 5A, 5B and 5C are isometric, rear and side views respectively of differential air pressure system 100 with a cockpit support 101 and an air bag 116 inflated to operating pressure. Note that a normally present user within and sealed to the cockpit or air bag 116 is omitted for clarity. Cockpit ring assembly 101 and cockpit supports 102 shown with bag 116. As best seen in FIG. 5B the side arms 87 and associated roller assemblies are nearly horizontal with the cockpit assembly. Bag contains a reinforced step section 115 for user ingress and egress, rear windows 117a, 117b separated by an intra-window stiffeners 118. Similarly, intra-window stiffeners 118 separate the lower and middle side windows 117a, 117b and the middle and upper windows 117b, 117c. Elastic elements 119 and 120 are attached in the vicinity of the stiffeners 118 where folding is desired and bias the bag to fold between the windows in the desired direction and sequence. Low friction coating 121 is applied to the inside of cockpit support 102 to minimize wear and binding of bag 116 during folding and unfolding. Bag guide cleat 122 attaches bag 116 to cockpit support 102 while allowing the former to move up and down support 102 as bag is inflated and deflated. When cockpit ring assembly 101 is lowered, bag 116 collapses by folding inward at 129 and outward at 130 as indicated by arrows in FIG. 5B. Details of the bag cleat are described below with respect to FIGs. 5E, 5F. FIG. 5C shows one optional stanchion 102 configuration where the maximum stanchion height above the treadmill deck is limited to 42 inches in order to provide more room for user elbow swing or an enlarged running envelope.

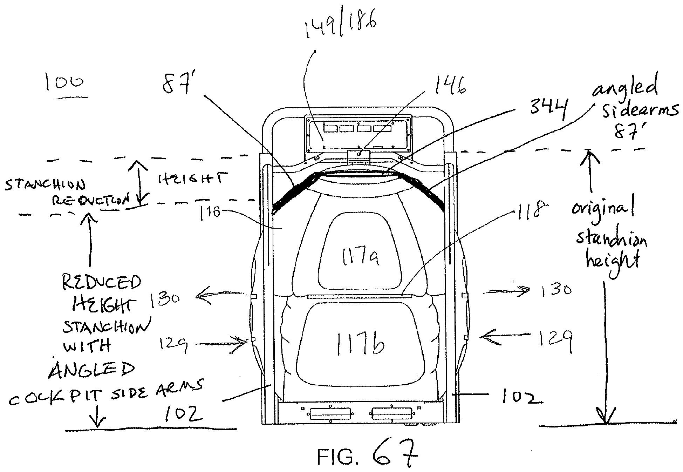

FIG. 67 is a modified view of the system in FIG. 5B modified to show an embodiment of angled cockpit side arms 87'. As a result of the down angle side arms, the roller and support assembly is positioned lowered than the cockpit assembly. Since the roller assembly top vertical movement is one factor in stanchion 102 height, by reducing the roller assembly travel (as shown in FIG. 67) the stanchion height may be further deduced as shown. In some embodiments, the roller assembly may be reduced in size such that the vertical displacement of the entire roller assembly is about the same vertical height of the top of the integrated base 150, or the top of the integrated base 150 plus the additional height of the DAP bag when the cockpit assembly is lowered for user ingress and egress.

The view of FIG. 5A also illustrates an embodiment of a cockpit support structure that includes a low friction application to prevent binding and wear of the adjacent DAP unweighting bag as it slides up and down. FIG. 5A also includes an embodiment of a DAP unweighting bag where elastic members enforce folding in the correct direction and sequence.

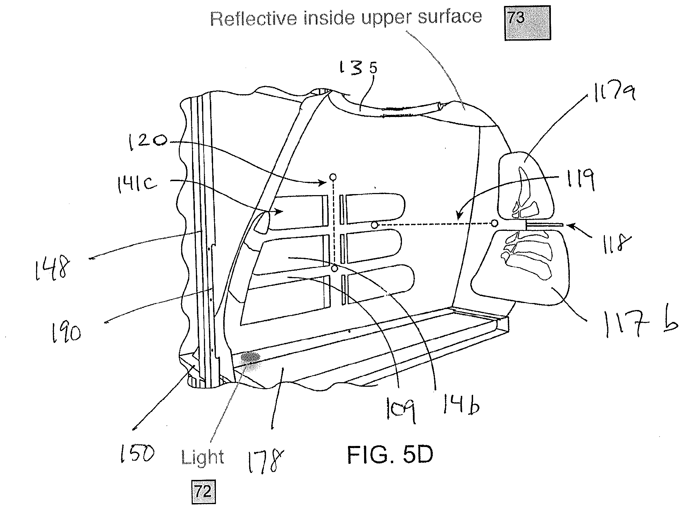

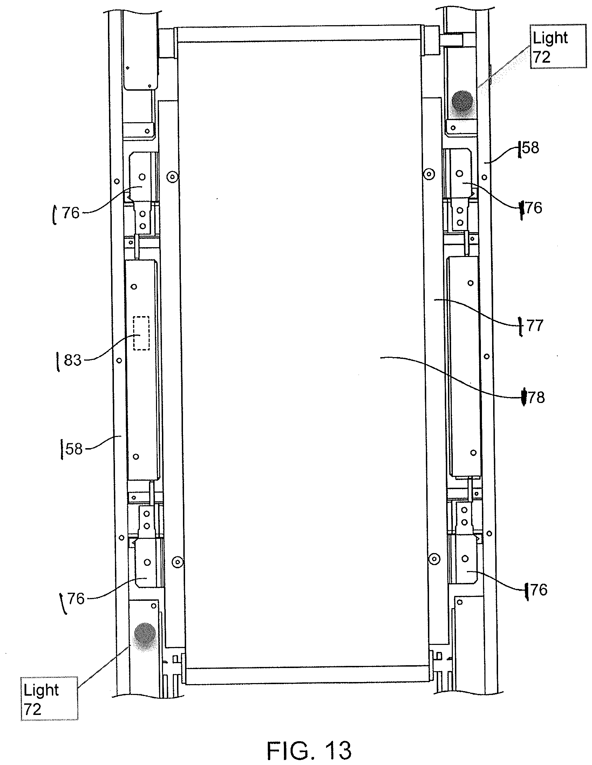

FIG. 5D is an interior view of a section through the differential air pressure system 100 of FIG. 5A showing the interior bag attachment locations for a side fold bias member 120 above window 141c and between middle window 141b and lower window 141a. The side-rear fold bias member 119 is shown attached to the rear wall adjacent the stiffener 118 between rear windows 117a, 117b and to the side between upper window 141c and middle window 141b. Also shown in FIG 5D are one of the lights 72 used to provide illumination of the user's lower extremities along with the reflective coating inside upper surface of the bag (indicated at 73) used to enhance lighting consistency. Additional or optional lighting positions are illustrated in FIG. 13.

FIGs. 5E and 5F are top down and side interior views, respectively, of a portion of a bag 116 attached to a cleat 122 in a sliding arrangement within a side stanchion 102 as shown in FIG. 5A. FIG. 5E illustrates how the cleat 122 is shaped to engage within the interior c-channel shape of the stanchion 102. FIG. 5F illustrates the attachment point 109a for the cleat 122 in the bag wall 109 that separates upper window 141c from window 141b.

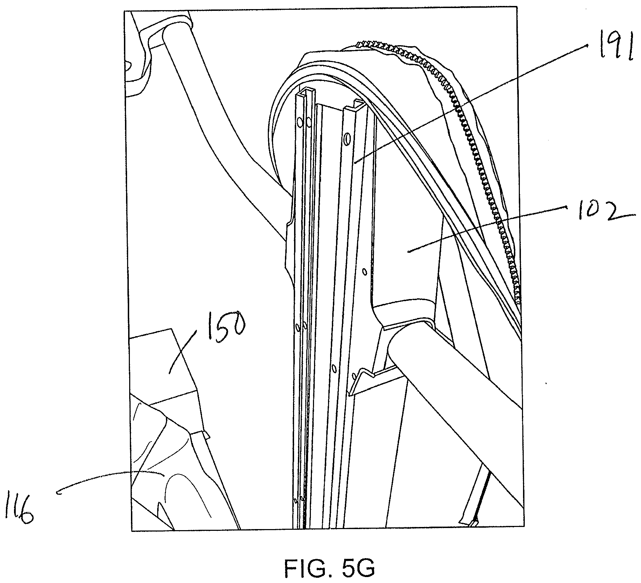

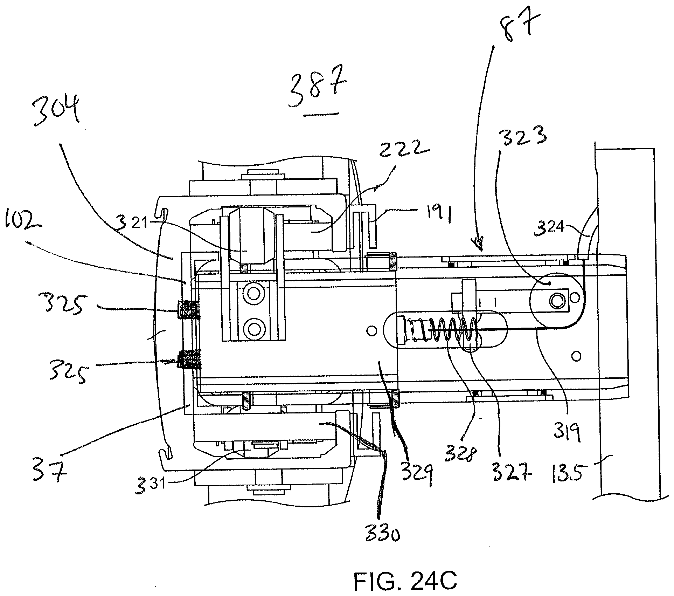

FIG. 5G is a perspective view of a side stanchion 102 having an exterior cleat channel. In contrast to FIGs. 5E and 5F and the interior arrangement of the guide cleat 122, an external channel or channels 191 may be provided. One advantage of an external guide cleat channel 191 is that the interior of slide stanchions 102 are open. Open stanchion interiors permit easier use of guide roller assemblies or shown in FIGs. 3, 24C-24G.

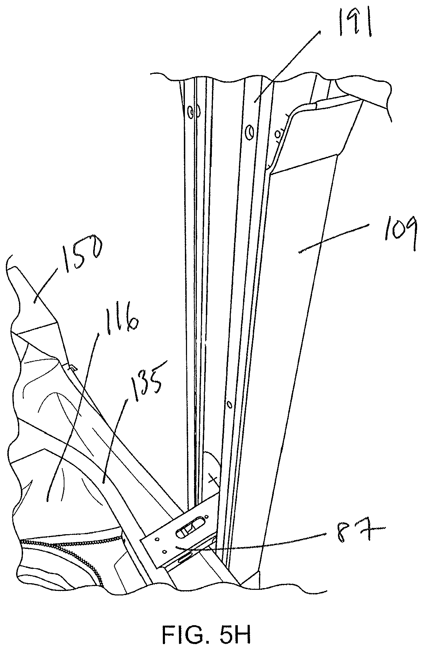

FIG. 5H is a perspective view of a cockpit ring 135 in a lowered position used in conjunction with the external cleat channel 191 of FIG. 5G.

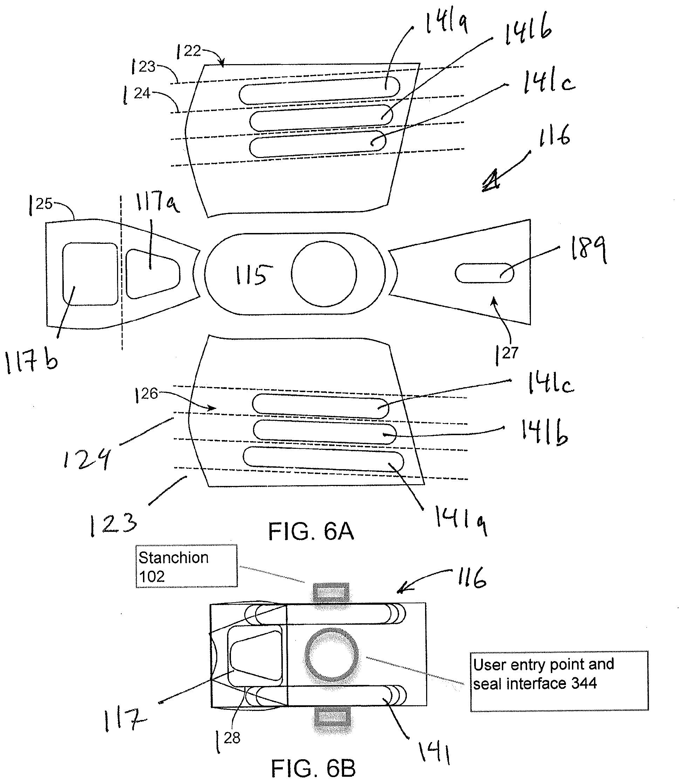

FIG. 6A is an exploded view of an air bag 116 of FIGs. 5A, 5B and 5C illustrating additional details of bag fold lines and window alignment and positions. Bag pattern pieces 122, 125, 126, and 127 are shown. Fold lines 123 and 124 indicate how portions of the bag fold in and out during deflation.

FIG. 6B is a top down partial view of an air bag 116 in a folded configuration illustrating the relative relationship of preferentially folded panels of FIG. 6A along with the clearance between various windows in a when the air bag is in a nearly flat or preferentially folded configuration. Clearance 128 between windows 117 in the flattened condition contribute to reliable bag 116 collapse without window 117, 141 folding and creasing. As seen by review of FIGs. 6A and 6B, there is provided a DAP unweighting bag where none of the windows fold. As best seen in FIG. 6B, the windows 141a, b and c are aligned because of the mountain-valley and inward-outward folding technique described herein (see, e.g., 129, 130 fold indicating arrows in FIGs. 5B and 5C). Similarly, rear windows 117a and 117b are configured to fold over so that DAP bag windows creaser are reduced or eliminated. Stanchions 102 and user entry point/seal interface 344 show the constraints that the side windows 141 must fit within as bag 116 collapses and folds.

Still further details and alternatives of the various embodiments of the DAP unweighting bag described herein may provide designs where side window heights between pleated sections are less than the spacing between the cockpit supports and the cockpit user opening. In still other configurations, there is a DAP unweighting bag where pleated sections are attached to cockpit supports in a vertically slide-able manner. Cleats, clips, rollers and the like may be attached for this purpose.

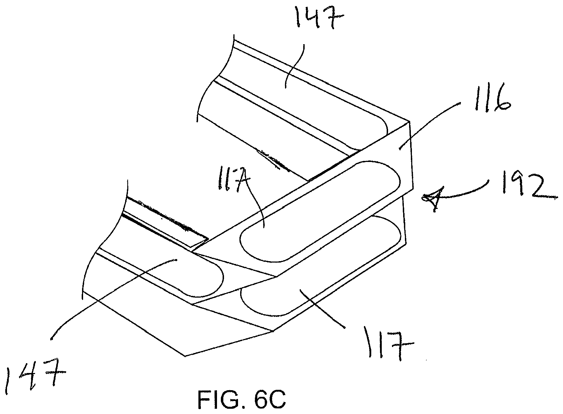

Still further modifications and alternatives are possible for a more stream lined or low step height DAP pressure bag profile. FIG. 6C is an isometric view of a portion of an embodiment of a differential air pressure bag 116 having modified fold lines. The fold lines and window 117 positions in this embodiment cause an accordion folding action 192 when the cockpit is lowered to permit a user 31 to exit the system. As a result of the compact nature of the accordion fold action there is a reduced step height when the cockpit 102 is lowered.

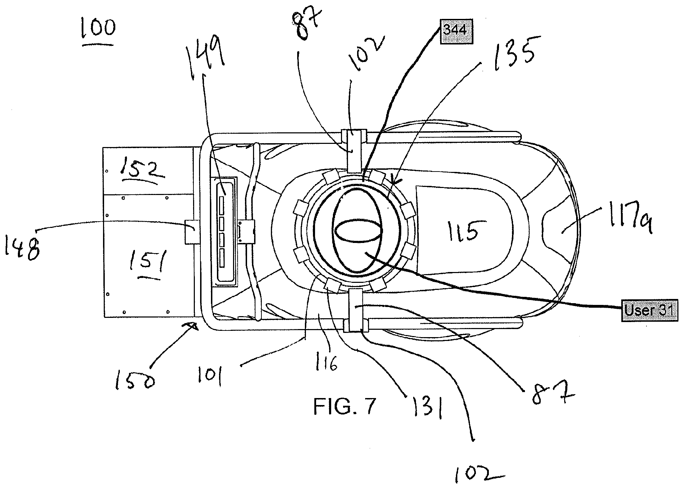

FIG. 7 is a top down view of the differential air pressure system 100 in FIG. 5A illustrating one configuration of air bag 116 attachment points 131 for coupling the air bag 116 to the cockpit ring assembly 102. Bag 116 is attached to a cockpit ring 135 at multiple points 131 to preserve the round shape of the opening in bag 116. The multiple points 131 may include any of a number of different types of attachment mechanism, strap, band, fastener, belt, clip, hook and the like suited to maintaining the bag 116 in position relative to and supported by the cockpit ring 135 and cockpit support mechanism 102. More or fewer attachments 131 may be provided so as to permit conformity between the bag 116 and support ring 135 and support mechanism 102.

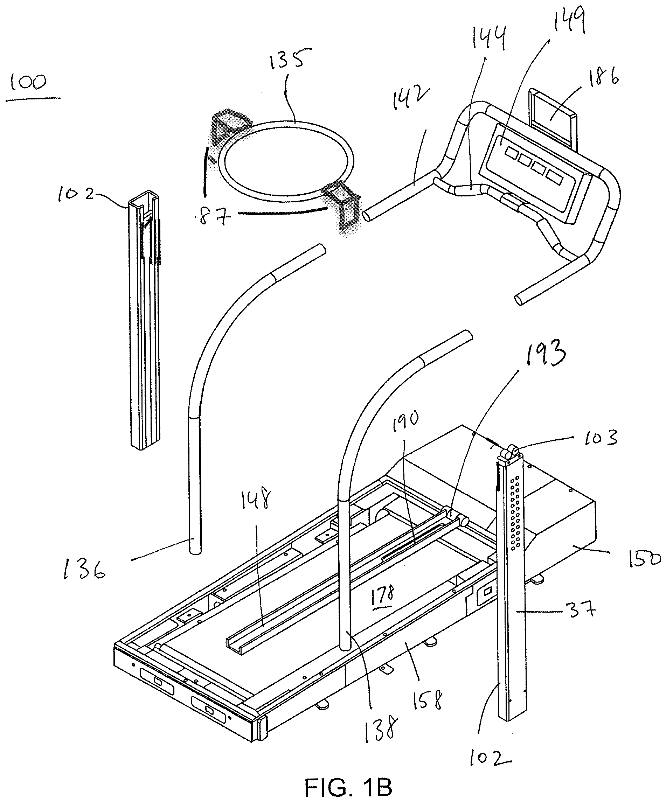

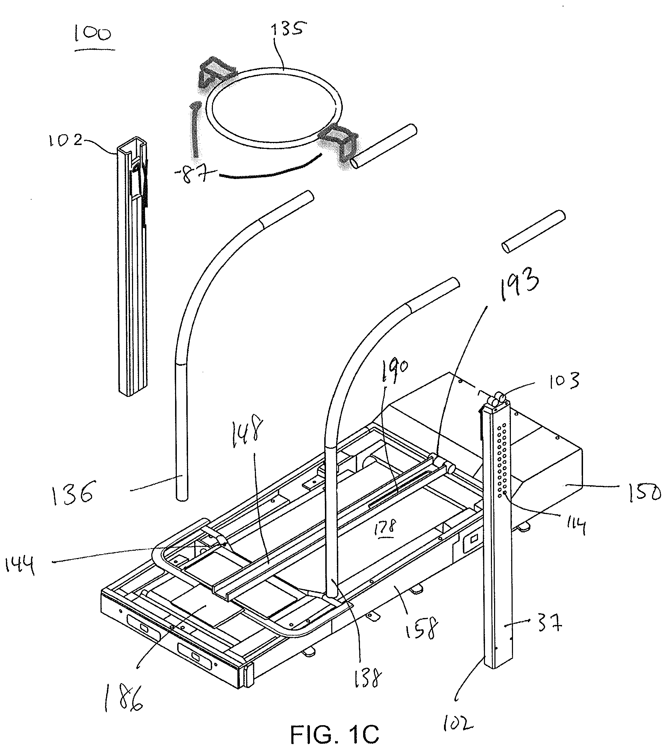

The DAP systems employing the inventive integrated treadmill base have a lower step height than DAP systems having a pressure control system and cockpit surrounding a standalone treadmill. This is especially important for low mobility users. In addition, the use of center bag and cockpit support stanchions with removable hard rails may permit the embodiments described herein to be assembled and tested and then partially dissembled for shipping. By lowering the overall height of the DAP system for shipping and installation, installation techniques may be simplified since a requirement for a high or wide door opening is no longer required. Shipping of DAP systems is also potentially less expensive since the lowered height of the system lends to the use of smaller shipping containers. FIGs. 1B, 1C and 1D each illustrate various DAP system configurations with removable and/or folding components to reduce shipping height.

FIG. 1B is an isometric view of the differential air pressure system of FIG. 1A configured for removal of railings 136, 138 and stanchions 102. The front railings 142, 144 user interface 149 and screen 186 are also removed for compact storage or shipping. In addition, front stanchion 148 may include a hinge 193 allowing the front stanchion to fold down onto treadmill belt 178.

FIG. 1C is an isometric view of the differential air pressure system of FIG. 1A in an alternative configuration for removal of railings and a folding user interface and screen for compact storage or shipping. FIG. 1C is similarly configured to FIG. 1B. However, in the embodiment of FIG. 1C, the front railings 142, 144 user control interface 149 and touch screen 186 remain attached to hinged front stanchion 148 and fold down as shown to treadmill belt 178.

FIG. 1D is an isometric view of the differential air pressure system of FIG. 23A in an alternative configuration for removal of railings and a folding user interface and screen for compact storage or shipping. Additional details of this differential air pressure system embodiment are further described below with regard to FIGs. 22A-23A. In this view the side stanchions and rails have been removed. As with FIG. 1C, a hinge (not shown) permits front stanchion 356, held rigidly in place by fasteners 355, to rotate down towards belt 178 for reduced height by removing the fasteners. Alternatively, hinge 354 may be disassembled, allowing all upper components to be removed from the integrated base 150 for reduced height shipping.

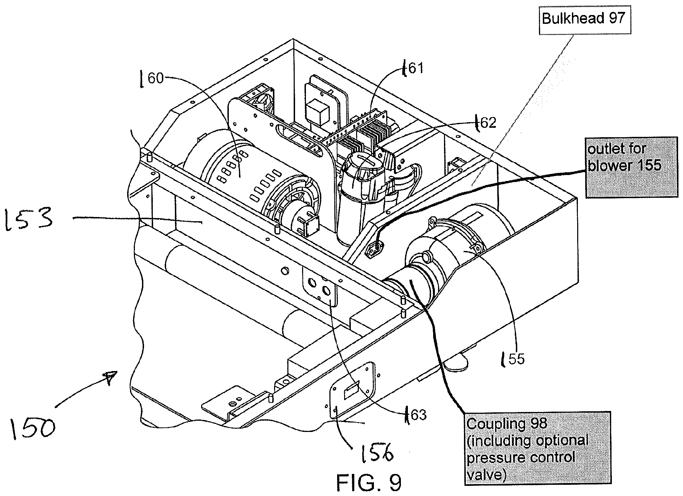

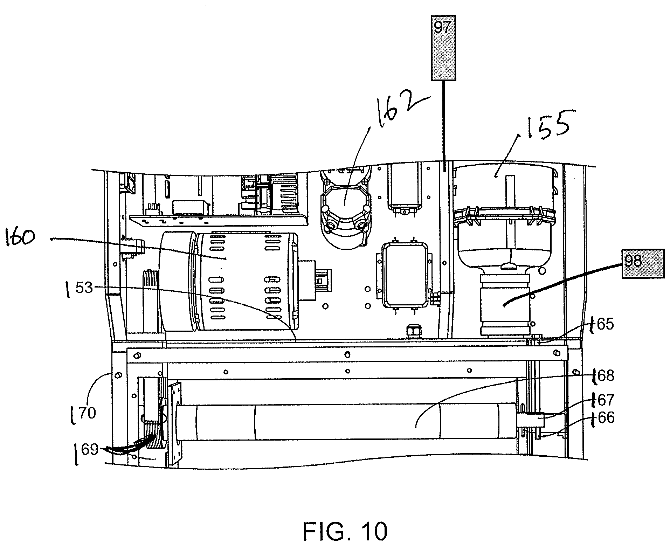

FIG. 8 is a perspective view of an embodiment of a treadmill base 150 with service covers 151, 152 removed to show components within a user serviceable component area (see FIGs. 9 and 10) outside of a non-user serviceable component area within air tight base frame 107. A pressure wall 153 separates the pressurized volume portion from the non-pressurized portion. Various details of the use and operation of treadmill based DAP therapy systems, such as would be modified or adapted according to one or more of the various embodiments described herein is made by reference to the Model P200 and the Model M320 DAP systems commercially available from AlterG, Inc. of Fremont, California. In addition, various details of the system components and operation of exemplary DAP systems and various operations of treadmill based DAP therapy systems, such as would be modified or adapted according to one or more of the various embodiments described herein, is made by reference to commonly assigned U.S. Patent 7,591,795; U.S. Patent Application Publication 2011/0098615; and U.S. Patent Application publication 2011/0120567, each of which is incorporated herein by reference in its entirety for all purposes.

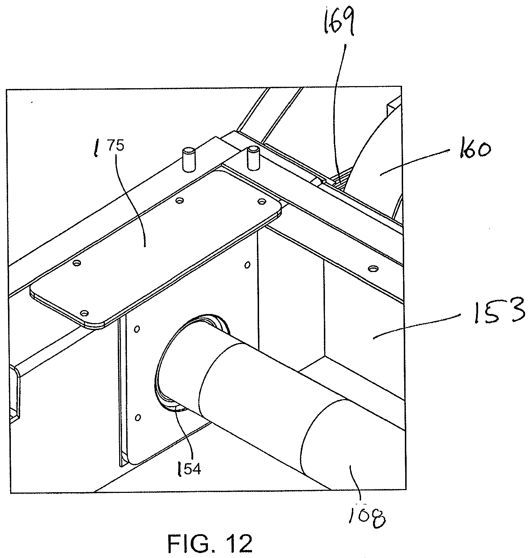

Service cover 151 protects users from non-user serviceable components. Blower cover 152 allows user safe access to user replaceable blower 155. Air pressure used to unweight the user is maintained by airtight base frame 157. A front pressure wall 153 separates the pressurized volume (i.e., within the DAP bag 116) from the unpressurized service areas. A rotating front roller seal 154 is provided around the front drive roller 168 and is better seen in the views of FIGs. 10, 12. Side and rear airtight access doors 156, 159provide access to roller adjustments as best seen in FIGs. 10 and 11A. A flexible pressure chamber (such as DAP bag 116, not shown) is sealed to base 157 using clamping bars 158. Four clamping bars 158 are shown in FIG. 8.

FIG. 9 is an enlarged perspective view of a forward portion of the treadmill base 157 in FIG. 8. This view further illustrates components within the serviceable and non-serviceable components and the bulkhead 97 separating those two areas. The cover plates (shown above the respective portions of the non-pressure area in FIG. 8) are removed for clarity.

Non user-serviceable components comprise a treadmill motor 160, control electronics 161, and an incline motor assembly 162. In a separate user accessible compartment, separated by bulkhead 97, blower motor 155 is easily exchanged when required. Bulkhead connector 163 in pressure bulkhead 153 allows electrical signals to pass between the pressurized and non-pressurized portions of the base. An electrical receptacle 99 is provided in bulkhead 97 for use with blower assembly 155 or other components. A coupling 98 is provided between the pressure system blower and the pressurized portion of the base. In one embodiment, the blower output is ported directly into the pressurized portion of the base via a connection in pressure bulkhead 153. Additionally or optionally, the coupling 98 may include a valve operated under control of the pressure control system as part of providing the desired level of unweighting assistance.

FIG. 10 is a top down view of the forward portion of the treadmill base shown in FIG. 9. Front roller 168 is driven via drive belt 169 via motor 160. To adjust belt tracking, the angle of front roller 168 is changed by rotating adjustment screw 166 to adjust belt tracking. Since the far end of the front roller is fixed at shaft end attachment pivot point 170, rotating adjustment screw 166 causes floating shaft end 167 to move relative to fixed pivot point 170, effecting the desired angular adjustment. Angle adjustment access 165 is on the non-pressurized side of front pressure wall 153, allowing adjustment to be performed without disassembly of the pressure chamber.

FIG. 11A is a top down view of a rear portion of the treadmill base 150 showing the relationship of the pressure seal accessible roller angle and belt tension adjustment screws 171 and the relative position to the rear bulk head wall or pressure wall 174. Also shown are portions of the bag pressure seal frame 158 along the rear most perimeter of the treadmill base 157. Rear roller angle screw access 172 is shown in position relative to each screw 171 and the pressure wall 174.

FIG. 11B is a rearward looking perspective view of the treadmill rear portion of FIG. 11A illustrating one of several alternative camera 34 or camera with mount 185 locations for a rear mounted camera located within the pressure controlled volume of the treadmill base.

Returning to FIG. 11A, in a manner similar to the front roller angle adjustment, rear roller 173 is oriented by two angle adjustment screws 171, which pierce the rear pressure wall 174 and are accessible external to the pressurized volume at access points 172. It is to be appreciated that the adjustment screws or other suitable implement in a sealed engagement with the base provide for an airtight, externally accessible treadmill adjustments. The treadmill adjustments may include, for example, tracking angle adjustments or belt tightening and may be implanted on one or both of the front and the rear treadmill rollers.

FIG. 12 is an enlarged view of the front left portion of the treadmill base of FIG. 8 with the treadmill belt removed.

A rotating shaft seal 154 maintains a sliding contact with front roller 168 in order to maintain air pressure within the pressurized chamber. Belt access door 175 provides access to drive belt 169 for installation and removal. The drive belt 169 is best seen in FIG. 10. Door 175 has an airtight seal to frame 157. Seal 154 can be either a lip seal that maintains contact with front roller 168, or a labyrinth seal that does not require contact or other suitable rotating shaft pressure seal.

FIG. 13 is a top down view between the front 168 and rear 173 rollers of the treadmill of FIG. 8. This view shows the deck 177 below the top surface of belt 178 is suspended by deck mounts 176. This view shows the relative locations of the load cells/sensors as well as the available support areas within the pressure seal frame available for mounting other additional components or accessories within the treadmill pressure volume. Also shown is one of several possible locations for a within pressure volume treadmill deck mounted gait sensor 183 or appropriately configured gait metrology unit. In one exemplary embodiment the gait sensor 183 is an embodiment of gait measurement device described in PCT Application Ser. PCT/US2014/029578 titled, "Method of Gait Evaluation and Training with Differential Pressure System," filed on March 14, 2014, incorporated herein by reference in its entirely for all purposes.

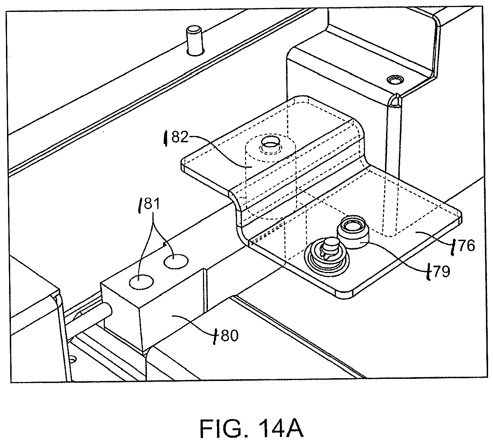

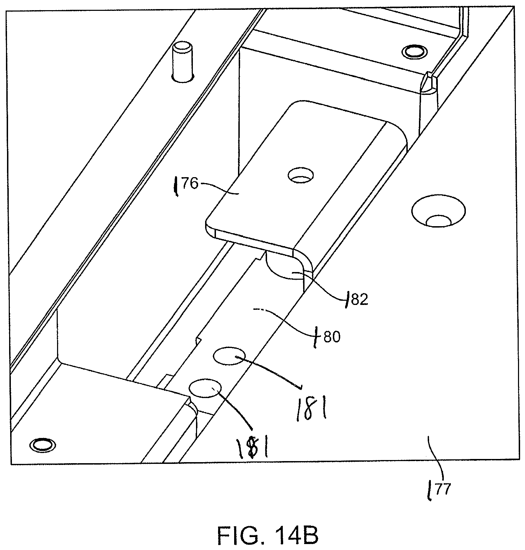

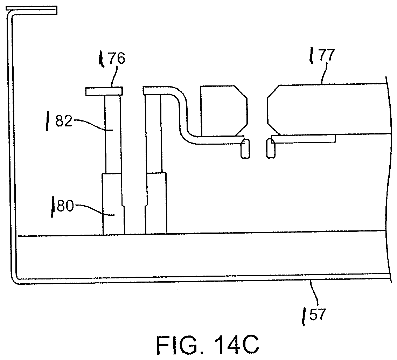

FIG. 14A is an enlarged perspective view of a lead cell and treadmill deck mount 180 of the treadmill base of FIG. 8 with the treadmill tread 178 removed. FIG. 14B is a perspective view similar to FIG. 14A with the treadmill deck 177 in place to illustrate the comparable height between the treadmill tread height and the overall height of a load cell 180, a damper 182 and a deck mount bracket 176. FIG. 14C is a cross section view of the mount and bracket 176 of FIG. 14B. Dimensions of the associated components may be a damper 182 with a height of about 1.6" from the top of the load cell 180 to the deck mount 176. The load cell 180 may be about 1.2" tall.

Deck mounts 176 are attached to deck 177 at attachment points 179. Deck mounts 176 are offset such that load cells 180 and dampers 182 can be mounted beside deck 177 and do not add vertical height to the overall assembly. Load cells 180 are attached to base 157 at attachment points 181. In the current embodiment, all deck mounts 176 are attached to load cells 180 through dampers 182. In an alternate embodiment that improves gait signal quality, front load cells 180 and deck mounts 176 are attached via dampers 182 as shown while rear load cells 180 and deck mounts 176 are rigidly coupled. Thereafter, only rear load cells are used during treadmill operation for gait measurements. This arrangement would also lessen sensitivity to the tolerance stack-up between base 157 and deck 177 causing variations in load cell zero readings.

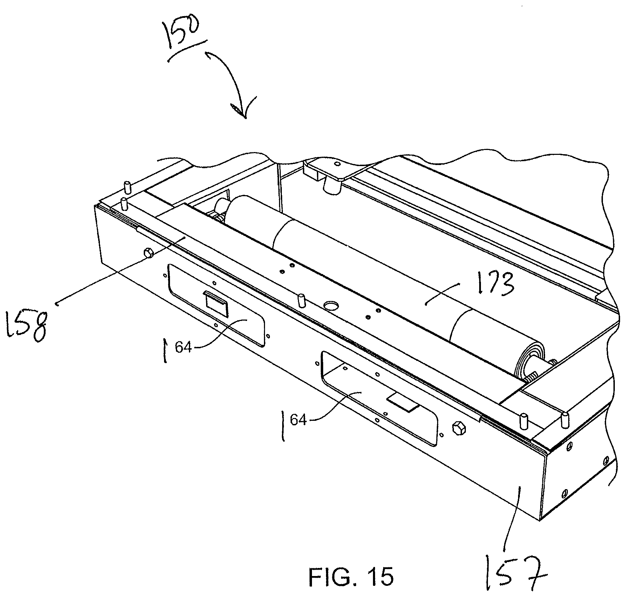

FIG. 15 is an enlarged perspective view of a rear portion of the treadmill base of FIG. 8 illustrating a pair of pressure tight cleanout doors 164 in a shut (left) and an open (right) position. The cleanout doors 164 are larger than openings in frame 157 and mounted to the inside thereof. Doors 164 are sealed to the frame 157 by threaded fasteners. In an alternate embodiment, the door gaskets are self-actuating by the pressure supplied by blower 155, allowing only a small spring force to hold the doors shut.

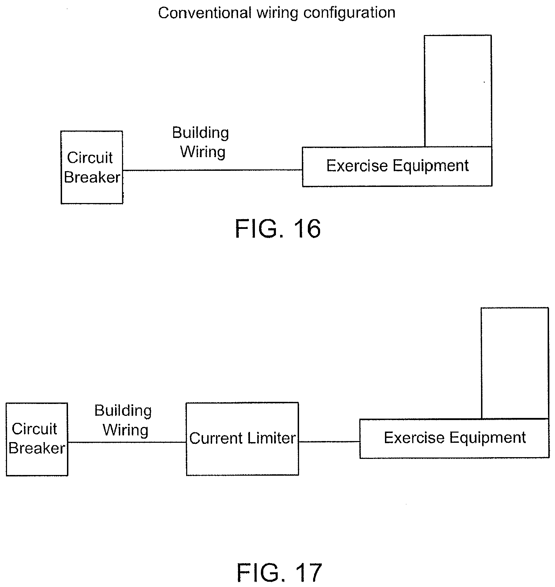

FIG. 16 is a block diagram illustrating a conventional wiring configuration used for typical exercise equipment installation.

FIG. 17 is a block diagram illustrating the use of a current limiter embodiment as described herein in position between the building wiring and the exercise equipment. The control electronics (as best seen in FIG. 9) includes computer readable code or electronic instructions or control circuits related to the control, operation and interoperation of the various components of the DAP system. In some embodiments, there is also provided sensing and control circuitry to mitigate or control current surge (i.e., referred to generally as a current limiter) as various components of the DAP system are powered on, powered off, adjusted or otherwise controlled in order to control, maintain or adjust the DAP environment provided by a DAP system embodiment described herein. In one embodiment of an exemplary current limiter, the DAP control electronics includes an automatic current inrush and RMS limiting circuit to reduce/eliminate circuit breaker overload, allowing reduced performance at reduced current.

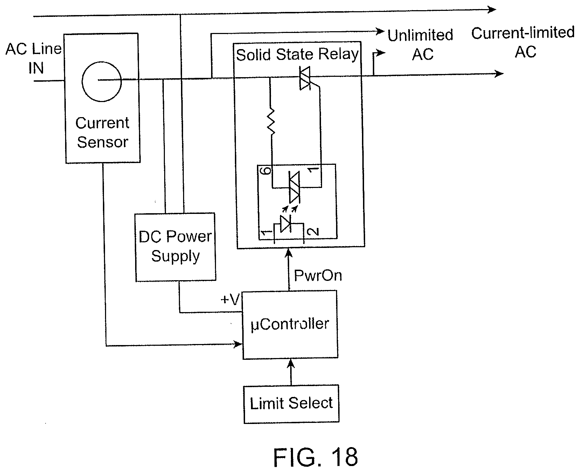

FIG. 18 is a block diagram of an exemplary current limiter according to one embodiment for use as a component integrated into the treadmill of FIG. 8 or for use as a separate component electrically between a piece of electrical exercise equipment and the source of electrical power for that equipment. In one embodiment, there is an AC current sensor, microcontroller and one or more solid state relays. The microcontroller receives the current input from the current sensor, computes the RMS average of the current, compares that to a limit, and then controls the relays to briefly cut the power to one or more connected devices in order to assure that the total current stays within the preset limit. In an additional aspect, the detection of overcurrent conditions causes the output to be disconnected and not automatically reconnected, effectively acting as a precision breaker between the building breaker and the equipment. In still another aspect, the circuit can also communicate the measured current through a connection such as an I2C serial connection to another device that can log or analyze the current history. That current history may be used to determine an increase in the current consumption over time. The collected information may be used for analytics of system performance over time such as, for example, indications of wear or abnormal conditions requiring service of the associated device.

Existing DAP systems incline the treadmill independently from the lower body pressure chamber. To reduce cost and complexity, embodiments of the integrated base DAP systems incline both.

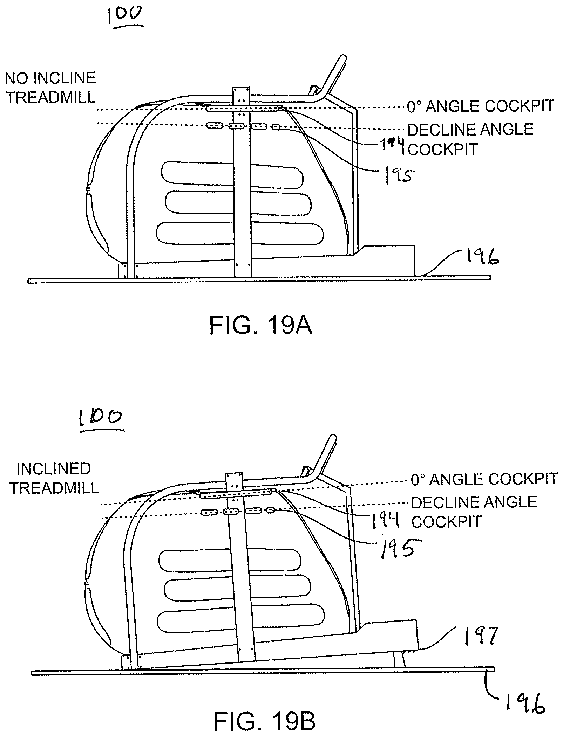

FIG. 19A illustrates a side view of an embodiment of a differential air pressure system 100 superimposing the relative position of a zero angle cockpit 194 and a declined angle cockpit 195 with the treadmill of the differential air pressure system without any incline angle relative to the ground 196. FIG. 19B illustrates a side view of an embodiment of a differential air pressure system superimposing the relative position of a zero angle cockpit and a declined angle cockpit as in FIG. 19A with the treadmill of the differential air pressure system at an inclined angle 197. The cockpits 194, 195 are shown vertically offset to simplify comparisons. As best seen in FIG. 19A, 0° angle cockpit 194 is shown parallel to the ground 196 when the DAP system 100 is not inclined. When the systems is inclined to a position or angle 197, the cockpit 194 will also be inclined by about the same amount relative to the floor 196 as illustrated in FIG. 19B.

To improve comfort at high incline angles, alternate cockpit orientations may be provided or cockpit leveling or level sensing mechanisms may be provided. In the illustrative embodiment of FIG. 19A the alternative cockpit orientation is set to a decline angle. In one aspect, the decline angle cockpit 195 is tilted downward (i.e., cockpit higher towards rear of machine, lower towards user interface or front) relative to the floor 196 by an angle that is a fraction of the total incline or expected incline range 197. In this way, when the system moves to the total incline angle 197 the decline cockpit 195 is tilted upwards as shown in FIG. 19B by a fraction of the incline angle 197. In one exemplary embodiment, the total incline angle 197 is 7° and the decline angle cockpit is pitched downward by about 3°, 3.5° or about 4°.

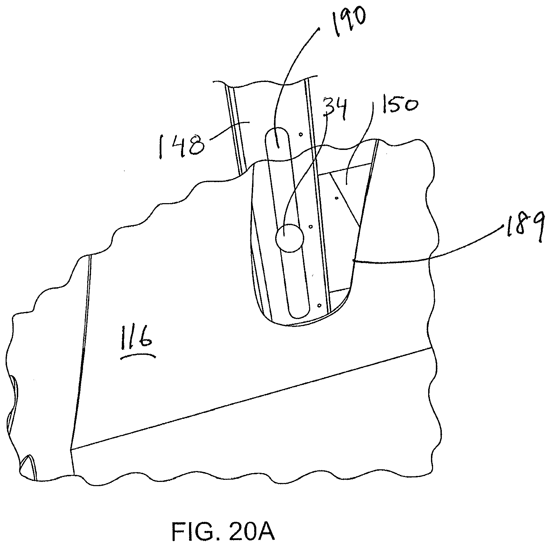

FIG. 20A is a view from within a bag 116 through a front window 189 aligned with a camera 34 housed within a front support or stanchion 148 of a differential air pressure system. The stanchion includes a camera opening 190. The camera 34 may be a video camera positioned relative to the window 189 and the guide 190 to view and record a user's feet, gait or other characteristics while positioned within DAP bag 116. In one aspect, the camera 34 may be motorized to adjust position relative to camera slot 190.

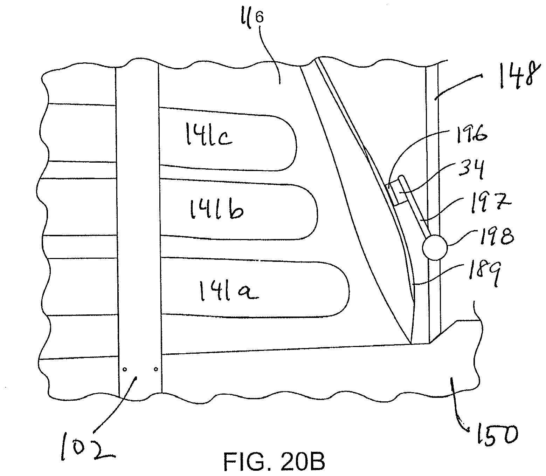

FIG. 20B is a partial side view of a differential air pressure system showing the alignment of a bag front window 189 to a biased camera mount supported by or within the front support or stanchion 148 of the differential air pressure system. In existing gait monitoring designs, a front camera, vital or gait assessment, is located approximately 4-6 inches above the treadmill deck and close to the user, inside the pressure chamber. This placement often leads to visual distortions when viewing the resulting images. To address this deficiency, camera 34 and reflection eliminating light shield 196 are compliantly biased against window 189 by camera support 197 and pivot/spring 198, allowing for glare-free recording and a natural viewing perspective via a camera mount that can compensate for inflation and deflation of pressure chamber 116.

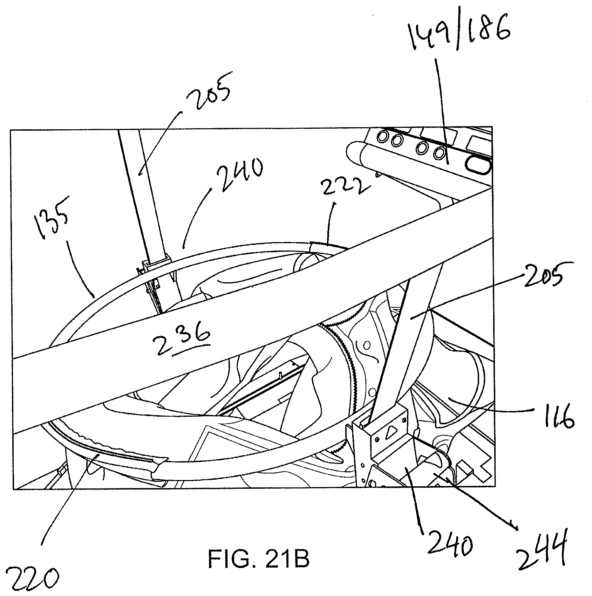

FIG. 21A is an isometric view of an alternative differential air pressure system 200 having a strap based cockpit height adjustment system 240 along with a user input 149/186 supported between the side rails and a front support rail 236, 242. FIG. 21B is a close up view of the strap 205 and cockpit mechanism 240 and the interface with ring 135 of the differential air pressure system of FIG. 21A.

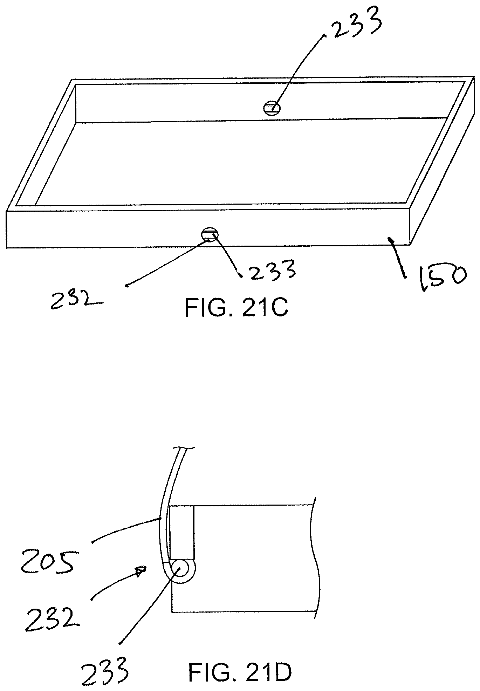

Considering FIGs. 21A and 21B together, the function of the strap based cockpit design of DAP system 200 can be better appreciated. Straps 205 extend from and between an upper railing 236 and the integrated base 150. The terminal ends of straps 205 may be secured using any suitable technique. One technique is illustrated in FIGs. 21C and 21D.

FIG. 21C is a perspective view of the system base 150 of the differential air pressure system in FIG. 21A and 21B showing the attachment openings 232 for the cockpit adjustment straps 205. FIG. 21D is a section view through an attachment opening 232 of FIG. 21C with the strap 205 in position around a pin 233.

Returning to FIGs. 21A and 21B, a user enters the system 200 over the DAP bag 116 and into the user interface within cockpit ring 135. The latch or locking lever 244 of the cockpit height adjustment mechanism 240 is moved to release strap 205 permitting movement of the cockpit ring 135 and attached DAP bag 116 to move along strap 205. Once the cockpit ring 135 is positioned appropriately with respect to the user, the locking lever 244 is used to operate the height adjustment mechanism 240 to secure the position of the cockpit 135. The height adjustment mechanism 240 and locking lever 244 may also include any of a number of pins, sliders, ratchets, gears or other mechanical holders to engage and hold the strap 205 against the weight of the cockpit 135 and bag 116 as well as the operating process of the DAP system.

The strap based cockpit system 200 also illustrates a 2 connection point coupling between the cockpit ring and the DAP bag 116. In the illustrative embodiments of FIGs. 21A and 21B a forward 222 and aft 220 bag-ring attachment configuration is used. Bag 116 includes one or more windows as described elsewhere herein. FIG. 21A shows a window 210 shown in the side of DAP bag 116.

DAP system 200 also shows how a single integrate upper railing 236 may be used to support the top section of the cockpit. In the illustrated embodiment, top railing 236 is attached to the left and right rear portion of the base 150. The forward support of the upper railing 236 is provided via connection to the front railing 242. In contrast to other railing embodiments described herein, front railing 242 is attached to the left and right front portions of the base 150. In one embodiment the upper railing 236 and the front railing 242 are connected via a plate or other suitable joining mechanism. In another embodiment, the user interface 149/touch screen 186 is positioned between the railings 236, 242 and may include fittings to attach the railings as shown in FIG. 21A.

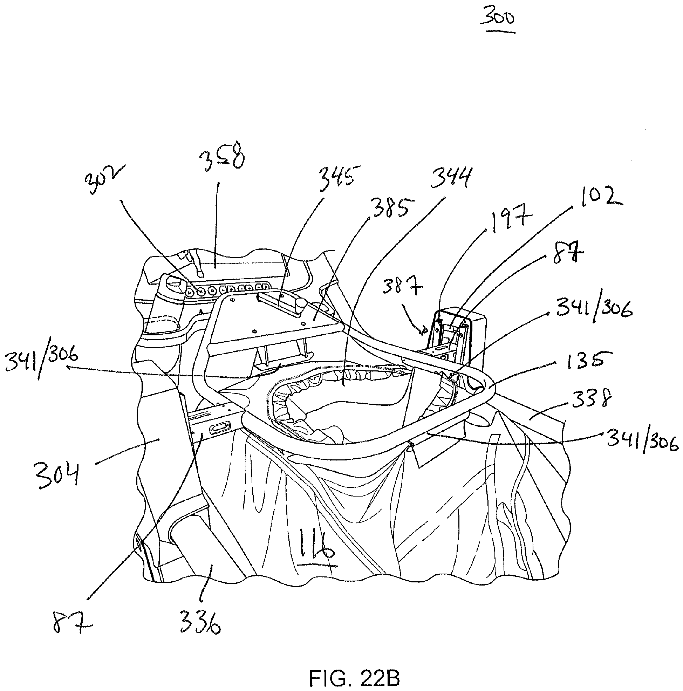

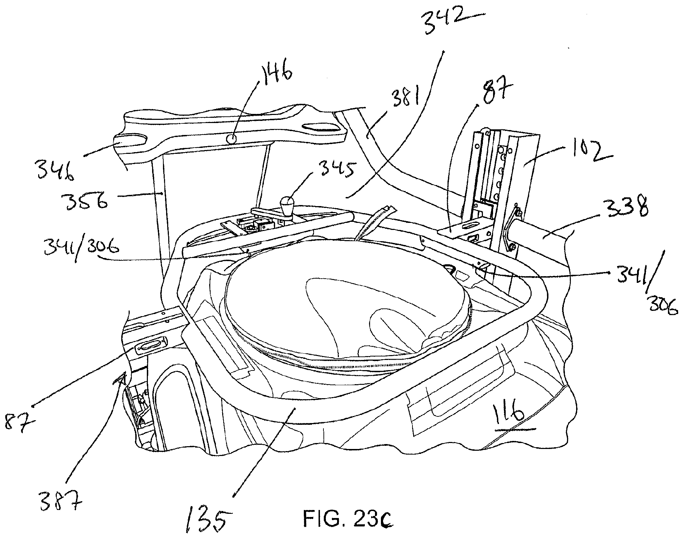

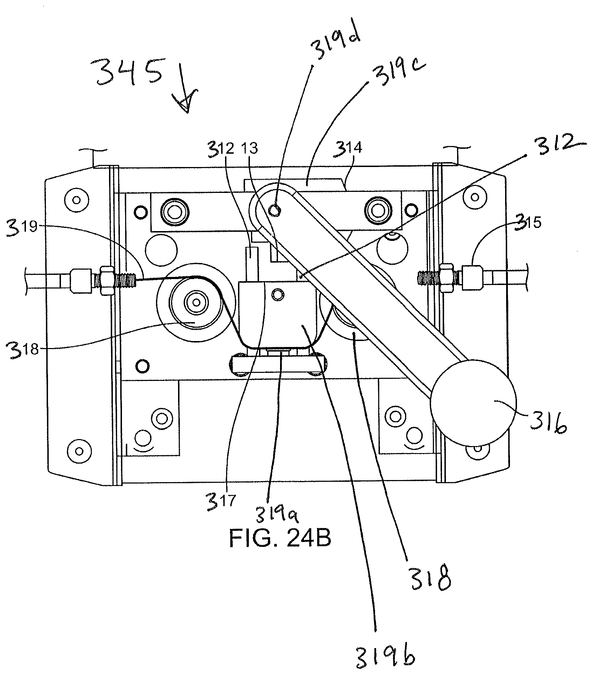

The DAP system 200 utilizes two separate latching actuators, enabling a therapist on either side of the system to assist a user in unlocking, positioning, and locking the cockpit (see trigger 104 and dual trigger latching actuator 98 in FIGs. 3 and 4.) Alternatively, in some DAP system embodiments, a single center latching actuator is utilized to release and lock the cockpit to the stanchions. For example, the illustrated DAP 300 embodiments provide this same functionality via a single latching actuator and corresponding actuation handle (345, FIG. 23C) positioned at the centerline of the system. Details of the single latching actuator are shown in FIG. 24B. Two exemplary cockpit profile configurations of the single latching actuator are provided. An exemplary inclined cockpit profile 385 is provided in FIGs. 22A and 22B. An exemplary flat cockpit profile 342 is shown in FIGs. 23A and 23D.

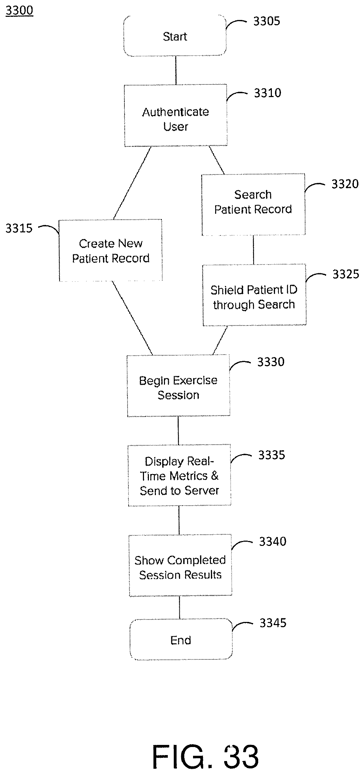

FIG. 23A is an isometric view of a differential air pressure system 300 embodiment having an flat profile 342 center actuated cockpit locking mechanism 345. A large touch screen user interface 358 and touch bar enable user interaction with the system using buttons, touch screens and a variety of graphical user interfaces (GUI) and a wide variety of other functions as described in greater detail below with regard to FIGs. 33-61. FIG. 23A also illustrates an alternative side rail and front stanchion. Left and right guide or hand rails 336, 338 are attached to a frame mount or rear rail retainer 309. The rear rail retainer 309 is aligned nearly parallel to the frame 157. The rear rails 336, 338 are attached to the retainer 309 and to a rear face or portion of stanchion 102. Left and right front rails 382, 381 are connected to the front face or portion of the stanchion 102 and also are used to support the user interface 358. A curved front stanchion 356 attached to base 150 also supports the user interface. The side rails and stanchions may be removed and the front stanchion folded down as illustrated in FIG. ID. This view also shows cup holders 303 that are adjacent to the user interface 358. A front facing or torso camera 349 is also shown adjacent to the user interface and display 358.

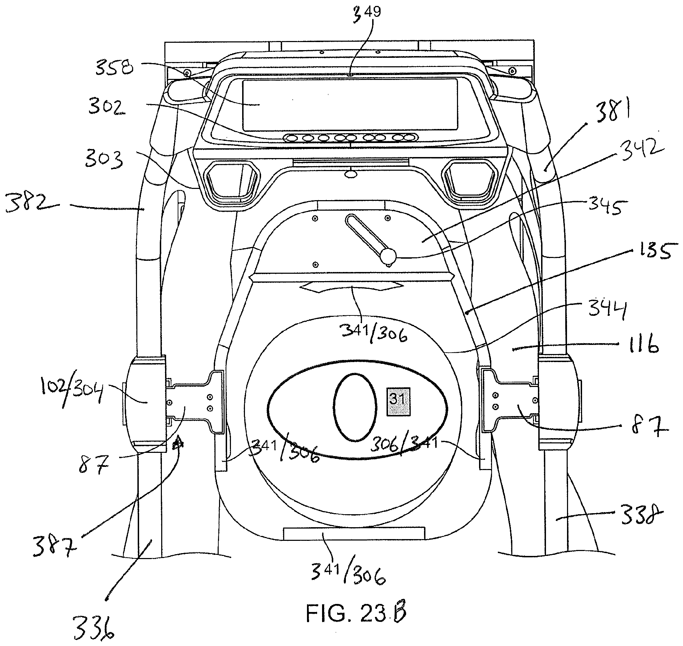

FIG. 23B is a top down view of the differential air pressure system of FIG. 23A showing the cockpit in an upper position in relation to the large screen user interface. The alignment of the user 31 to the display, cockpit locking mechanism and the left and right stanchions 102. In use, the user is positioned in alignment with the stanchions and the cockpit side arms. The cockpit locking mechanism cover is shown in place in this view. The DAP bag 116 with a user 31 within user entry point/seal interface 344 that is attached to cockpit frame 135 using bag cleat retainers 341 within cleat receiver 306. Four cleat retainers are shown, one each fore and aft and on left side and on right side adjacent to cockpit side arm 87. Left and right stanchions 102 are provided with covers 304. Additional details of the design and function of the user entry point/seal interface 344 may be appreciated by reference to U.S. Patent Application Publication No. US2011/0098615, incorporated herein by reference in its entirety for all purposes.

FIG. 23C is a top perspective view of the differential air pressure system of FIG. 23A showing a cockpit cover over the user entry point/seal interface 344 and the cockpit in a lowered position in relation to the large screen user interface. The cover of the cockpit locking mechanism 345 and stanchion cover 304 are removed in this view. A portion of the locking pin and roller assembly 387 within the interior of a stanchion 102 is also shown in this view.

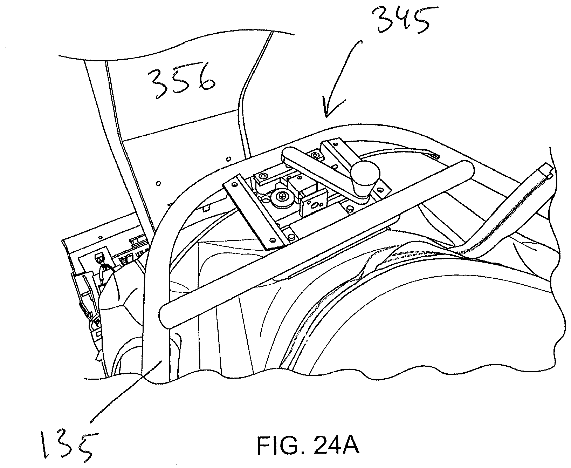

FIG. 24A is a top isometric view of the center mounted cockpit locking device 345 of FIG. 23C with the locking mechanism cover removed. This view also shows the position of the front stanchion 356 to the cockpit 135. FIG. 24B is a close up top down view of the center operated cockpit locking device 345 of FIG. 24A. Operation of the single lever cockpit locking actuator 345 will be described in relation to FIG. 24B. A cable 319 connects to the left and right locking pin assembly 387. Cable 319 is guided by pulleys 318, around cable control block 319b. Cable clamping fastener 319a locks cable 319 to cable control block 319b. Cable length compensators 315 allow for independent adjustment of cable path length on either side of the latching mechanism. Cable control block 319b slides on guide rails 312. During normal operations, cable control block cam face 317 is always in contact with either pivoting cam block 319c. As locking lever 316 is rotated about pivot point 319d, pivoting cam block 319c presents either cam surface 314 or cam surface 313 to cable control block cam surface 317. When cam surface 314 is presented, cable control block 319b is forced downward and cable 319 pulls inward from both sides. This cable movement is used to withdraw locking pins 113 (see FIG. 24C). When cam surface 313 is presented, cable control block 319b moves upwards and cable feeds outwards to both sides. This cable movement permits latch engagement spring 328 to push out pins 113 (towards locking position). See FIG. 24C.

FIG. 24C is a top down view of the cockpit locking pin mechanism 387 that is actuated by the center-mounted cockpit locking device mechanism 345 of FIG. 24B.

FIG. 24C shows the locking pin assembly 387 and the stanchion 102 in cross section. Actuator cable 319 is carried to the locking pin assembly 387 via actuator cable housing 339. Cockpit assembly is stabilized as it moves up and down the stanchions by guide rollers 332, 334, 335 and 336. Weight of the cockpit assembly and attached bag are counterbalanced by constant force springs 333 which attach to the top of the left and right stanchions 102. Pins 113 in the locking pin assemblies 387 engage with pin openings 114 in locking plate 37. Locking plates 37 are in a fixed position within each of the left and right stanchions 102.

FIG. 24C shows details of a left side locking pin and roller assembly 387. Lock actuation cable 319 is guided by pulley 323 and fixedly attached to locking pin block 329. Latch engagement spring 328 acts between fixed plate stop 327 and sliding pin block 329 provide an outward biasing to force to sliding pin block 329/pins 113 towards holes 114 in locking plate 337. When operation of the cockpit locking actuator 345 pulls the lock actuation cable 319 the latch engagement spring 328 is compressed moving the pin block 329 and pins 113 away from locking plate 37. Once the locking ins 113 are withdrawn from the holes 114 in locking plate 37 the cockpit assembly is unlocked and free to slide vertically along stanchion 102.

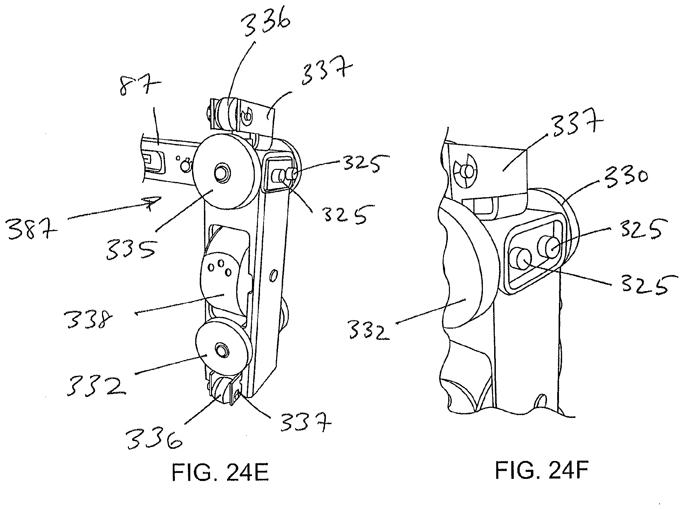

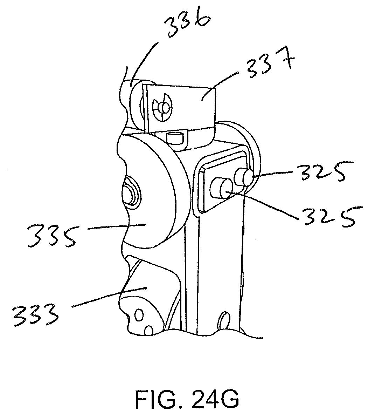

The side arm 87 is attached to the cockpit frame 135 and supports the locking pin and roller assembly 387. Also shown in this view are the cover 304, stanchion 102 and bag folding cleat channel 191. Fore and aft rollers 321, 331 and lateral guide rollers 322, 330 are also shown in this view in relation to stanchion 102. Additional details of the guide rollers and other configurations may be appreciated in the views of FIGs. 24E, 24F, and 24G. In use, the guide rollers are used to ease the vertical movement of the cockpit by ensuring smooth movement of the cockpit relative to the stanchion 102.

FIG. 24C will now be used to explain the operation of the locking pin and roller assembly 387 when the single level cockpit locking actuator 345 is used. Lock actuation cable 319 is within cable sheath 324 that runs within cockpit frame 135. Cable 319 rounds pulley 323 and terminates at the locking pin block 329. A latch engagement spring 328 is positioned between locking pin block 329 and fixed spring stop 327. The latch engagement spring 328 maintains an outward (i.e., locking pins 113 engaged) bias against the locking pin block 329 and a tension on cable 319. When the lever 316 of actuator 345 is moved to release, the tension on cable 319 over comes the bias of spring 328 and moves pins 113 and block 329 into a disengaged or pin retracted configuration. In the disengaged or pin retracted configuration the cockpit and bag are free to move vertically along stanchion 102. When in the engaged configuration, pins 113 engage with openings 114 in locking plate 37.

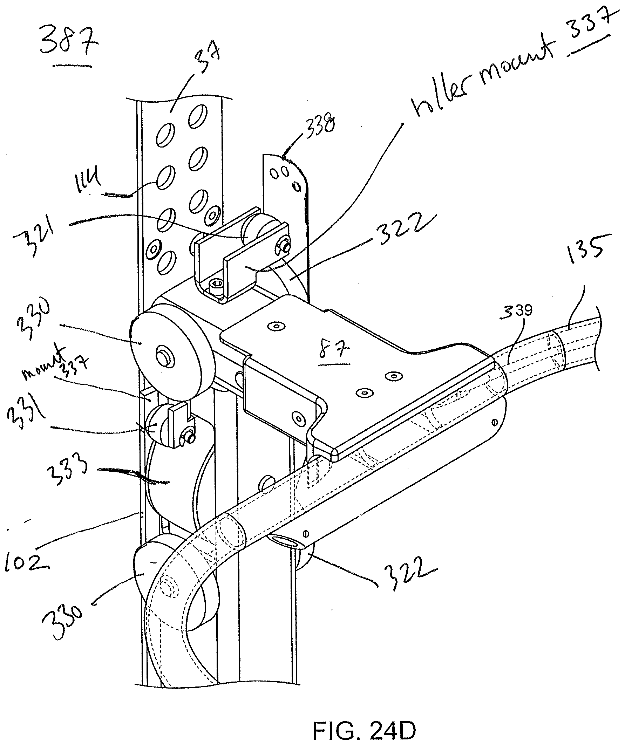

FIG. 24D is an isometric view of the locking pin mechanism in the left side stanchion 102 of FIG. 23B with the stanchion walls removed to show the details of an exemplary cockpit guide roller. FIG. 24D shows the left locking pin and assembly 387 that travels up and down the left side stanchion 102 locking the cockpit assembly at different vertical distances above the treadmill deck. The lateral guide rollers 322, 330 are shown in position vertically in relation to cockpit counter balance spring 333. The lateral guide rollers are sized and configured to roll within stanchion 102. Fore/aft guide rollers 321, 331 and mounts 337 are used to ensure smooth movement and absorb forces produced by operation of spring 333 and vertical cockpit movement.

FIGs. 24E, 24F and 24G are various views of the guide roller, spring 333 and pins 345 of the locking pin and roller assembly 387. FIG. 24E is a front view of the guide roller shown in FIG. 24D.

FIGs. 24F and 24G are perspective side views of the cockpit locking pins of FIG. 24D with the locking plate removed with the pins retracted (FIG. 24F) to permit cockpit movement and extended (FIG. 24G) to lock cockpit to locking plate.

FIG. 22A is a side view of a differential air pressure system 300 embodiment having an inclined profile 385 center actuated cockpit locking mechanism 345, a large touch screen user interface and a curved front stanchion.

FIG. 22B is an isometric view of the differential air pressure system 300 embodiment of FIG. 22A showing the having an inclined profile 385 center actuated cockpit locking mechanism 345 with the cockpit locked in a raised or in use height position. Also shown in this view are the large touch screen user interface and an external cleat guide 191 extending along the side stanchions 102.

### Compliant User Cockpit

During walking and especially during running, even on a treadmill, users naturally move up, down, side to side, fore, and aft. Because of this, it is important for comfort that the user not be tightly restrained in these axes. Laterally, it is ideal for resistance to build gradually so that the user receives tactile feedback as to their position within the cockpit without experiencing discomfort. To accomplish this, the transition between the rigid cockpit frame and the user connection is carefully designed. Furthermore, FIG. 23B shows stanchions 102 substantially in line horizontally with user 31 positioned within the user stabilizing and unweighting interface 344, minimizing the forces imposed by the pressurized bag 116 on cockpit 101. Bag 116 is secured to rigid cockpit frame 135 at bag retaining cleats, 341 within cleat receivers 306 at fore, aft, left and right positions. The four connection points between the bag 116 and the receivers 306 define a cockpit plane.

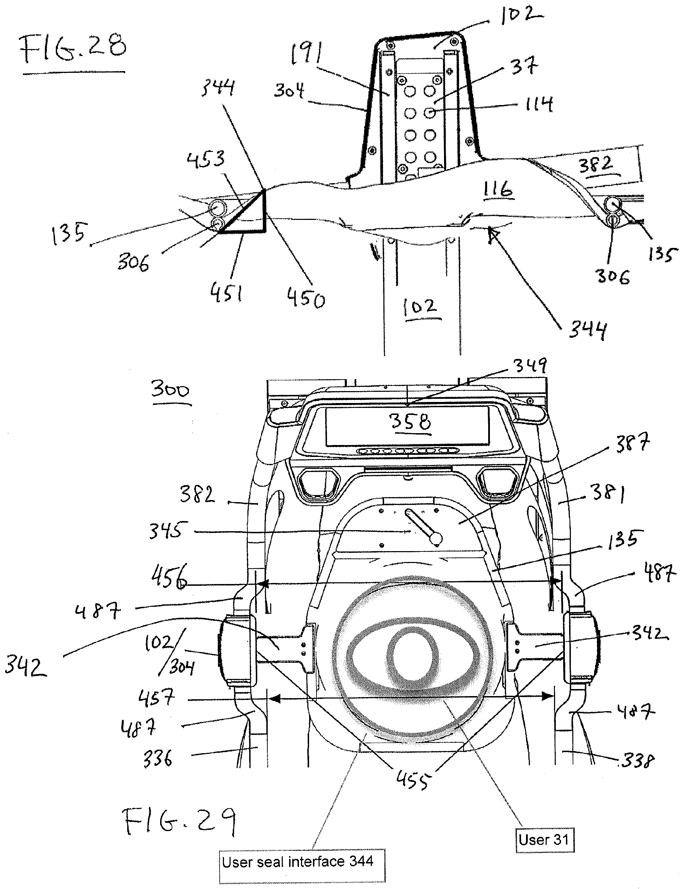

FIG. 28 is a side section view which shows the left side stanchion 102 and a cross section of the pressure bag 116 in the vicinity of the user entry point/seal interface 344. User entry point/seal interface 344 has an edge for engagement by zipper (not shown) in some embodiments to a user wearing a complementary pressure garment with a zipper. The user entry point/seal interface 344 is attached to the cockpit connection point 306 by a span of bag fabric 453. The span of fabric 453 has a length which is greater in length than the horizontal distance 451 between cockpit attachment point 306 and user entry point/seal interface 344. The additional material span allows the horizontal plane of the user entry point/seal interface 344 (extending forward from the user entry point/seal interface 344) to move both vertically and laterally with respect to the plane of the bag connection point 306 (i.e., a plane approximated by a line between aft connector 306 and forward connector 306.) In this way, the zipper plane connected to the user (plane with the user entry point/seal interface344) is displaced out of plane from the cockpit plane.

FIG. 29 is a top view of an alternative embodiment of DAP system 300. In this embodiment, the user cockpit has stanchions 102 spaced wider apart to allow for arm swing of the user 31 while running. While wider spacing is provided, the user remains in a general alignment with the cockpit support arms and the stanchions. The wider spacing between stanchions 102 is shown by spacing 456. The amount of spacing 456 is determined by the geometry of hand rail stanchion adapter 487. The forward adapter 487 is connected to the forward portion of stanchion 102 and the rear portion of front rails 382, 381. The rear adapter 487 is connected to the rear portion of the stanchion 102 and the forward portion of rear hand rails 336, 338. This design provides for arm swing while allowing for narrower spacing of front and rear hand rails as shown by spacing 457. In this way the hand rails aft of stanchions 102 may still be used as grips on hand rails before, during, and after exercise or therapy. The front and rear adapters illustrated in FIG. 29 are similarly sized and shaped. Modifications to one or both of the front and rear adapters is possible to provide custom size cockpits or various user interfaces depending upon the category of user that is using the machine. The front and rear adapter may be a separate piece or may also be integrally formed with the associated front or rear hand rail. Additionally, the additional spacing 456 between stanchions 102 may utilize a cockpit frame 135 and user entry point/seal interface 344 that is the same as with earlier described narrow stanchion spacing designs. In alternative aspects, cockpit side arms 87 may be expanded to compensate for the additional spacing alone or in combination with the size, geometry or shape of one or both of the cockpit ring 135 or the user entry point/seal interface 344.

FIG. 29 also shows the placement of pads 455 adjacent to user entry point/seal interface 344. Pads 455 are sized and positioned to cover exposed equipment adjacent to the user when positioned for use. Incidental contact with pad 455 provides feedback to the user to check arm swing when running or walking in the DAP system. Pad contact may serve as a useful reminder to maintain gait and good biomechanics while walking or running. Pads 455 may be sized and shaped in a variety of ways so as to cover portions of the stanchion 102, cleat guide 191 or any other hardware or surface.

### Low Cost Precision Alignment

Unweighting systems typically need to establish an adjustable cockpit height that can be locked in place once the desired position is reached. In pressurized systems, it is important that locking pins engage on both sides of the cockpit in order to distribute the forces applied to the cockpit by the pressurized system. In systems with discrete locking intervals and a cockpit that is held in a largely horizontal orientation, it is necessary that the alignment of the locking holes be such that the locking pins can easily engage with both right and left sets of locking holes simultaneously.

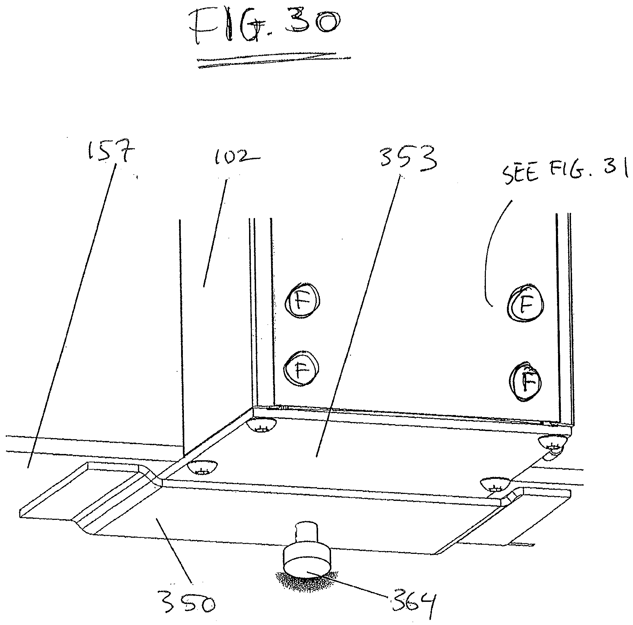

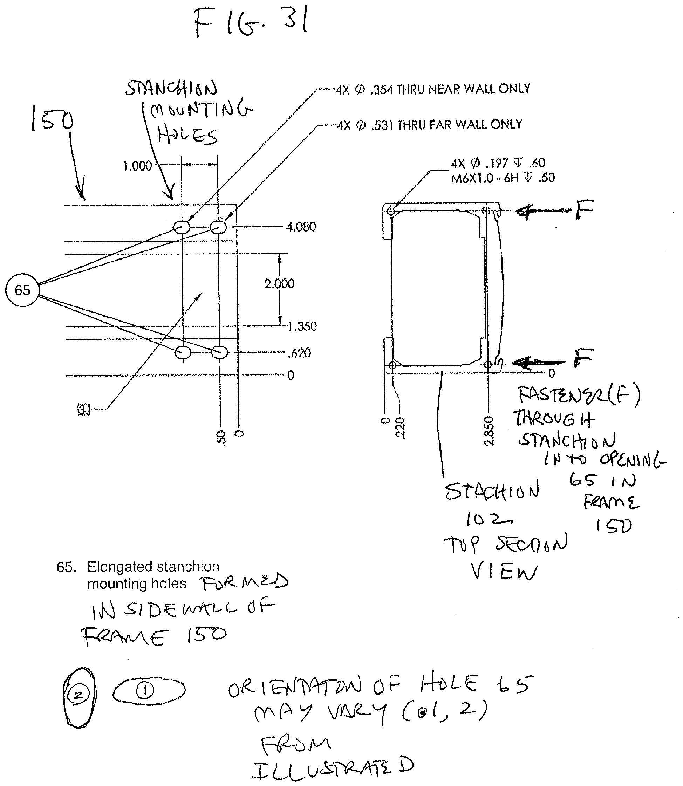

FIG. 30 shows alignment of a stanchion 102 with respect to the base 157. The fasteners F pass through the stanchions and attach via elongated openings 65 (see FIG. 31). Reference bracket 350 is attached to the base 150 sidewall 157 to provide the fore-aft positioning of the stanchion for cockpit placement. The stanchion mounting plate 353 is mounted to the bottom of the stanchion 102. During assembly, stanchion mounting plate 353 is inserted into the opening between stanchion reference bracket 350 and base 151. If tolerances on reference bracket 350 are sufficient, no further vertical alignment is necessary. To achieve better control, stanchion biasing member 364 can be used to force stanchion mounting plate 353 into contact with base 157 and into an alignment permitting fasteners F to be placed through stanchion as shown in FIG. 31 to provide proper vertical alignment between the left and the right stanchions and the base/floor.

Since mounting holes in base 157 are loosely positioned after punching, bending, and welding of the base 157, FIG. 31 shows slotted mounting holes 65 that allow for both mounting hole positioning and residual tolerances the stanchion mounting plates 353. Using the biasing member 364, the stanchion position can be adjusted so that fasteners F align with appropriate openings 65.

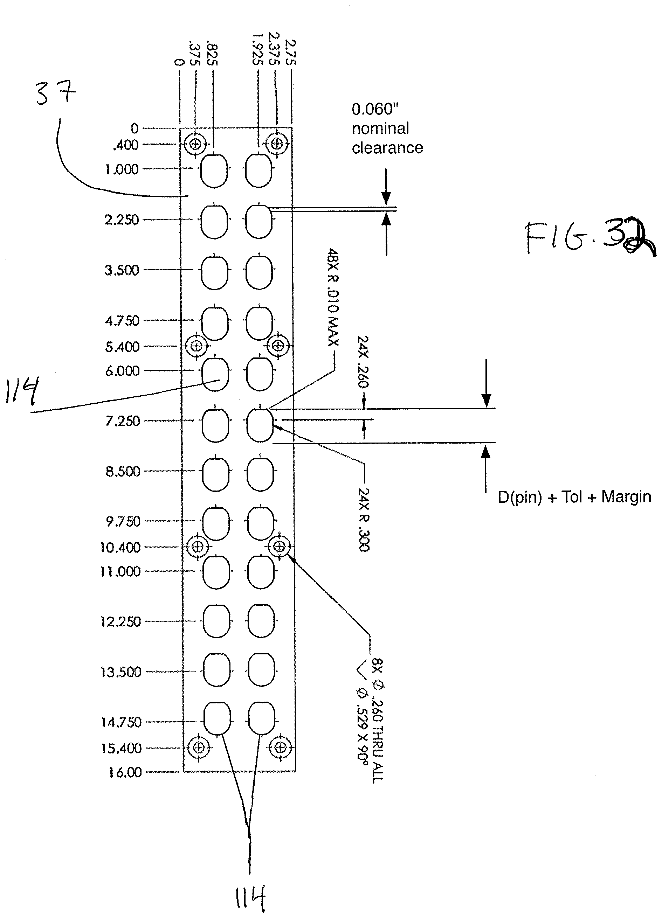

Stanchion 102 alignment is also important for reliable engagement and disengagement of locking pins 113 used to secure the cockpit during use of the DAP system. Misalignment of the locking pins to the locking plate 37 may be accommodated by enlarging or modifying the shape of the locking pin apertures 114 in locking plate 37. FIG. 32 illustrates exemplary locking pin aperture 114 that are vertically elongated to allow for vertical misalignment between the cockpit and stanchion.

### Exemplary Computer System

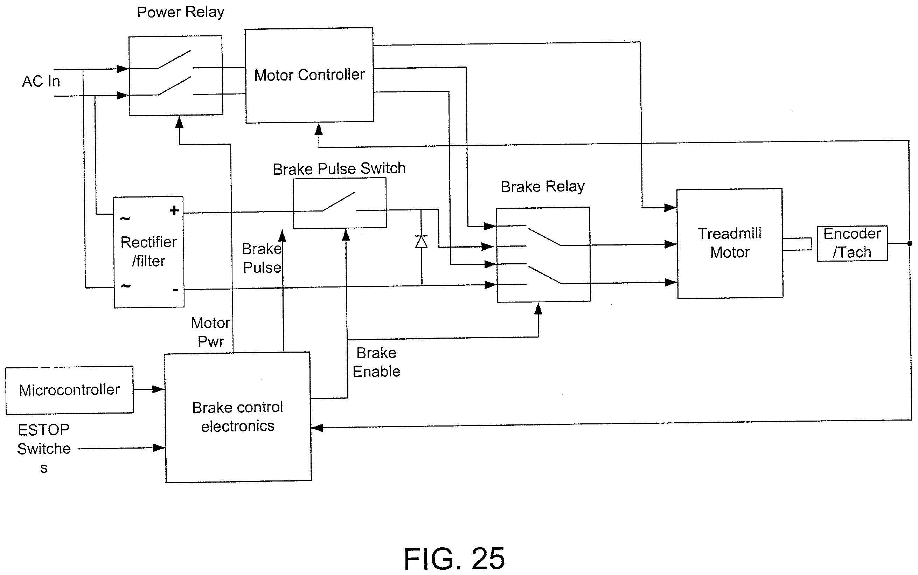

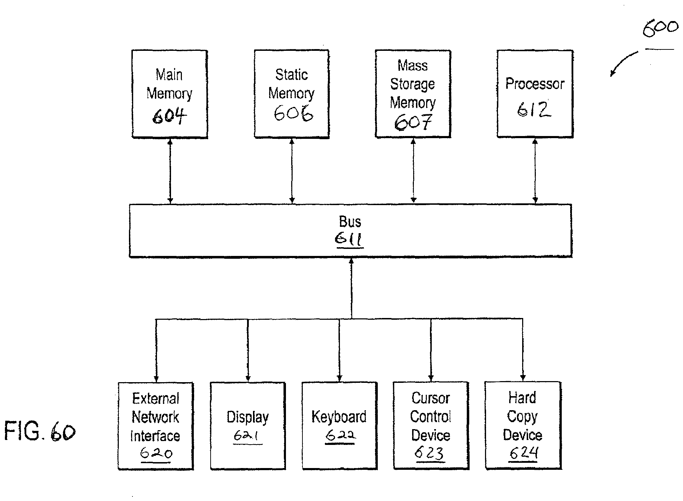

FIG. 60 is a block diagram of an exemplary computer system 600 adapted and configured to perform one or more of the logic, control, data collection, software and hardware operations and the like described herein. The computer system 600 may be adapted and configured using hardware, software, firmware in any combination, for example, to perform the functions described in FIGs. 25, 26, 27 to implement treadmill brakes as well as various other computer controlled and implemented methods described with regard to FIGs. 33-59. Additionally or optionally, the exemplary computer system 600 may also provide suitable electronic connections along with wired and wireless communication capabilities for direct and remote user interfaces, inputs and controls including touch screen, voice activated commands, remote control devices including those implemented using smart phones, tablets or mobile phones as well as other types of mobile graphical user interface devices. The computer system includes operating systems, software, firmware and communications for the use of the various user input devices described herein such as the touch screen interface 186, E-stop 146, user interface controls 149, interactive user interface and GUI display 358, touch button bar 302, as well as the various cameras and data recording devices.

The exemplary computer system 600 may comprise an exemplary client or server computer system. Computer system 600 comprises a communication mechanism or bus 611 for communicating information, and a processor 612 coupled with bus 611 for processing information. Processor 612 may in some variations be a microprocessor, but is not limited to a microprocessor.

System 600 further comprises a random access memory (RAM), or other dynamic storage device 604 (referred to as main memory) coupled to bus 611 for storing information and instructions to be executed by processor 612. Main memory 604 also may be used for storing temporary variables or other intermediate information during execution of instructions by processor 612.

Computer system 600 also comprises a read only memory (ROM) and/or other static storage device 606 coupled to bus 611 for storing static information and instructions for processor 612, and a data storage device 607, such as a magnetic disk or optical disk and its corresponding disk drive. Data storage device 607 is coupled to bus 611 for storing information and instructions.

Computer system 600 may further be coupled to a display device 621, such as a cathode ray tube (CRT) or liquid crystal display (LCD), coupled to bus 611 for displaying information to a computer user. An alphanumeric input device 622, including alphanumeric and other keys, may also be coupled to bus 611 for communicating information and command selections to processor 612. An additional user input device is cursor control 623, such as a mouse, trackball, trackpad, stylus, or cursor direction keys, coupled to bus 611 for communicating direction information and command selections to processor 612, and for controlling cursor movement on display 621.

Another device that may be coupled to bus 611 is hard copy device 624, which may be used for marking information on a medium such as paper, film, or similar types of media. Another device that may be coupled to bus 611 is a wired/wireless communication capability 625 to communication to a phone or handheld palm device, a LAN network, a remote network or a cloud based computer network or other distributed or shared computing and data storage system.

Note that any or all of the components of system 600 and associated hardware may be used in the inventive systems described herein. However, it can be appreciated that other configurations of the computer system 600 may include some or all of the devices. Certain variations of system 600 may include peripherals or components not illustrated in FIG. 60, e.g. components configured to receive different types of user input, such as audible input, or a touch sensor such as a touch screen.

Certain embodiments may be implemented as a computer program product that may include instructions stored on a machine-readable medium. These instructions may be used to program a general-purpose or special-purpose processor to perform the described operations. A machine-readable medium includes any mechanism for storing or transmitting information in a form (e.g., software, processing application) readable by a machine (e.g., a computer). The machine-readable medium may include, but is not limited to, magnetic storage medium (e.g., floppy diskette); optical storage medium (e.g., CD-ROM); magnetooptical storage medium; read-only memory (ROM); random-access memory (RAM); erasable programmable memory (e.g., EPROM and EEPROM); flash memory; electrical, optical, acoustical, or other form of propagated signal (e.g., carrier waves, infrared signals, digital signals, etc.); or another type of medium suitable for storing electronic instructions.

Additionally, some embodiments may be practiced in distributed computing environments where the machine-readable medium is stored on and/or executed by more than one computer system. In addition, the information transferred between computer systems may either be pulled or pushed across the communication medium connecting the computer systems.

The digital processing device(s) described herein may include one or more general-purpose processing devices such as a microprocessor or central processing unit, a controller, or the like. Alternatively, the digital processing device may include one or more special-purpose processing devices such as a digital signal processor (DSP), an application specific integrated circuit (ASIC), a field programmable gate array (FPGA), or the like. In an alternative embodiment, for example, the digital processing device may be a network processor having multiple processors including a core unit and multiple microengines. Additionally, the digital processing device may include any combination of general-purpose processing device(s) and special-purpose processing device(s).

### Networked System of Treadmill for Data Collection

A data collection and analysis system for use with unweighting systems is provided. Unweighting systems can be configured to capture data, such as a user's therapy history, goal, current condition, user type, age, medical history, etc. Analysis of an aggregate collection of such data from multiple users can allow an unweighting system or a therapist to generate a suggested treatment protocol or adapt a protocol already in use. Additionally, analysis of an aggregate collection of data can indicate whether certain assessments are indicated, such as a gait, balance, or concussion assessment. Such assessments collect data indicative of impairments from the user. This data can be compared against a normal threshold range, which can be generated from aggregate user data.

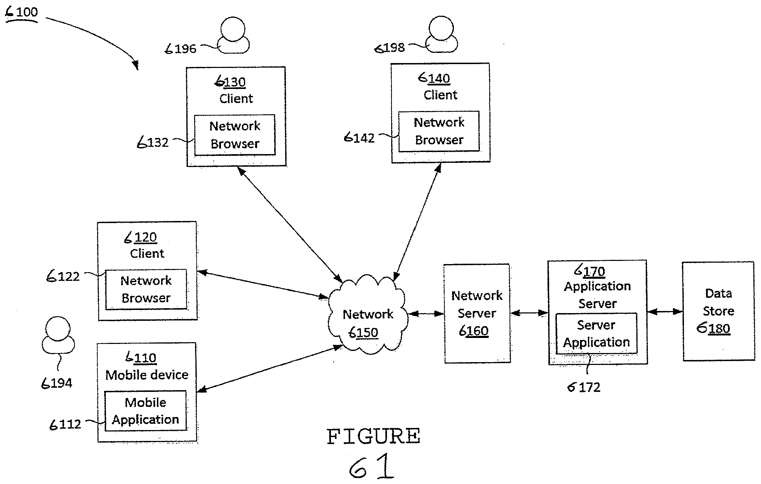

FIG. 61 is a block diagram of an exemplary networked computer system to implement the various embodiments of a cloud connected treadmill control system such as, for example, systems including a user and provider authentication structure enabling a medical professional supervising a patient session or an individual performing an unsupervised session. Additionally or optionally, the system includes the inventive security and data management system and methods to enable the use of the system as a medical professional, in a medical setting, where a patient record is being created or found within a cloud connected system where search functions and data transmission are central to functionality (e.g., see FIG. 33)

System 6100 of FIG. 61 includes mobile device 6110 and client device 6120 associated with user 6194, network 6150, network server 6160, application servers 6170, and data store 6180. The system of FIG. 61 also includes client 6130 for physician or healthcare provider 6196 and client 6140 for third party 6198. Though the discussion below may refer to a physician, a healthcare provider and a physical therapist are intended to be interchangeable for purposes of explaining the methods and systems disclosed herein.

In some embodiments, a method of unweighting system treatment management is provided. The method comprises providing a user's information, the information comprising at least two of the following characteristics: age, weight, gender, location, desired result, current medical condition, height, lift access requirements, therapist access requirements, therapy history, past workout information, and user type, wherein user type comprises at least one of an athlete, a casual user, a rehabilitation user, and a chronic user; analyzing, using a processor, the user's information based, at least in part, on aggregate information in a database comprising other users' characteristics and associated past workout session data including duration, speed, incline, and unweighting level used during workouts; and generating, using a processor, a suggested workout routine including duration, speed, incline, and unweighting level to be used during a workout based on the comparing of the user's information to the other users' information.

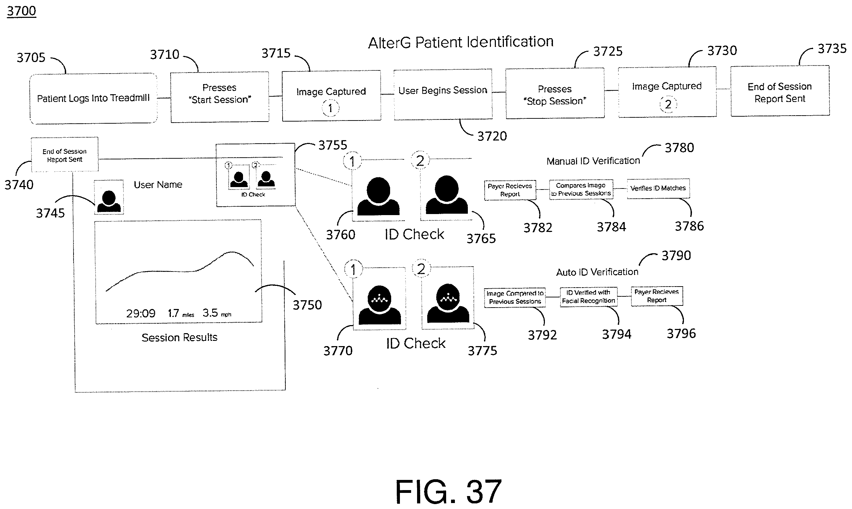

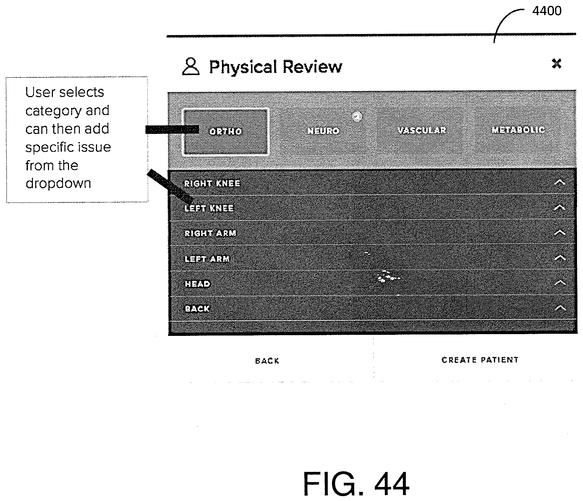

Mobile device 6110 may communicate with network 6150 via any suitable wired or wireless communication method and includes mobile application 6112. Mobile device 6110 may include an instrumented medical treadmill or an unweighting training system as described herein including mechanical unweighting systems and differential air pressure systems. Mobile device 6110 may receive input from a user and execute one or more programs to administer one or more tests, exercise routines, challenges, prescribed protocols, recommended protocols including unweighting therapy protocols and recommendations to a user, provide test results to application server 6170, and receive test set data, account data, and other data from application server 6170. The user may be a patient of a physician associated client 6130. The terms user and patient may be used interchangeably herein for purposes of explaining the operation of the system 6100. Mobile application 6112 resides in memory on mobile device 6110 and may be executed to allow a user to setup and login to an account with a network service (e.g., see FIGs. 33, 35, 36, 50, 55, 58, and 59), establish goals, get feedback, review and update or administer test results (e.g., see FIGs. 44, 45, 46, 47, 54, 57), and perform other functions (e.g., see FIGs. 37, 38, 42, 43, 52, and 53).

Client device 6120 may include network browser 6122 and be implemented as a computing device, such as for example a laptop, tablet, mobile phone, smart phone, desktop, workstation, or some other suitable computing device. Network browser 6122 may be a client application for viewing content provided by an application server, such as application server 6170 via network server 6160 over network 6150.

Network 6150 may facilitate communication of data between different servers, devices and machines. The network may be implemented as a private network, cloud based network, distributed network, public network, intranet, the Internet, or a combination of these networks. Network server 6160 is connected to network 6150 and may receive and process requests received over network 6150. Network server 6160 may be implemented as one or more servers implementing a network service. When network 6150 is the Internet, network server 6160 may be implemented as one or more web servers. The network 150 may also be a cloud computing network.

Application server 6170 communicates with network server 6160 via network server 6160 and data store 6180. Application server 6170 may also communicate with other machines, wearable devices, biometric measurement devices and gait devices as described herein. Application server 6170 may host a server application 6172, and other software modules. Application server 6170 may be implemented as one server or multiple servers. Server application 6172 may reside on application server 6170 and may be executed to store, retrieve and transmit test set data, analyze test set results, and manage alerts.

Data store 6180 may be accessed by application server 6170. Data store 6170 may store data, process data, and return queries received from application server. Data stored on application data store 6180 may include user account data, user test data, user test results, analysis of the results such as trend data, and other data.

Clients 6130 and 6140 and network browsers 6132 and 6142 may be similar to client 6120 and network browser 6122, except that clients 6130 and 6140 may be associated with a physician and a third party, respectively, rather than a user (patient). Exemplary third parties include, for example, a drug company, a joint prosthesis company or manufacturer, a health care payer, an accountable care organization, an insurance company, a physical therapist, an athletic trainer or a hospital.

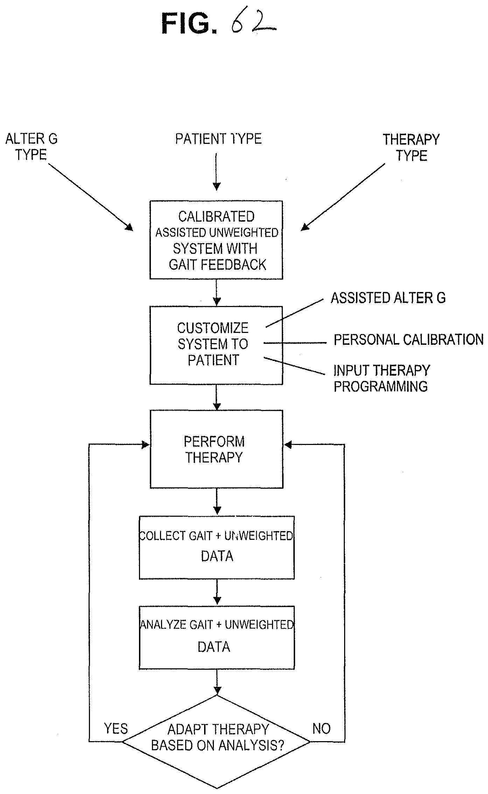

FIG. 62 is an exemplary method of providing therapy for patient using a differential pressure having measured gait feedback capabilities.

First, with an understanding of the different types of unweighting systems available, the patient type to use the system, and the desired therapy to be performed, select an appropriate system to perform therapy with a user. For example, focusing on DAP systems, a number of systems types for categories 1, 2 and 3 are provided in the '124 application. A category 1 system includes for example FIG. 2A of the '124 application. A category 2 system includes for example FIG. 7A of the '124 application. A category 3 system includes for example FIG. 1A and 19 of the '124 application. A category 4 system includes for example FIG. 19A of the '307 Application.

Next, customize the system to this patient. Customization may take on many forms such as based on the specific type or configuration of the unweighting system being used, personal calibration techniques, or inputs of specific patient parameters, or protocols or patient specific training goals.

Next, the user performs the therapy in the system according to the input program or protocol.

Next, the system will collect gait and unweighting and other system parameters while therapy is ongoing.

Next, the system will analyze the collected data.

Next, determine whether to adapt the therapy based on the prior analysis step. One result of this step is to adapt the therapy and continue to perform the therapy as adapted. Another result is to continue to perform therapy without adapting the therapy based on the analysis.

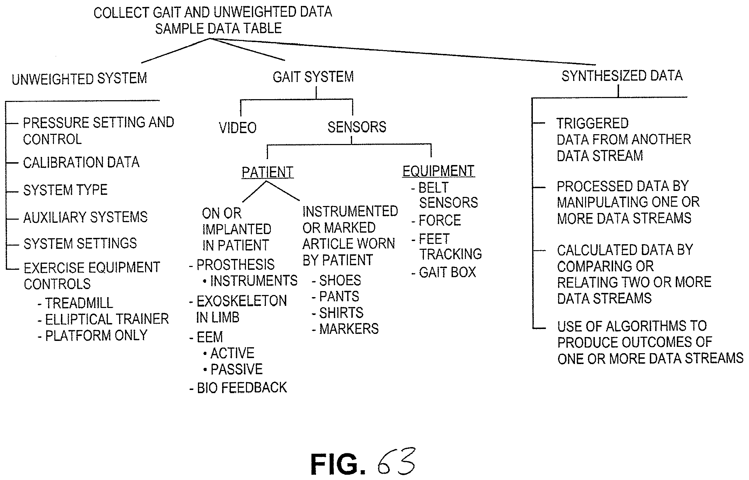

One example of the format of a data table for an integrated differential air pressure and gait measuring and training device is shown in FIG. 63. This representative data system envisions collection and synthesis of data from several data streams depending upon the specific configuration of the system being used for therapy. The contents of FIG. 63 (i.e., the data table or variables collected, controlled, processed or manipulated by the control system) will vary to the degree needed to include collection of the various continuous, nearly continuous or segmented data streams including synthesized data from the therapy system.

Simultaneous data collection refers to the general process of collecting data from multiple data streams under a common time stamp. It is to be appreciated that embodiments of the various inventive unweighting gait training systems described herein may be adapted and configured for this purpose. However, the various inventive systems may be also adapted and configured to synthesize the data that is being collected from the systems, subsystems, accessories, and sensors as shown in the exemplary data table (See FIG. 63). As used herein, synthesis of data refers to the integration of the independent data streams collected into another set of data or stream of data used in conjunction with the therapy or training undertaken in the system. Synthesis goes beyond basic data collection in that the data is put together to straight-forwardly assist the patient or therapist understand the workout from a quantitative standpoint. Data collection systems just record data, but do not take steps towards helping a patient or therapist who do not have training or experience with the direct data being collected. In one alternative, the type of data synthesis is derived from the type of patient receiving therapy and the specific system selected for his patient category (i.e., class 1, 2, 3 or 4). As such, the type of patient or system is one factor in determining the type of data synthesis needed for a specific patient therapy session or course of therapy. In still further alternatives, the data collected from one component is used to indicate the relevance of a subset of data from another source. In one specific example, there is a camera providing a high definition video stream of a post knee surgery patient's knee movement during therapy. The storage and later processing requirement for such a high volume of data may be a difficult and time consuming task. In one specific example of data synthesis, a force sensor on a treadmill is used to indicate heel strike and triggers the capture of a video stream that runs for a set time limit. In another specific embodiment, there is also a loop recorder used in conjunction with the high definition video stream. In this example, the heel strike sensor, employed in conjunction with a timing offset, is used to trigger the capture of a portion of the high definition stream in the loop just prior to the heel strike reading. Thereafter, the data stream is stored for an additional timing factor after heel strike. During the use of this data, the relevant portion of the video is now cut down to and synchronized with the recording or relevant trigger, here a heel strike reading in this example. FIG. 28 illustrates the selective combination of heel strike data with video stream data to represent the collection of frame grab or snippet of unweighting and gait data. The data or data stream can be presented in real time, or packaged in a way to inform a doctor, therapist, shoe maker, etc. of the state of the patient.

In still another example, a self-contained biometric sensor system - referred to herein as GaitBox - is another form of Gait system sensor that may be employed according to the various Gait techniques described herein. The GaitBox provides accurate, real-time measurement of basic gait parameters on any treadmill. The basic gait parameters are: Speed (distance divided by time);Cadence (number of steps per minute);Left/Right Stride Length (distance between successive impacts of same foot, e.g. left-foot-impact to left-foot-impact); and Left/Right Stride Time (time between successive impacts of same foot). Other additional gait parameters include, by way of example and not limitation, foot placement phase asymmetry (right to left step time compared with left to right step time) and stride time jitter (variation in timing between subsequent footfalls on the same or opposite sides). Additional details of an embodiment of GaitBox may be appreciated by reference to U.S. Provisional Patent Application 62/054,311 titled, "SYSTEMS AND METHODS FOR MANAGEMENT AND SCHEDULING OF DIFFERENTIAL AIR PRESSURE AND OTHER UNWEIGHTED OR ASSISTED TREATMENT SYSTEMS" filed on September 23, 2014, (the " '311 application") in which a GaitBox is shown in the '311 application on a treadmill frame in at least FIG. 5A as well a further described in details of the GaitBox shown and described in the same application with regard to FIGs. 32A and 32B.

Other more advanced types of synthesis are also performed by examples of the system. In another exemplary system a data stream that is being collected may be processed prior to or in conjunction with recording. Here, processing may take on a number of different forms such as applying a patient specific factor such as a calibration factor or other metric associated with a specific patient. One example of a kind of data synthesis is shown in FIG. 29. FIG. 29 illustrates how the left and right load cell force data may be matched with a clock signal to provide an indication of unweighting assisted force asymmetry data. The unweighting assisted force asymmetry data is then provided to the user in a simple display or other feedback technique such as the indicator shown on the right side of FIG. 29. The placement of the arrow in the middle is the desired location. As the user trains, the detected force asymmetry will cause deflection of the arrow. As the patient alters his gait, the arrow moves in a corresponding direction. See additional details with regard to at least FIG. 29 in the '311 application.

Another example of a kind of data synthesis is shown in FIG. 30. FIG. 30 illustrates how the left and right load cell contact time data may be matched with belt speed data to provide an indication of cadence asymmetry data. The cadence asymmetry data is then provided to the user in a simple display or other feedback technique such as the indicator shown on the right side of FIG. 30. The placement of the arrow in the middle is the desired location. As the user trains, the detected cadence asymmetry will cause deflection of the arrow. As the patient alters his gait, the arrow moves in a corresponding direction. See additional details with regard to at least FIG. 30 in the '311 application.

Another example of a kind of data synthesis is shown in FIG. 31. FIG. 31 illustrates how the left and right heel strike data may be matched with a hip rotation accelerometer data to provide an indication of upper body phase coordination data. The upper body phase coordination data is then provided to the user in a simple display or other feedback technique such as the indicator shown on the right side of FIG. 31. The placement of the arrow in the middle is the desired location. As the user trains, the detected upper body phase coordination data will cause deflection of the arrow. As the patient alters his body phase coordination, the arrow moves in a corresponding direction. See additional details with regard to at least FIG. 31 in the '311 application.

Another form of processing may be the application of use factors, calibration settings or auxiliary component settings applied to data streams based on the kinds of specific systems, auxiliary systems or components utilized in a specific training scenario. In this way, data can be collected in a raw form as well as with normalization factors to standardize data collected from different sensors, components or patient settings. Thusly, data collected for different patients using similarly configured systems but with different components may have data collected that will permit the patient specific data to be compared and/or aggregated for wide spread data collection. Consider this specific example. A normalizing factor would be the factor used where a CAT 2 training system with a shoe sensor from vendor A and a post-surgery knee male in Toledo and a CAT 2 training system with a shoe sensor from vendor B with a post-surgery knee male in Topeka will each record the respective patient's own raw data but there will be corresponding normalized data that eliminates the variations (if any) between the sensors from different shoes and different vendors. In a similar way, where needed based on specific circumstances, all or some of the components in the system (See FIG. 63) may be processed such that a common or normalized data setting may be applied so that when data is collected from systems with different specific components, the data streams may include both raw and normalized. In one specific embodiment, the application of one or more normalization factors is one kind of data synthesis.

In still another type of data synthesis, the data from one or more data streams may be used in calculations or further processing to yield a determination or outcome related to the input data streams or according to the therapy being undertaken. One example is the use of an algorithm to perform transformations of one or more data streams. The output of these functions will be stored along with the other recorded data. In still another example, an algorithm may include various weighting factors to a data stream such that some data may be processed in a manner consistent with the type of therapy being delivered. In still further specific examples, a processing algorithm may include fuzzy logic or artificial intelligence using a computer processor adapted and configured for that purpose.

Current state of the art therapy uses unweighting technology to unweight a patient while the physical therapist provides feedback by viewing the patient as they work out. Some systems incorporate a video feedback element that allows the patient to view themselves from various angles. By using only one type of feedback, there may be optimal treatments that are left unidentified by the therapist. By integrating multiple measurement systems with an unweighting system, synthesizing the data streams, and presenting the information in an appropriate way, a therapist would have the ability to utilize information that has only been able to be gathered in a laboratory setting in the past. The therapist would have the ability to then analyze and more effectively set workouts for the patient to improve recovery time.

In one example, a patient a using a DAP system with cameras, ground force sensors, and inertial sensors on the user's legs and hips. In this view, the pressure bag that normally covers the frame and defines the pressure chamber is removed to permit the interior details of the pressure chamber and the instruments contained therein to be observed. Throughout the workout, the system takes data about the user's gait, speed, incline, and effective bodyweight. That information is synthesized and given to the therapist during or at the end of the workout. In one alternative, the therapist can then watch a video that shows the patient's movements, speed, weighting, and the angles of the hips at each point. The therapist can use that information to more effectively set the next workout, leading to better recovery times. Due to the placement of the sensors, biomechanics points such as the user's hips, that are not visible through the enclosure of a current DAP system, can be measured, tracked and evaluated. Exemplary patient and sensor arrangement may be appreciated though reference to FIGs. 5, v, c, and d in the '311 application.

Although the operations of the method(s) herein are shown and described in a particular order, the order of the operations of each method may be altered so that certain operations may be performed in an inverse order or so that certain operation may be performed, at least in part, concurrently with other operations. In another embodiment, instructions or sub-operations of distinct operations may be in an intermittent and/or alternating manner.

In other additional embodiments, there are provided improvements generally to the field of medical treadmill data security and management, automated payment and referral systems, autonomous rehabilitative protocols and real-time remote machine health monitoring. These improvements are believed to be applicable to and may be implemented on a variety of treadmills and exercise equipment including a wide variety of mechanical unweighting systems and differential air pressure unweighting systems.

Treadmills and other cardiovascular load inducing training equipment have historically used analog interfaces for the display of information and interactivity for adjusting various control settings such as treadmill speed, incline degree, amount of unweighting, and the like during the session. In the systems described herein, remote, networked and/or other cloud connected communication systems may be accessed and utilized in conjunction with the patient tracking systems, touch screen and graphical user interfaces, along with custom application programming interfaces (APIs) and relational databases for the storage of user authentication, data and information.

Conventional treadmill and exercise equipment data has mostly existed in a fitness environment. As such, the user data collected lacks the necessary privacy and security, communication and payment management features required by the medical industry. To date, utilization of cloud connected exercise equipment has been almost non-existent in medical facilities due to privacy and confidentiality challenges to protected health information (PHI) required by the Health Insurance Portability and Accountability Act (HIPAA) and the Health Information Technology for Economic and Clinical Health (HITECH) Act. HIPAA and HITECH define PHI as individually identifiable health information including demographic information such as date of birth and zip code, that: (A) is created or received by a health care provider, health plan, public health authority, employer, life insurer, school or university, or health care clearinghouse; and (B) relates to the past, present, or future physical or mental health or condition of any individual, the provision of health care to an individual, or the past, present, or future payment for the provision of health care to an individual.

The creation of treatment modalities and prescriptive programs by a healthcare professional that address specific indications of medical conditions such as knee replacement, osteoarthritis, stroke, and chronic neurological conditions have not existed in fitness focused treadmills. The digital management of a patient in need of physical medicine and mobility therapy throughout the continuum of care has been a significant barrier to improving patient outcomes. These and other shortcomings of conventional fitness equipment may be addressed by the inventive systems described herein.

Additional advantageous capabilities include one or more or a combination of:
1. Data security and management of medical use treadmill (including unweighting systems) data;
2. Automatic Payment Methods;
3. Automatic Referral Methods;
4. Autonomous Rehabilitation Protocols; and
5. Real time machine health monitoring.

In one embodiment, there is described a cloud connected medical treadmill software system. The system provides advantageous and unique approaches to treadmill data security and management, automated payment methodologies and referral systems, autonomous rehabilitative protocols and real-time remote machine health monitoring. Examples of the system address the requirements the collection, protection, utilization and communication of personal health information (PHI) collected from a treadmill.

In one aspect, a security and data management system provides a novel approach to treadmill data acquisition and protection including computer implemented methods enabling one or more of patient verification, secure display of patient information, de-identification of patient data for comparison purposes, comprehensive audit trails with notifications for breach isolation and standards for integration of data into the electronic medical record (EMR).

In one aspect, an exercise prescription system provides a software platform including computer implemented methods enabling the creation of a patient record with basic information, the ability to document current health and limitations, the option to recommend a plan of care, the referral of the patient to the system or a specific healthcare provider, the deployment of exercise testing and training modalities with an instrumented treadmill device, the generation of a report with analysis of change in objective physiological or biomechanical metrics, and the direct payment systems to manage exchange of money from the primary parties involved or from third parties responsible for payments.

In still other aspects, there are provided methods for use of exercise as a medical treatment with defined parameters and dosage that can be implemented by a healthcare provider or in an unsupervised session using digital instruction and feedback that concludes with an exchange of money based on the outcome of a single exercise session, a set of exercise sessions or simply for the services provided to support an exercise session. The creation of monetary accounts on the system that support payments into the system for services as well as supporting the withdrawal of funds for services provided or outcomes based achievements of patient functional improvement.

In an additional aspect, there is provided a computer controlled remote tracking system and methods for mechanical and system operation of a treadmill provided via a cellular or Wi-Fi connected cloud infrastructure. The addition of computer controlled remote monitoring machine health provides a robust rehabilitation and medical services platform for optimal efficiency and performance in a medical setting. Continuous and real-time analysis of treadmill operation such as belt speed, load cell consistency, roller wear, motor performance, and differential air pressure metrics such as blower speed, bag inflation levels and the like provide unique monitoring to exercise equipment, specifically differential air pressure treadmills utilized in a medical setting or enabled for proper handling of patient data as described herein. The acquisition of machine health data from multiple unweighting training systems provides a robust performance data set that may be analyzed in a relational or non-relational database to better understand machine operation and write specific algorithms for determining life of the unit, likelihood of service need or part replacement timing.

In one aspect, there is an embodiment of the system utilizing a combination of hardware built into the instrumented treadmill and software designed for the digital interface and peripheral screens. The description of the key features of the security and data management system, the exercise prescription and machine health maintenance are described in detail as an exemplary embodiment, but are not meant as limiting to only the examples and details described.

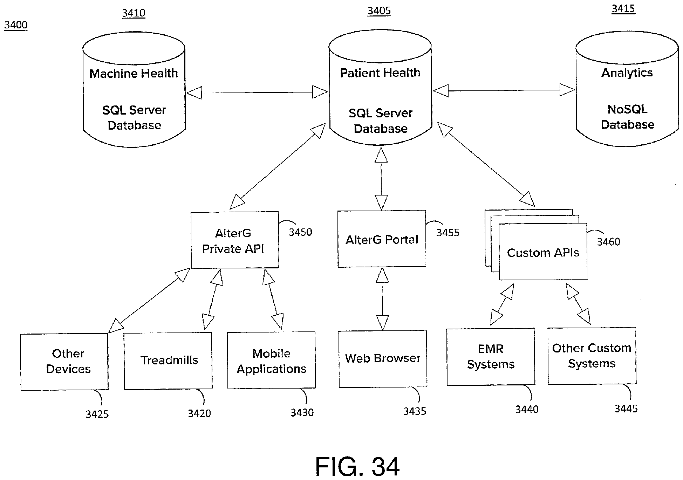

FIG. 34 is schematic diagram of an exemplary computer communications system for exchanging data generated in medical treadmills and medical unweighting systems. The patient health database 3405 is in communication with the machine health database 3410 and the analytics database 3415. Treadmills 3420, mobile applications 3430 and other devices 3425 are in communication with the patient health database using one or more AlterG Private Application Program Interfaces (API). A web browser 3435 may also communicate with the patient health database 3405 via a web portal such as an AlterG portal 3455. One or more custom APIs may be utilized to provide electronic communications between one or more electronic medical record systems 3440 or to other custom systems 3445 containing data to be utilized in one or more of the databases 3405, 3410 or with analytics 3415.

In one embodiment, the cloud connected treadmill control system includes a user and provider authentication structure that enables either a medical professional supervising a patient session or an individual performing and unsupervised session. Advantageously, the security and data management system and methods disclosed herein enable the use of the system as a medical professional, in a medical setting, where a patient record is being created or found within a cloud connected system where search functions and data transmission are central to functionality. An illustrative user flow supporting this structure is outlined in FIG. 33.

FIG. 33 is a flow chart of an exemplary method 3300 of performing an authenticated user exercise session using a computer controlled method as described herein. The method starts 3305 when a user attempts to gain access to an exercise system as described herein, such as a medical treadmill or a medical treadmill having either mechanical or DAP assisted unweighting capabilities.

Next, the system will require that the user be authenticated. (STEP 3310)

If the user has previously been registered, then the user record may be obtained using a search (STEP 3320). The search parameter requirements and results are shielded (STEP 3325) as described herein. Once the proper user record is identified, the user proceeds to begin the exercise session (STEP 3320).

If the user has not been previously registered or is accessing the medical treadmill as a guest, a new patient record will be created (STEP 3315) before beginning the exercise session (STEP 3330).

During the exercise session, the medical treadmill displays real time metrics and user interaction. Metrics, user inputs and other information as described herein is sent to a server (STEP 3335).

After completion of the exercise session, the system displays the completed session results (STEP 3340), thereafter the exercise session ends (STEP 3345).

### Security and Data Management

The establishment of provider accounts to be used in guiding a patient's rehabilitation or supervising an exercise session is a novel concept in the use of treadmills and exercise equipment in the medical system. The requirement of secure access, administrative controls and the ability to securely compare to other users within the constraints of HIPAA are unique in the treadmill and exercise equipment field.

In some embodiments, prior to starting the treatment, the user is identified by the unweighting system as the proper user for the specific treatment. For example, the training device or system may be capable of identifying the individual user, based on some unique ID which is presented to the machine prior to use. The system will know the age, sex, and medical diagnoses (if applicable) of each user. In some embodiments, the system may require that a user who has scheduled time on a machine to identify themselves to the machine (via keypad, RFID, bar/QR code, magnetic card swipe, biometrics, or other identification technology) at the beginning of their scheduled session. This provides confirmation that the user kept the scheduled appointment, ensures that any treatment protocol sent to the machine is used by the intended user, and allows performance data to be attached to that user's treatment history. Where a patient does not have an identification means, the user can create a profile. The training device or system may maintain a profile of each user. In general, users will identify themselves prior to using the system. In some embodiments, a "guest" identification acts as a catch-all for users without a profile. The system will track utilization by individual users and can report on utilization statistics and workout parameters to the healthcare practitioner for medical evaluation, to the user for personal medical and health records and monitoring, and to third parties such as insurance providers or reimbursement agencies for medical reimbursement to the clinic or healthcare practitioner or for compliance verification of activities by the patient associated with medical insurance or wellness program monitoring.

Advantageously, in some embodiments, a patient identification means can help monitor (and encourage) a patient's compliance with a treatment program. The patient's identification means such as an access card may be read by a medical professional during scheduled checkups to monitor the patient's progress. Monitoring progress may also be used to track, monitor, adjust or improve upon a user's progression along the continuum of care as described above.

### Provider Secure Ease of Access

Login fatigue is the frustration of maintaining a multitude of passwords for several different systems and is a significant concern with healthcare professionals. The phenomenon is more pronounced in the healthcare field due to large-scale interoperability issues and the significant risk of damages due to security breach. A major barrier to adoption of technology in healthcare is the ease of access of a product and the ability to make the system secure. Another contributing factor to lack of adoption in touch screen offerings is the issue of length of login credentials and the ability to easily mistype characters. When entering a long email address and password, risk of frustration and product abandonment exist with the amount of time it takes to correctly enter the login credentials.

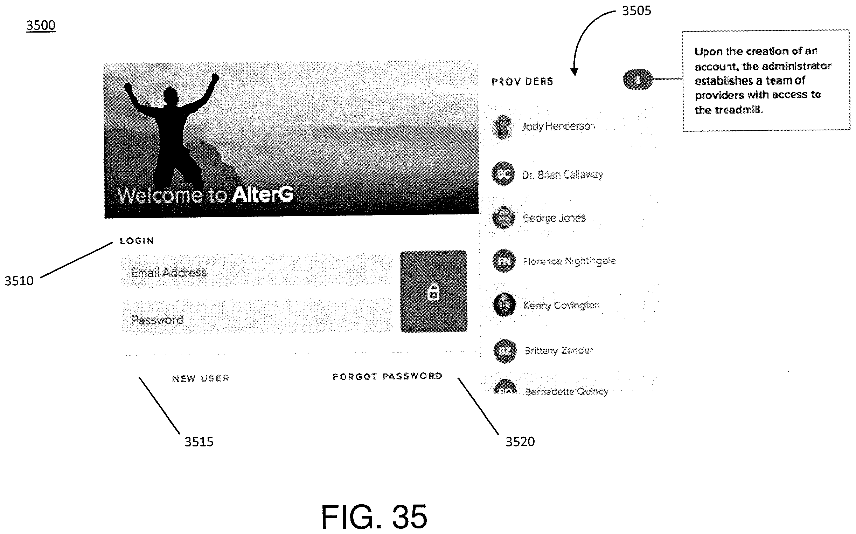

FIG. 35 is a screen shot of an exemplary log in screen 3500 used to access a medical treadmill system that includes a drop down provider listing 3505. The drop down listing 3505 is created by a system administrator and includes the team of providers with access to the medical fitness equipment being accessed. The login screen 3500 also provides access to a user login section 3510. In the exemplary screen shot, a user may login with an e-mail address and password as shown. The system also provides access for a new user to create an account 3515 or an existing user to access a forgotten password 3520. In addition to the techniques provided in FIG. 35, there is also provided an improved approach within the healthcare field for the implementation of a secure, but simple login procedure. In one aspect, there is provided a secure login system that utilizes a locally stored numerical pin code to verify identity.

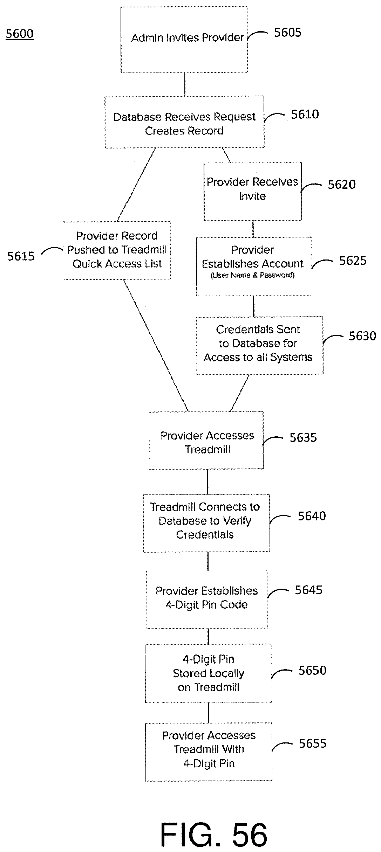

FIG. 56 is a flow chart of a method 5600 of creating a new provider or team member account to enable access to the medical exercise equipment and systems described herein. First, the system administrator invites a provider to join the system (step 5605). Next, the database receives the request and creates a new record (step 5610). The provider record is pushed to the treadmill quick access list (step 5615) and the provider receives the invitation from the system administrator (step 5620). Next, the provider establishes an account (step 5625) using, for example, a user name and password. Next, credentials are sent to the database for access to all systems (step 5630).

After completion of the above steps, the provider accesses the medical treadmill (step 5635). The treadmill in turn connects to the database to verify provider credentials (step 5640). If provider credentials are authentic, the provider is asked to establish a 4-digit pin code (step 5645). The system stores the 4-digit pin code locally on the medical exercise equipment memory (step 5650). Once these steps are completed, the provider may access the medical treadmill using a 4-digit pin (step 5655).

In one specific example, once the actions of the account administrator are completed, a new team member (provider) account is established and the new team member is invited to create authentication credentials for the AlterG system. Authentication credentials may include any suitable form of authentication, such as an email address and password. This authentication is stored in the database to allow the new team member to log into the web system, mobile device, or any AlterG treadmill they have access to. The initial creation of a new team member and the assignment of a specific treadmill or group of treadmills, automatically sends the new team members account information to the assigned devices to allow for quick access set-up at first login.

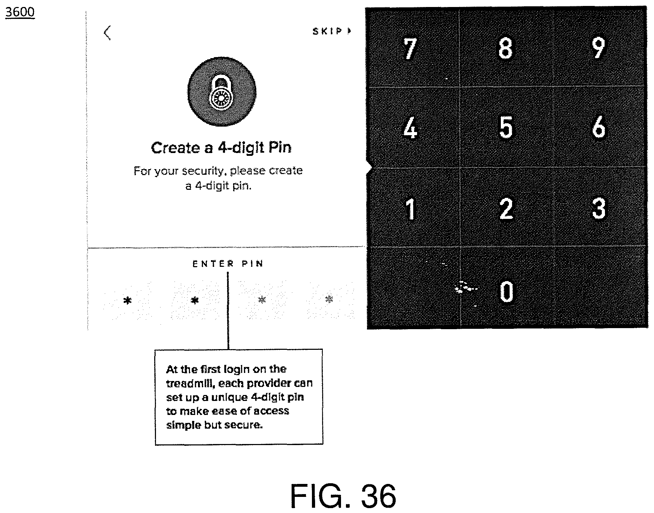

Once the new team member has established authentication credentials, they can log into a treadmill they have been provided access to. During the first login attempt, users designated as "Providers" will be prompted with a screen to allow them to establish a locally stored pin code (See screen shot 3600 in FIG. 36). The locally stored pin code allows the user to access the system without the need to log in with full authentication credentials at every login. This method also provides security in the form of the physical device needing to be accessed with the specific 4-digit pin. Since the physical device (treadmill) is not a mobile device, the physical security of facility should provide additional security to data breach. Additionally, a secondary verification could be used to ensure the identity of the individual accessing the system with biometric or camera based verification as described in the Patient Image Capture section and FIG. 37. The method of creating a healthcare provider account and establishing secure and simple access to the system is unique and may be used to advantage in the use of treadmills, including DAP and mechanical unweighting systems as a new class of medical data capable therapeutic devices.

### Patient Image Capture

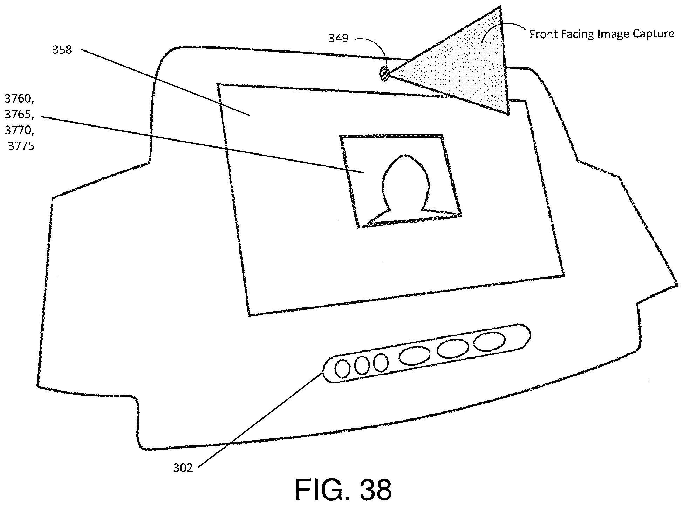

The security and data management system uses a novel approach to ensure the patient identified within the system matches the actual identity of the user. The patient identification verification process utilizes built-in cameras embedded in the treadmill that takes a picture of the user and attaches it to the exercise session. FIG. 38 illustrates a front facing camera 349 positioned above the user interactive display 358 and button bar 302 as described herein for a DAP system 300. The front facing image capture may be used to obtain manual ID verification images 3760, 3765 alone or in any combination with automatic ID verification images 3770, 3775 (see FIG. 37). Additionally or optionally, cameras shown in FIGs. 1D, 11B, 20A, 20B, 22A, 23A or others adjacent to the equipment may also be used for user identification and confirmation.

FIG. 37 is a flow chart of a method 3700 of patient identification for use with medical exercise equipment systems. A patient logs into a medical treadmill system such as those described herein (step 3705). The user presses "start session" or otherwise appropriately initiates an exercise session (step 3710). In response to the initiation of a medical exercise equipment session, the system captures an initial or start session image 1 of the user (step 3715). Thereafter, the user begins the session (step 3720) and interacts with the system as described herein. After completing the session, the user presses the "stop session" button (step 3725). After the "stop session" indication, the system captures an end of session image 2 (step 3730). Thereafter, the system prepares and sends to the appropriate party an end of session report 3740 (step 3735). In some embodiments, the end of session report 3740 includes, for example, a comparison of pre-session to post-session images. The comparison may be used to analyze or estimate fatigue from changes in facial color as a result of blood flow, change in overall appearance, presence of sweat or other characteristics indicating user level of exertion, strain or fatigue.

The end of session report 3740 may include, for example, custom generated fields for a particular provider or to meet requirements for reporting. In the exemplary end of session report 3740 in FIG. 37 the report includes the user name or identification (3745) and session summary or results (3750) along with beginning and ending session ID checks (3755).

The session ID checks may be provided in a number of different ways in order to provide confirmation that the user who logged into and accessed the exercise routine is actually the same user who is performing that routine in the exercise session. Two exemplary patient identification techniques are illustrated in FIG. 37. There is a manual ID verification 3780 and an Auto ID verification 3790.

In manual ID verification 3780, the beginning image capture 1 is a user image 3760 and ending session image capture 2 is a user image 3765. In this example, the end of session report 3740 would include images 3760, 3765 that is received by a payer (step 3782). There is next a comparison performed of the user images from prior sessions to the images 3760 and 3780. Assuming that the images match the prior images then the ID is verified (step 3786).

In Auto ID verification 3790, the beginning image capture 1 is a user image 3770 and ending session image capture 2 is a user image 3775 each of which may include one or more biometric or other identification tags used in a recognition protocol or method. In this example, the end of session report 3740 would include images 3770, 3775. Next, images from prior sessions are compared to images 3770, 3775 (step 3792). The image comparison proceeds using facial recognition or other appropriate biometric recognition methods (step 3794). The results of the image comparison is provided to the payer (step 3796) and indicated in the end of session report 3740.

In one embodiment, images are captured at the beginning of the session when the user presses "Start Session" and at the end of the session when the user presses "Stop Session" as depicted in FIG. 37. The user images 3755 are then embedded into the treadmill report 3740 and can be reviewed when a payment or reimbursement is being evaluated. In additional alternatives to Auto ID Verification method 3790, the system can also automatically verify the user through facial recognition or other camera and non-camera based biometric evaluation processes. Without limitation to these specific examples, additional means of biometric identification could be fingerprint scans or retinal/capillary scans.

Patient verification is a critical element to ensuring proper programmatic display, progress tracking and payments. The patient verification feature in one embodiment uses the embedded camera on the instrumented treadmill to capture an image of the user to be stored in the exercise session report for review at a later time. The image taken of the user is captured at the beginning of the session and could be periodically captured throughout the session to ensure the same user was active on the device throughout the session. The image capture includes a still frame capture in one embodiment that must be reviewed post session either by a healthcare provider or third party with financial responsibility for the patient. Video could also be used in other embodiments to identify the patient or more automated and real-time features such as facial recognition, retinal scanning or any method of biometric authentication. The secondary authentication process provides an improved method for ensuring patient and/or provider identity that requires visual confirmation or biometrics to prevent fraudulent activity.

FIG. 37 describes an exemplary embodiment of implementing front facing camera position and the use of the camera to capture personally identifying images or biometrics. The embedded camera is not the only embodiment, a peripheral camera such as one on a mobile device could be used to capture an image of the user to verify identity while using the instrumented treadmill or the mobile device could be used in non-treadmill exercise to verify identity. These and other identifications could occur if the user is prescribed an exercise plan to walk daily outdoors and a mobile device based accelerometer, GPS or other positioning application is used to track steps, traveled path, distance or duration. A process of verification could be implemented to ensure the user is very likely the one performing the steps by adding in periodic requests for image or biometrics verification.

### Shielded Search

The security and data management system utilizes a novel approach to selecting and displaying a patient's information. The system allows for selection of a patient without identifying numerous other patients who have also used the machine. The key privacy concern is displaying a long list of patient names while a user is standing on the treadmill ready to begin a session. The short-hand search technique allows the provider to search for a patient by inputting two or more letters of the patients name to return results instead of preloading results or providing results for all users with the same first letter.

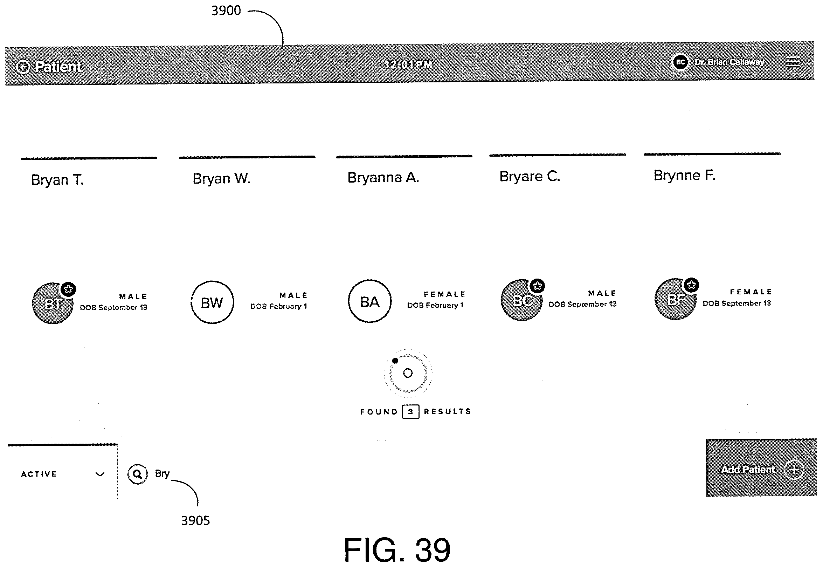

The specific example is illustrated in the search result screen shot 3900 shown in FIG. 39. The screen shot 3900 shows five patient IDs returned in a search result only after the user has input three letters 3905. The example illustrated in screen shot 3900 shows the provider inputting "BRY" before getting matching results to limit the display of users on the screen in front of the patient. The provider begins the search by inputting "B" and no search results return, then "R" again with no search results and lastly "Y" which as the third letter initiates a return of matching records. By limiting the search results to active users (Use in the last 60 days) with matching first three letters and then further shielding identifiable information such as last name and year of birth, the described embodiment provides enhanced protection of personal health information.

By implementing customizable options for the number of letters required, each system can create their own level of balance between user experience and privacy while meeting HIPAA standards and keeping patient information private. For example, a health care system may decide that they want to require the entire first and last name to be typed in before returning results on a patient record or they may allow for the complete display of patient's without inputting any search filters.

Selection of patient information on publically displayed digital screen provides a need for balance between protection of patient identity and simplicity of user experience. The current embodiment of the security and data management system deploys a novel shielding process to allow for the visual display of multiple patient names that are similar, and information that allows for the easy distinguishing of patients with similar names, but without providing too much information that would disclose the identity of the patient to someone other than the patient themselves or a provider with approved access to their medical history. FIG. 39 illustrates the shielding of patient names and identifiable characteristics while showing patient first name and last initial.

The key features deployed in the current embodiment, are the introduction of delayed search and the presentation of shielded patient identification information. The current embodiment of delayed search requires a minimum of three letters to begin searching for matching patient records, preventing the immediate display of a list of patients sorted alphabetically or by most recent device use. The delayed search requires an additional step of inputting more of the patient's name before displaying search results, and a narrowing of search results as more letters are input. The delayed search provides a specific solution to a publicly displayed treadmill interface where a patient is looking at the screen as a list of patients are presented.

The shielding of specific patient identifiers is a critical solution to the display of patient information to select a patient record. The display of first name and only last initial prevents exposing the full name of the user who is visible as a result of a similar search. The last initial provides enough distinguishing information to make it easy to decide between two users with the same or similar first names, yet a different last name. Additionally, the display of first name, last initial and birthdate (including year), provides an opportunity to identify other users of the system simply by first name and their age. The shielding of "year" in visible date of birth information eliminates the age component to patient identification and allows for an additional metric beyond last initial to distinguish between patients.

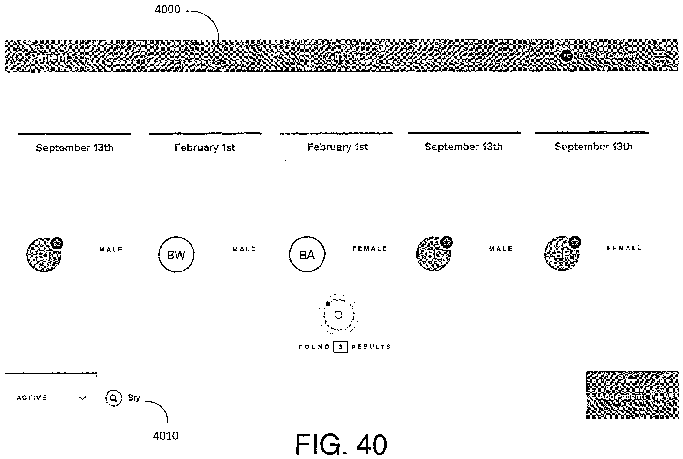

Screen shot 4000 in FIG. 40 illustrates an additional option within the shielding process. FIG. 40 illustrates a process result where the search requires a match of the first three letters of the user name, but due to the smaller number of possible "active users" on the device in the last 60 days, only date of birth (without the year) is displayed to navigate to the patient record, which would then display the full patient name to ensure the appropriate account had been selected. The verification of day and month of birth would allow for a simple patient identification, without the display of first or last name within a search results listing. This example is meant to show the flexibility of the search shielding, which could use a multitude of search and shielding criteria to limit the potential for identification of patient with similar matching characteristics. Additional examples include searching for date of birth and initials, searching for last name only with date of birth displayed, or any other combination of first name, last name, initials, month of birth, day of birth, year of birth, type of account, gender or recent activity on the AlterG system.

### Normative Comparisons

A key tool for patient evaluation in physical medication rehabilitation is the comparison to other users with similar characteristics. Providing the user's information can comprise prioritizing at least one of the characteristics. The matching step can further comprise a.) determining whether at least a portion of the user's characteristics matches at least a subset of at least one user's of the other users characteristics; b.) omitting a lowest priority characteristic from the at least a portion of the user's characteristics to create a prioritized user information set if step a produces no match using the at least a portion of the user's characteristics; c.) determining whether the prioritized user information set matches at least a subset of at least one user's of the other users characteristics; and d.) repeating steps b and c until the prioritized user information matches at least a subset of the at least one user's characteristics. In some embodiments, analyzing comprises identifying at least one other user sharing characteristics with the user and having a favorable workout outcome. The favorable workout outcome can comprise at least one of user satisfaction, obtaining the desired result and progress towards the desired result. Current medical condition can comprise at least one of original diagnosis, dates of injuries, date or type of illness, date or type of interventions, an indication of rehabilitation progress, and a previous treatment and date of treatment. In some embodiments, therapy history comprises prescribed therapy history, actual therapy history, therapy history on an unweighting system, therapy history using other equipment.

Filters to sort patient characteristics for more refined comparison are useful to be able to compare similar cases, but often lead to very refined searches with only a single comparative user or small group of users. The creation of "re-identification filters" allows the system to maintain anonymity of patient data that has been de-identified. The upholding of patient confidentiality and non-disclosure is a central tenant of the Health Insurance Portability and Accountability Act and is critical to commercialization of cloud-connected technology into the medical market.

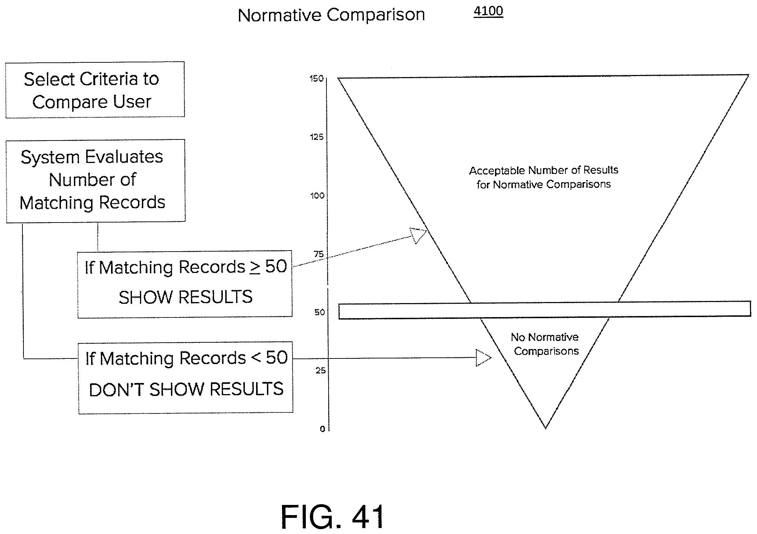

Comparison data for a medical device is typically in the form of normative data that has been segmented by certain characteristics such as age, gender, height, weight, medical condition, etc. An exemplary normative comparison 4100 is illustrated in FIG. 41. Comparative data can be broad with many data points, or small with a single data point for comparative reference. The security concern with allowing filtering of comparative data down to a single user is the ability to re-identify that single user or small group of users based on the number of metrics provided. The use of comparison or normative thresholds ensures that a minimum number of data points (users or user sessions) are added to the comparison to ensure that comparative matches are not re-identified when only a small number of matches are available.

The current embodiment uses a threshold of 50 users with matching criteria to determine normative comparisons so that individual users cannot be re-identified. The threshold works algorithmically by applying a null response if a request for normative comparison returns a subject number (n value) less than the established threshold. Users are then instructed to broaden their search criteria to allow for a search with enough matching criteria and users to meeting the minimum requirements to prevent re-identification of comparison data. FIG. 41 depicts the conditional operation of IF number of matching results is great than or equal to 50 (n ≥ 50) then the system will return results on normative comparisons. IF the number of matching is less than 50 (n < 50), then no results are returned and the user is asked to broaden the search.

An example of one embodiment might be the evaluation of a patient with knee osteoarthritis. The patient (or provider) would like to evaluate where the patient stands compared to individual of similar characteristics at the beginning, mid-point and end of a 12-week rehabilitation program. When initially setting up a normative comparison the user selects patient complaining of knee pain, age, level of pain at self-selected walking pace, and zip code. There are only 17 matching results in the system that meet the criteria the user would like to compare. The system identifies that 17 matching results does not meet the criteria for minimum number to minimize risk of re-identification and provides the user with a message indicating the number of matching records does not meet the requirements for normative comparisons. The user then removes the zip code criteria from the search and get 2,357 matching results which allows for the display of average walking speed, session duration, functional score, and level of pain improvement in the 2,357 matching records.

### Audit Logs

The access to treadmill data via remote systems is a relatively new concept that provides security concerns for most medical institutions. Strong user authentication is a necessary feature to any medically focused treadmill system, but even with high standards for authentication, accounts can be compromised. An important novel feature is the deployment of an activities tracking table in a relational database to identify every modification, access and utilization that occurs within the system. The activities table provides a high level of oversight into system access in order to identify and isolate potential security breaches or unauthorized access.

The transition of exercise equipment into the medical environment provides a hurdle of high-level access tracking to the system to be able to identify and isolate breaches to the system. The implementation of detailed audit logs of provider and patient access to exercise specific patient data has not been implemented in previous instrumented treadmills. The building of an "activities" table in the relational database provides a structure for collecting interactions with the system that can be presented back to administrators of the system. The activities table allows for segmentation of audit log data to easily identify which records have been accessed or modified.

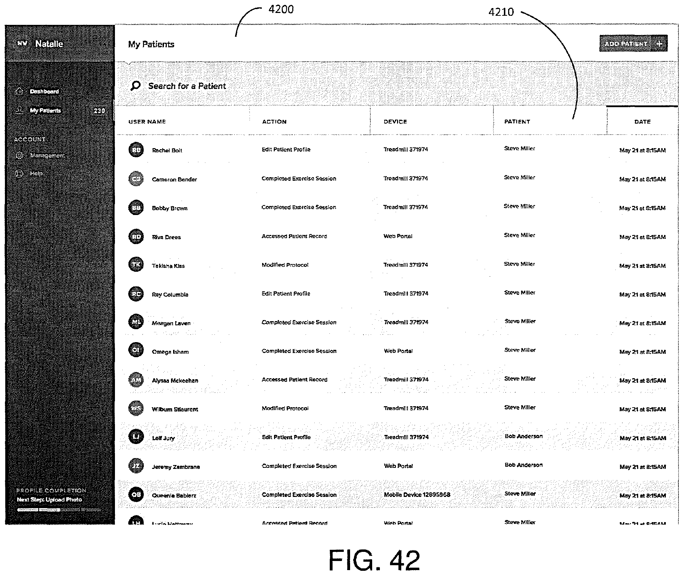

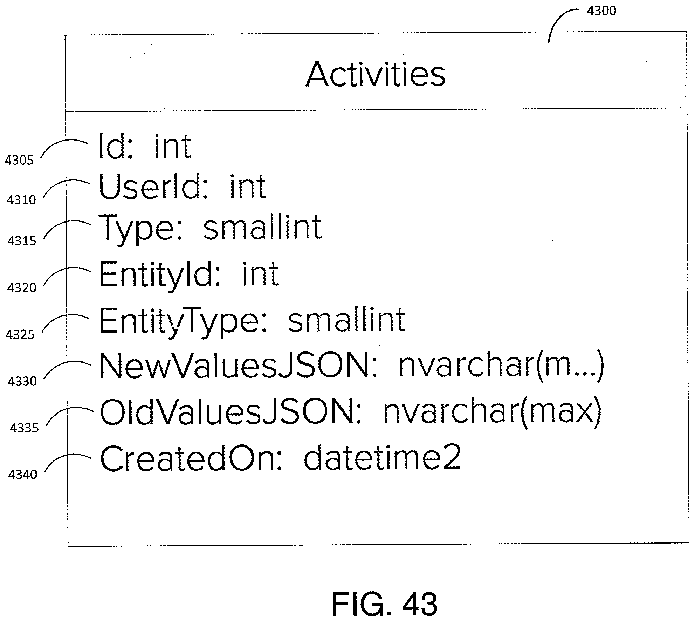

An exemplary Audit log 4210 depicted in screenshot 4200 of FIG. 42. FIG. 42 shows one embodiment of metrics that a system administrator might look at. The user name is the specific provider account that accessed the system, the action column is the specific action they took within the system (view patient information, change account details, start a session, etc.) to allow the administrator to better track what was actually occurring in the system. The tracking of actions is maintained through a data structure similar to the table 4300 depicted in FIG. 43. A number of different data fields are illustrated (4305, 4310, 4315, 4320, 4325, 4330, 4335 and 4340) and other or fewer data fields may be included depending upon the specific requirements of an audit and tracking system. Tracking actions is an important step for meeting hospital system standards of data security and privacy that does not exist in any other treadmill or exercise equipment system. The ability to track specific patient records that were accessed, the time and date that accessed occurred and the ability to create reports on filtered information provides an important infrastructure required by most healthcare system to meet the standards typically required in a Business Associates Agreement (BAA) that hospital system require of vendors. The Business Associates Agreement states that the vendor will maintain proper security and privacy of the hospitals data and will allow for specific features such as ability to audit access, define scope of breach and revoke access, none of which exist in the current treadmill or exercise equipment market with the specific standards in the AlterG system.

### Data and System Integration

The integration of exercise and physical activity metrics into the electronic medical record used by physicians and hospital systems is a new phenomenon with activity trackers and heart rate monitors beginning to integrate using application programming interfaces (APIs) that connect exercise data repositories to the Electronic Medical Record (EMR). The tracking of data requires the establishment of a user profile that affords for the simplicity of a patient record stored locally and a more robust offering of remotely accessible patient account.

### User Profiles

In some embodiments, the storage medium stores a user created account. Each user of the networked unweighting system has an associated secure profile, which contains, for example:
- Name
- Contact information (Address, City, State, ZIP Code, Country, Phone, Fax, E-Mail)
- Billing Information (Credit Card Number, Name on Card, Expiration Date, CVV)
- Age
- Height
- Weight
- User Category
- Medical Conditions (e.g. ICD-9 or CPT4) and dates of injuries, illness, and interventions
- Other requirements (e.g. lift access)
- Desired treatment objectives - walking improvement, limb strength, balance, or other
- User Type (e.g. athlete, casual, rehab, chronic)
- Workout or Therapy History (prescribed, actual, on DAP, also on other equipment as appropriate)
- Duration, Speed, Incline, Effective Body Weight, Heart Rate, Etc
- Appointment Information (past, future)
- Payment History

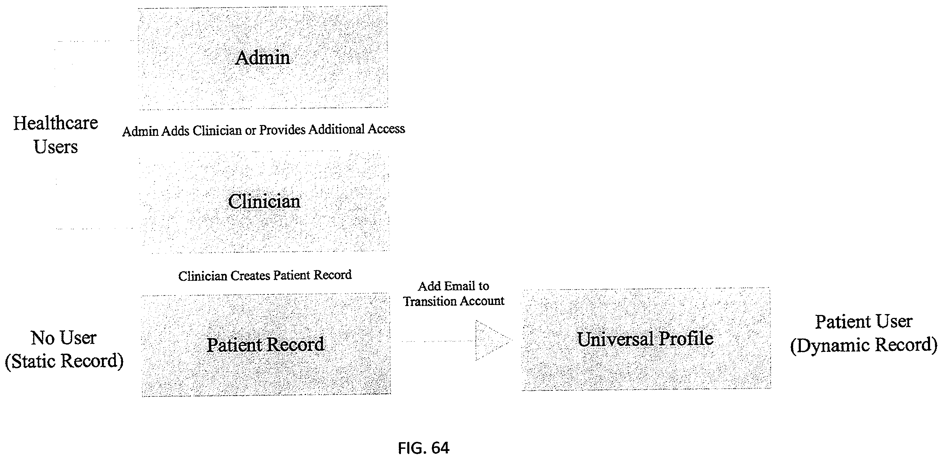

Users can be in the form of Physical Therapists who have accounts to access the system (by facility), patient records that are created by physical therapists to track a patient's progress during treatment and a universal profile, which is the transitioning of a patient record from a static record used by the Physical Therapist to a dynamic record accessible remotely. The transition of a static patient record where data is stored about a patient through the treatment process to a user-owned dynamic profile that exists outside the provider organization structure and can be accessed anywhere by the patient is a novel concept. The hierarchy of user roles and transition of static patient record to dynamic universal profile is described in FIG 64.

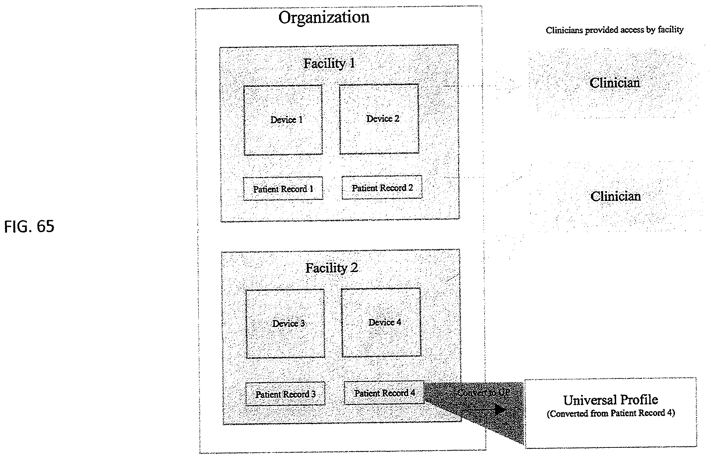

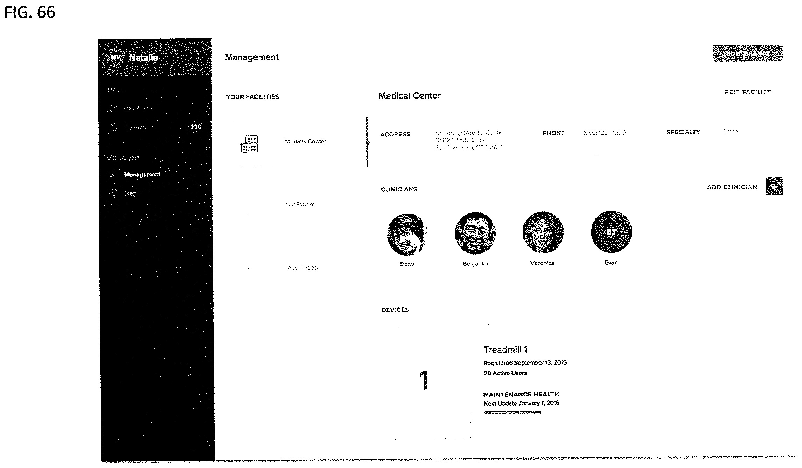

FIG. 65 describes the structure of user provisioning and authentication access to the user types described in one embodiment. In one embodiment the system is set-up in tiers of access with organizations being the highest level of structure. Facilities can then be added to an organization to differentiate between locations in a larger healthcare system. Lastly, devices (treadmills or other non-treadmill devices) can be assigned to a specific facility to allow shared access of patient records to multiple physical therapists who work in the same facility. The administrator management screen is described in FIG.66.

### System Integration

The integration of specific treadmill data including exercise intensity, walking speed, GAIT and functional performance and specifically how these metrics change throughout a continuum of bodyweight changes with differential air pressure (DAP) into the Electronic Medical Record (EMR) or an EMR intermediary is novel. The analysis and aggregation of DAP Data with a multitude of treadmill specific measures into singular scores or numerical sets of scores that can then be consistently updated into EMR or EMR intermediaries is novel.

The current problem with integration into an intermediary or directly into an EMR system is that standard measures typically include a multitude of measures to analyze progress or change over the course of an exercise session and from session to session within a differential air pressure environment. Singular metrics that consider multiple factors simultaneously, including progression, provide a much simpler form of both integration into EMR and EMR intermediaries, but they also provide a much simpler review for the user themselves. For example, a change in walking speed throughout the first session and from the first session to the last session before discharge provides hundreds of data points before factoring in the impact of varying levels of differential air pressure. An isolated metric that provides a functional score based on walking speed, differential air pressure and other metrics creates a simpler method and process for analyzing progress and communicating progress to an EMR or EMR intermediary.

The present disclosure provides a simple framework for analyzing progress considering multiple factors including speed, incline, stride length, session duration, symmetry of stride during varying levels of unweighting in differential air pressure environment that can be distilled into a single functional score metric or simple sets of metrics to analyze a multitude of different outcomes. The use of these metrics combined into a single functional score or into a relative pair score such as systolic and diastolic blood pressure or HDL and LDL cholesterol numbers provides simple and comparable objective measure to monitor progress. Implementation of metrics such as stride symmetry at varying levels of unweighting (ie 1.1/80) into an EMR intermediary for personal review or directly into the EMR provide for a more detailed look at patient function in a manageable data structure. In addition to the two metric approach a third metric could also be added to the "standard comparison formula" in a DAP environment with a pain measure of 0-10 (i.e. 1.1/80/2). The specific metrics that are novel to the DAP environment are not limited to, but include for the purpose of example: stride length, stride symmetry, functional score (combination of multiple GAIT metrics), perceived exertion, pain scale, and torso sway. The collection of these singular or grouping of metrics can also be tied to specific protocols for multiple patients to use and be compared to each other in terms of progress as it relates to their specific injury or condition.

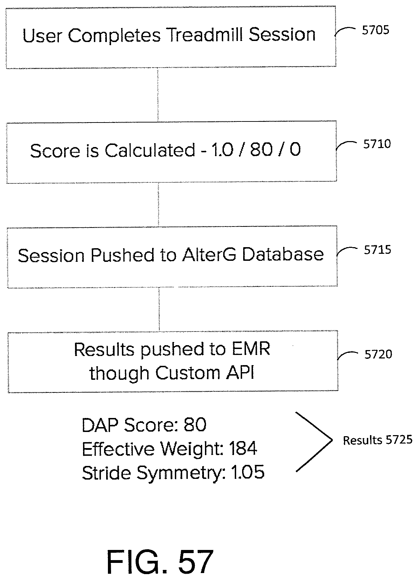

FIG. 57 illustrates an exemplary method 5700 to generate and push DAP scores 572 to an EMR. The user completes a session (5705) and a score is calculated (5710). The session results are pushed to an AlterG database (5715) and then to an EMR using a suitable custom API (5720). The DAP result 5725 is then present in the EMR. As a result, FIG. 57 depicts the structure and one embodiment of format for the integration of DAP specific metrics into the EMR or an EMR intermediary described in the following example.

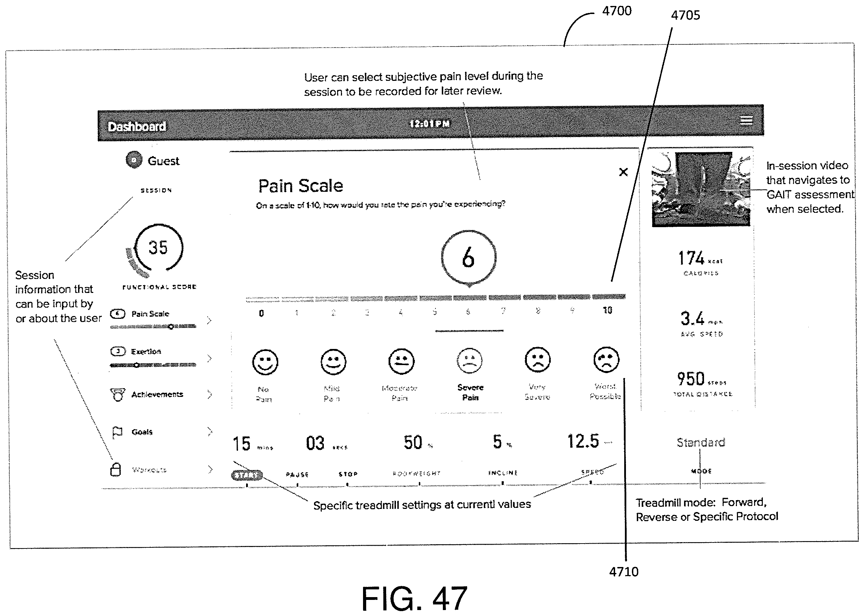

One specific embodiment of the integration of DAP specific metrics into the EMR or an EMR intermediary is the recording of data points specific to knee osteoarthritis. At the first session, or prior to the first session, the patient indicates that they feel knee pain in their right knee while walking. At the first session, the patient begins walking at 100% bodyweight at self-selected comfortable speed and inputs a measure of pain into the in-session interface as depicted in screen shot 4700 in FIG. 47. The score is recorded as 0.85/100/3 where 0.85 indicates slight favoring of the left side (no pain), 100 (full bodyweight) and 3 (pain described). The user then decreases the effective body weight using the DAP system and re-evaluates to find 1.0/80/0 indicating that the user needs to unweight 20% in order to eliminate knee pain. The number 80 could then be input into the EMR or EMR intermediary as current status of pain free walking. At subsequent sessions, the user attempts to increase the amount of weight they can sustain without feeling pain in the joint. In 3 weeks, the knee osteoarthritis patient has achieved 1.0/92/0 with a score of 92 recorded as an improvement from 80. An additional metric that could also be presented to the user and submitted to the EMR or EMR intermediary is the amount of weight the user should attempt to lose to make their actual body weight equivalent to their effective body weight at 92 unweighting. In this scenario the patient weighs 200 lbs and would need to lose 16 points to achieve an actual body weight of 184 lbs, equivalent to 2001bs at 92%. The scoring matrix could also replace percent unweighting (80 -> 92) with effective body weight, which in the previous example would be displayed as: 1.0/160/0 to 1.0/184/0.

### Exercise Prescription and Self-Guided Therapy

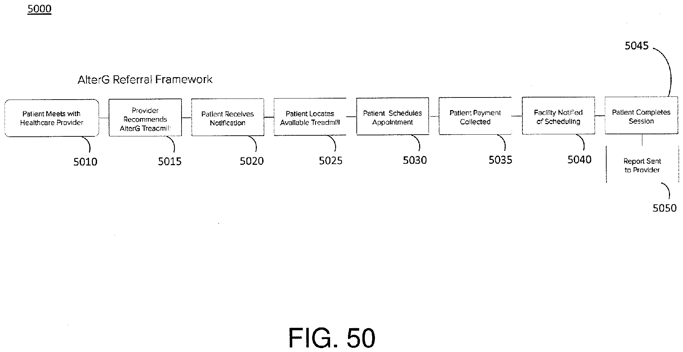

The use of exercise as a prescribed treatment plan for medical conditions ranging from orthopedic injury to chronic neurological impairments is well established. The actual implementation and management of exercise prescription has been severely limited by lack of motivation, accountability and reimbursement. The present disclosure addresses the major issues with the methodology of prescription of exercise by providing a novel digitally connected system with an instrumented treadmill and method for managing treatment. FIG. 50 outlines the user flow of patients from initial physician, healthcare provider or wellness team member visit through account creation, scheduling, payment and recurring sessions with reports.

The method can further comprise generating a recommended therapy or workout based on a medical guideline. In some embodiments, providing the user's information occurs at a same appointment or workout session as the analyzing and generating steps. In some embodiments, providing the user's information occurs at an earlier appointment or workout session as the analyzing and generating steps. In some embodiments, the generating step comprising generating more than one suggested workout routines.

FIG. 50 illustrates an exemplary referral method 5000 for accessing available medical treadmills. First, a patient meets with a healthcare provider (step 5010). Next, the provider recommends a medical treadmill including one having mechanical or DAP unweighting capabilities (step 5015). The patient receives a notification from the healthcare provider regarding the recommendation (step 5020). The patient then locates an available medical treadmill (step 5025), schedules an appointment (step 5030) and makes arrangements to pay for the session or sessions to be performed (step 5035). The facility is notified of the scheduling with this patient (5040). Thereafter, at the scheduled time the patient goes to the site and completes the session (step 5045). Thereafter, a report of the user session is sent to the provider (step 5040). In addition, depending upon the number of sessions remaining, the user will again locate an available treadmill (step 5025) and repeat steps 5030, 5035, 5040, 5045 and 5050 until all sessions are completed.

The current embodiment is a digital system that provides access to physicians and other healthcare providers on a mobile device to assess the patient, document current status and send a referral to another provider or to a specific unsupervised instrumented treadmill. The mobile application (or web application screen shot 4400 depicted in FIG. 44) provides for the creation of a patient record with the input of specific medical conditions about the patient. The system also provides the ability to invite the patient to participate in accessing their record from their mobile devices or a web application with the ability to add more information about their medical condition or subjective inputs of progress.

### Goals and Session Metrics

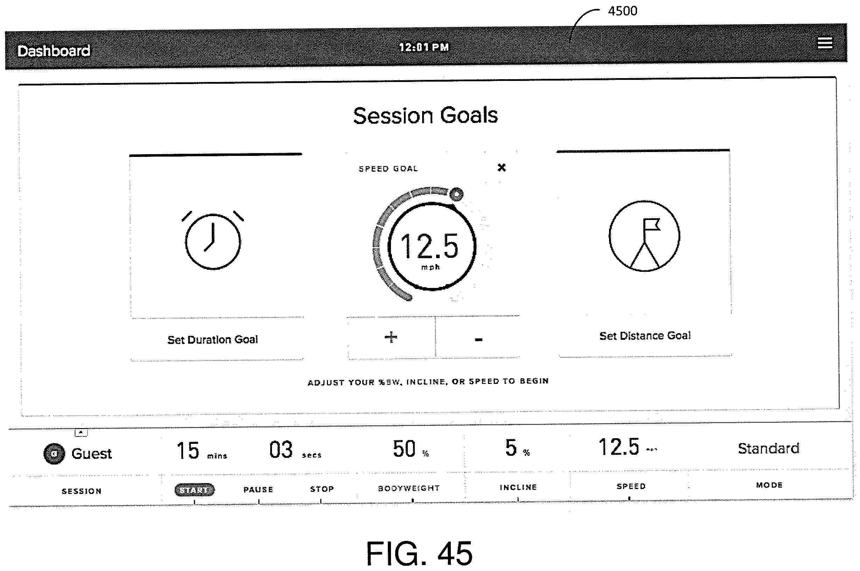

Additionally the system allows either the providers or the individual user to establish goals for their DAP session or for the entire plan of care. The pre-session goals that can be set include any combination of: speed, distance, average percent bodyweight, weight loss, pain free walking, improve walking pattern, reduce fall risk, reduce hypertension, improve blood glucose management, or any number of additional health benefits associated with exercise and exercise in a DAP environment. One embodiment of goals setting is depicted in screen shot 4500 in FIG. 45.

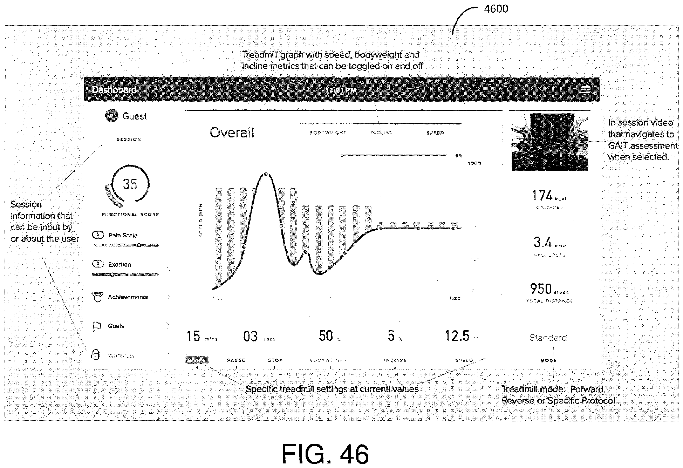

Another key feature of the system that is novel from other DAP systems is the ability to track a multitude of sessions metrics over the course of a session on the touch display screen. In the current embodiment the system allows the user to show or hide speed, incline and % bodyweight progress over time to track within-session progress. FIG. 46 illustrates a screen shot 4600 of a medical treadmill user dashboard display. In this view, the main graph interface with the underlying control labels at the bottom of the screen and a novel user menu that can be swiped upwards to reveal functional score, goals, achievements, pain scale, perceived exertion and various other metrics specific to the individual user. FIG. 47 shows a screen shot 4700 of the dashboard of a medical treadmill display showing a novel implementation of a pain scale that is a standard scale used universally (including numeric scale 4705 and pictogram scale 4710). In addition, there is a subjective pain feedback imbedded into a session graph to easily analyze pain at various levels of speed, incline and effective weight/percent of actual body weight over the course of an exercise session. The embedding of pain metrics into the exercise session provides an opportunity to later view all metrics at various levels of pain and analyze pain inputs over the course of a set of sessions or plan of care.

### Pre-Programmed Workouts

Another exercise prescription feature in the present disclosure is the utilization of pre-programmed workouts and packages of pre-programmed workouts. Workout programs may be created, edited or developed in a web environment and transferred to a treadmill with a media storage device such as a portable flash drive.

In some embodiments, a method of using an unweighting system is provided. The method comprises downloading a workout routine to an unweighting system, the workout routine comprising a desired duration, speed, incline, and level of unweighting; identifying a user to the unweighting system; performing the workout routine; and recording performance data during the workout routine in the unweighting system. The method can further comprise connecting the unweighting system to a network. The method can further comprise uploading the performance data to the network. The method can further comprise providing user or therapist feedback to the unweighting system. User feedback can comprise feedback regarding at least one of satisfaction with the workout routine, overall mood and level of pain. Therapist feedback can comprise at least one of observations of the workout routine and rating of user progress. In some embodiments, identifying the user comprises providing user information or providing an identifier configured to access user information through the unweighting system. An appropriate workout routine can be selected based on user information. In some embodiments, the appropriate workout routine is selected based on reviewing past workout routines and performance data of other users sharing one or more user characteristics. The method can further comprise adjusting the downloaded workout routine. The method can further comprise sending performance data to at least one of a doctor, and insurance provider, and a patient file. The method can further comprise sending at least one of performance data, user feedback, and therapist feedback to an aggregate user database. In some embodiments, the method further comprises adjusting future unweighting workouts based on the performance data, user feedback, or technician feedback. The method can further comprise assessing user performance after a workout session to determine whether to modify workout parameters or scheduling.

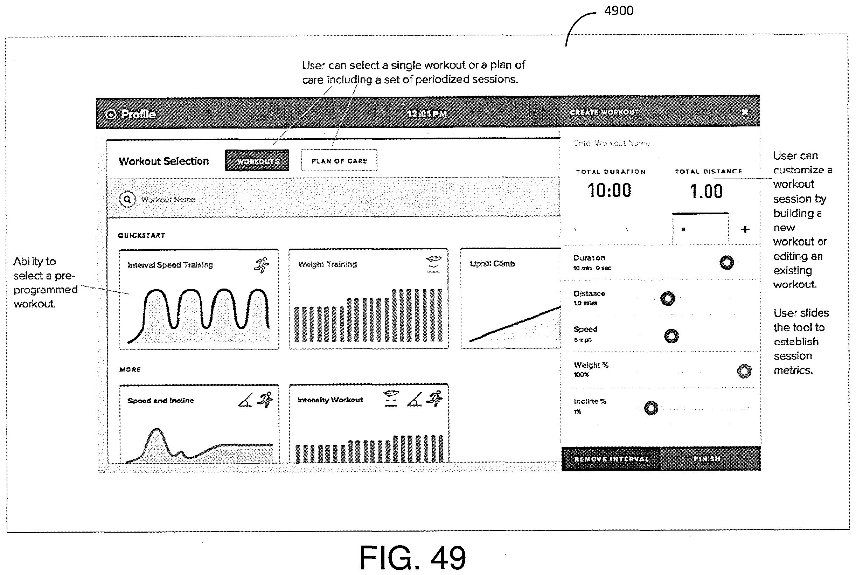

Additionally or alternatively, in various embodiments of the medical treadmill system described herein enable the creation of a pre-programmed workout on a touch-screen device, either the treadmill or DAP system itself as depicted in the current embodiment of FIG. 49, or with a mobile device, a tablet or a wearable. In still other embodiments, there are provided methods for the creation of one or more pre-programmed workouts in a DAP environment. In some embodiments, the programmed workouts are specifically focused on fitness variables such as workout intensity, interval, or fat burning. FIG. 49 is a screen shot 4900 of a medical treadmill system display for interacting with the system for creating and customizing a workout program.

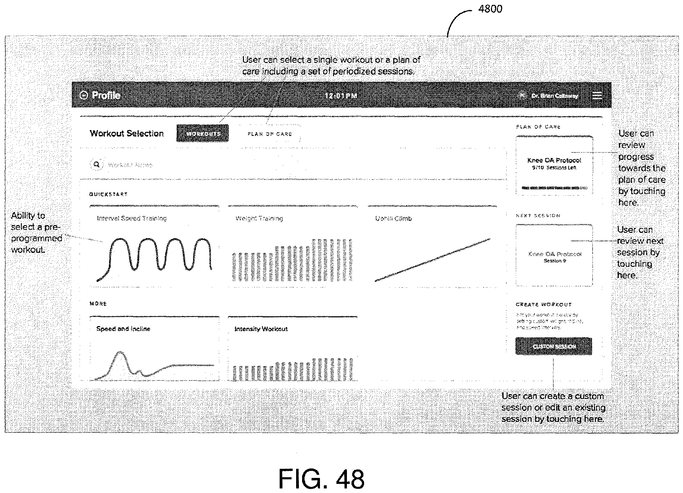

In still other methods enabled by the inventive system, there are additional approaches to creating medically specific sets of workouts. As used herein, a medically specific set or sets of workouts are referred to as a "Plan of Care". FIG. 48 is a screen shot 4800 of the medical treadmill system that displays the ability to select fitness-based single workouts or the ability to select and define a "Plan of Care" to allow the user more guidance in the rehabilitation process. The plan of care will also provide specific metrics such as comparisons to other similar users going through the same or similar plan of care. This normative values comparison is a specific example of where a threshold filter might be used as previously described and depicted in FIG. 41.

### GAIT Assessment

Another important novel approach are specific features of the present disclosure is the utilization of GAIT assessment in a DAP environment. In general, in one embodiment, a self-contained gait feedback device for detecting motion of a user on a treadmill includes an enclosure, a pair of sensors supported by the enclosure and positioned such that when the housing is coupled to the treadmill a portion of the tread is within the detectable range of the pair of sensors, a processor supported by the enclosure and in communication with the pair of sensors and having computer readable instructions to receive and process an output from the pair of sensors, and a display in communication with the processor supported by the disclosure.

While desiring not to be bound by theory, it is believed that a patient's biomechanics will change as a result of unweighting in a therapeutic unweighting system due to reduced pain or need for leg strength that the user may not possess due to injury, age, or illness. Further, a patient in such an unweighting environment has greater ability to intentionally change their biomechanics and gait patterns in response to feedback as compared to the ability to change gait patterns in a full body-weight loading environment. This enhanced ability of a patient to modify gait patterns in a unloading environment is a core distinction of the current disclosure. Due to the greater ability in such an environment to modify gait, therapy in such an environment can be more effective than in other environments when combined with gait measurement systems and feedback systems than such gait training could be without those measurements and feedback systems and can be more effective than training with such feedback in a full-weightbearing environment in which the patient is less able to modify gait patterns. Achieving proper mechanics is an important aspect to proper rehabilitation of gait and motor training.
Described herein are examples of systems and methods that are suited to the integration of measurements of gait and biomechanics with level of unweighting. Still further, aspects of the methods described herein provide for specific rehabilitation protocols integrating biomechanics measurements with unweighting which are believed to provide more effective and more precise rehabilitation as compared to conventional visual assessments by the therapist or patient during unweighting rehabilitation and more effective and more precise rehabilitation than with biomechanics measures in a full bodyweight environment or alternate unweighting environment such as a pool or harness in which gait mechanics are significantly altered by the unweighting system.

Discussed is the integration of one or more gait measurement systems for use with an unweighting system. Integrated training systems such as these will provide a greater variety of controlled training and therapy for patients of all patient categories. Impairment to a patient's ability to complete or participate fully in gait training may come from a number of sources. For example, a patient with a neurological disorder may have motor impairment along with muscle weakness. One aspect of off-loading a patient using unweighting systems to reduce the impact of the impairment due to weakness. In another example, a patient recovering from orthopedic surgery may experience pain when exercising with full weight. While this patient may physically be able to modify their gait at full weightbearing where a weak patient may not, the reduction of pain allows for the patient to mentally cope with some necessary mechanical corrections that need to be made. Another aspect of off-loading a patient using the inventive systems described herein permits unweighting the patient to reduce the impact of the impairment due to pain. These are two examples of how an unweighting system with integrated gait capabilities can assist in controllably and reliably removing common barriers to gait training.

Embodiments provide for the integration of an unweighting environment with biomechanics and gait measurements and a range of therapies for gait improvement. Gait training and biomechanics are commonly evaluated in order to assess walking and running dynamics and to assist patients or athletes in improving their mechanics. Embodiments include a range of devices such as instrumented treadmills, biological sensors for muscle activity, and video systems for monitoring and analyzing gait mechanics. One or more of these gait measurement systems are training devices that are integrated with a differential air pressure system to provide a controlled, repeatable unweighting environment for gait and walking or running mechanics. Embodiments of the present invention provide a system to retrain individuals to improve or alter walking or running mechanics by unweighting the individual in a differential air pressure environment and simultaneously measuring one or more parameters of gait or biomechanics such as stride length, ground reaction force, lateral movement of knees, angles of knees and ankles, forefoot or heel strike parameters, muscle activation patterns, or movement symmetry.

In many patients, the parameters described above are suboptimal at full weightbearing walking or running. For example, a patient with recent orthopedic surgery in one lower limb, such as total knee arthroplasty will typically walk with asymmetric motion. In an unweighting environment, such a patient can walk with greater symmetry due to reduced pain. Retraining symmetry in walking can be important in speeding the recovery of function in such a patient and reducing risk of future injury due to the asymmetry of gait in such a patient. Embodiments of the unweighted assisted gait training methods herein provide an effective method of retraining symmetry of mechanics and gait to enable the patient to practice walking symmetrically, providing feedback to the patient when such symmetry is achieved and when it is violated.

One specific aspect of treatment using this methodology is to unweight the patient and measure biomechanics, determine at what level of unweighting the desired mechanics of gait and motion can be achieved, and then provide feedback to the patient, athlete, trainer or physical therapist on an ongoing or periodic basis. Such feedback would enable recognition of proper mechanics and would reinforce more time walking or running with proper mechanics. More time spent walking or running with proper mechanics would retrain muscles in proper motion and would drive neuroplasticity to train such proper motion. Over time, as the desired gait mechanics are achieved with more consistency, the amount of unweighting may be progressively reduced in order to acclimate the user to walking or running in this new method of gait patterns until such patterns are set as new biomechanics at full gravity.

In still further additional treatment methodologies, electrical stimulation of muscles, braces to align joints, powered exoskeletal support, and other established gait training and muscle training methods may be integrated into progressive unweighting and reloading protocols to facilitate the gait training. These standard methods of gait training may be more effective when modified for performance in an integrated gait and differential air pressure environment of unweighting, where proper biomechanics can be achieved more readily for patients than in a full gravity environment.

In one aspect there is provided a differential air pressure and gait training system to improve gait training in patients with impaired biomechanics by enabling the patient to walk or run in a partial unweighting environment with feedback regarding how the patient's biomechanics are changing, so that the patient can retrain walking or running with proper biomechanics and then gradually apply this new training progressively back to a full weightbearing environment.

In another aspect, there is provided an unweighting and gait training system that enables exercise and rehabilitation of patients from disease or injury in a partial unweighting environment with biomechanics and gait feedback to reduce risk of further injury and to enable improvement of the rehabilitation protocols. In one specific example, a patient with hip fracture could exercise and walk through their rehabilitation program at the right level of unweighting to enable symmetrical walking so that they learn to walk properly, rather than learning to walk in a manner that compensates for the injured side and therefore exposes the patient to progressive further injury due to the asymmetrical walking pattern.

FIG. 3 is an exemplary method of providing therapy for patient using a differential pressure having measured gait feedback capabilities.

First, with an understanding of the different types of unweighting systems available, the patient type to use the system, and the desired therapy to be performed, select an appropriate system to perform therapy with a user. For example, focusing on DAP systems, a number of systems types for categories 1, 2 and 3 are provided in the ' 124 application. A category 1 system includes for example FIG. 2A of the '124 application. A category 2 system includes for example FIG. 7A of the '124 application. A category 3 system includes for example FIG. 1A and 19 of the '124 application. A category 4 system includes for example FIG. 19A of the '307 Application.

Next, customize the system to this patient. Customization may take on many forms such as based on the specific type or configuration of the unweighting system being used, personal calibration techniques, or inputs of specific patient parameters, or protocols or patient specific training goals.

Next, the user performs the therapy in the system according to the input program or protocol.

Next, the system will collect gait and unweighting and other system parameters while therapy is ongoing.

Next, the system will analyze the collected data.

Next, determine whether to adapt the therapy based on the prior analysis step. One result of this step is to adapt the therapy and continue to perform the therapy as adapted. Another result is to continue to perform therapy without adapting the therapy based on the analysis.

One example of the format of a data table for an integrated differential air pressure and gait measuring and training device is show in FIG. 4. This representative data system envisions collection and synthesis of data from several data streams depending upon the specific configuration of the system being used for therapy. The contents of FIG. 4 (i.e., the data table or variables collected, controlled, processed or manipulated by the control system) will vary to the degree needed to include collection of the various continuous, nearly continuous or segmented data streams including synthesized data from the therapy system.

Simultaneous data collection refers to the general process of collecting data from multiple data streams under a common time stamp. It is to be appreciated that embodiments of the various inventive unweighting gait training systems described herein may be adapted and configured for this purpose. However, the various systems may also be adapted and configured to synthesize the data that is being collected from the systems, subsystems, accessories, and sensors as shown in the exemplary data table (See FIG. 4). As used herein, synthesis of data refers to the integration of the independent data streams collected into another set of data or stream of data used in conjunction with the therapy or training undertaken in the system. Synthesis goes beyond basic data collection in that the data is put together to straight-forwardly assist the patient or therapist understand the workout from a quantitative standpoint. Data collection systems just record data, but do not take steps towards helping a patient or therapist who do not have training or experience with the direct data being collected. In one alternative, the type of data synthesis is derived from the type of patient receiving therapy and the specific system selected for his patient category (i.e., class 1, 2 or 3). As such, the type of patient or system is one factor in determining the type of data synthesis needed for a specific patient therapy session or course of therapy. In still further alternatives, the data collected from one component is used to indicate the relevance of a subset of data from another source. In one specific example, there is a camera providing a high definition video stream of a post knee surgery patient's knee movement during therapy. The storage and later processing requirement for such a high volume of data may be a difficult and time consuming task. In one specific example of data synthesis, a force sensor on a treadmill is used to indicate heel strike and triggers the capture of a video stream that runs for a set time limit. In another specific embodiment, there is also a loop recorder used in conjunction with the high definition video stream. In this example, the heel strike sensor, employed in conjunction with a timing offset, is used to trigger the capture of a portion of the high definition stream in the loop just prior to the heel strike reading. Thereafter, the data stream is stored for an additional timing factor after heel strike. During the use of this data, the relevant portion of the video is now cut down to and synchronized with the recording or relevant trigger, here a heel strike reading in this example. FIG. 28 illustrates the selective combination of heel strike data with video stream data to represent the collection of frame grab or snippet of unweighting and gait data. The data or data stream can be presented in real time, or packaged in a way to inform a doctor, therapist, shoe maker, etc. of the state of the patient.

In still another example, a self-contained biometric sensor system - referred to herein as GaitBox - is another form of Gait system sensor that may be employed according to the various Gait techniques described herein. The GaitBox provides accurate, real-time measurement of basic gait parameters on any treadmill. The basic gait parameters are: Speed (distance divided by time);Cadence (number of steps per minute);Left/Right Stride Length (distance between successive impacts of same foot, e.g. left-foot-impact to left-foot-impact); and Left/Right Stride Time (time between successive impacts of same foot). Other additional gait parameters include, by way of example and not limitation, foot placement phase asymmetry (right to left step time compared with left to right step time) and stride time jitter (variation in timing between subsequent footfalls on the same or opposite sides).

A GaitBox is shown on the treadmill frame in FIG. 5A. Additional details of GaitBox as set forth below with regard to FIGs. 32A and 32B.

Other more advanced types of synthesis are also performed by examples of the inventive system. In another exemplary system a data stream that is being collected may be processed prior to or in conjunction with recording. Here, processing may take on a number of different forms such as applying a patient specific factor such as a calibration factor or other metric associated with a specific patient. One example of a kind of data synthesis is shown in FIG. 29. FIG. 29 illustrates how the left and right load cell force data may be matched with a clock signal to provide an indication of unweighting assisted force asymmetry data. The unweighting assisted force asymmetry data is then provided to the user in a simple display or other feedback technique such as the indicator shown on the right side of FIG. 29. The placement of the arrow in the middle is the desired location. As the user trains, the detected force asymmetry will cause deflection of the arrow. As the patient alters his gait, the arrow moves in a corresponding direction.

Another example of a kind of data synthesis is shown in FIG. 30. FIG. 30 illustrates how the left and right load cell contact time data may be matched with belt speed data to provide an indication of cadence asymmetry data. The cadence asymmetry data is then provided to the user in a simple display or other feedback technique such as the indicator shown on the right side of FIG. 30. The placement of the arrow in the middle is the desired location. As the user trains, the detected cadence asymmetry will cause deflection of the arrow. As the patient alters his gait, the arrow moves in a corresponding direction.

Another example of a kind of data synthesis is shown in FIG. 31. FIG. 31 illustrates how the left and right heel strike data may be matched with a hip rotation accelerometer data to provide an indication of upper body phase coordination data. The upper body phase coordination data is then provided to the user in a simple display or other feedback technique such as the indicator shown on the right side of FIG. 31. The placement of the arrow in the middle is the desired location. As the user trains, the detected upper body phase coordination data will cause deflection of the arrow. As the patient alters his body phase coordination, the arrow moves in a corresponding direction.

Another form of processing may be the application of use factors, calibration settings or auxiliary component settings applied to data streams based on the kinds of specific systems, auxiliary systems or components utilized in a specific training scenario. In this way, data can be collected in a raw form as well as with normalization factors to standardize data collected from different sensors, components or patient settings. Thusly, data collected for different patients using similarly configured systems but with different components may have data collected that will permit the patient specific data to be compared and/or aggregated for wide spread data collection. Consider this specific example. A normalizing factor would be the factor used where a CAT 2 training system with a shoe sensor from vendor A and a post-surgery knee male in Toledo and a CAT 2 training system with a shoe sensor from vendor B with a post-surgery knee male in Topeka will each record the respective patient's own raw data but there will be corresponding normalized data that eliminates the variations (if any) between the sensors from different shoes and different vendors. In a similar way, where needed based on specific circumstances, all or some of the components in the system (See FIG. 4) may be processed such that a common or normalized data setting may be applied so that when data is collected from systems with different specific components, the data streams may include both raw and normalized. In one specific embodiment, the application of one or more normalization factors is one kind of data synthesis.

In still another type of data synthesis, the data from one or more data streams may be used in calculations or further processing to yield a determination or outcome related to the input data streams or according to the therapy being undertaken. One example is the use of an algorithm to perform transformations of one or more data streams. The output of these functions will be stored along with the other recorded data. In still another example, an algorithm may include various weighting factors to a data stream such that some data may be processed in a manner consistent with the type of therapy being delivered. In still further specific examples, a processing algorithm may include fuzzy logic or artificial intelligence using a computer processor adapted and configured for that purpose.

Current state of the art therapy uses unweighting technology to unweight a patient while the physical therapist provides feedback by viewing the patient as they work out. Some systems incorporate a video feedback element that allows the patient to view themselves from various angles. By using only one type of feedback, there may be optimal treatments that are left unidentified by the therapist. By integrating multiple measurement systems with an unweighting system, synthesizing the data streams, and presenting the information in an appropriate way, a therapist would have the ability to utilize information that has only been able to be gathered in a laboratory setting in the past. The therapist would have the ability to then analyze and more effectively set workouts for the patient to improve recovery time.

FIG. 5, for example, illustrates a patient a using a DAP system with cameras, ground force sensors, and inertial sensors on the user's legs and hips. In this view, the pressure bag that normally covers the frame and defines the pressure chamber is removed to permit the interior details of the pressure chamber and the instruments contained therein to be observed. Throughout the workout, the system takes data about the user's gait, speed, incline, and effective bodyweight. That information is synthesized and given to the therapist during or at the end of the workout. In one alternative, the therapist can then watch a video that shows the patient's movements, speed, weighting, and the angles of the hips at each point. The therapist can use that information to more effectively set the next workout, leading to better recovery times. Due to the placement of the sensors, biomechanics points such as the user's hips, that are not visible through the enclosure of a current DAP system, can be measured, tracked and evaluated.

FIG. 6 illustrates a more specific work flow of the therapy and training process described. FIG. 7 is an exemplary data stream and synthesis flow for the above described example. While the example is described with particular respect to DAP systems, other unweighting systems are also contemplated. FIG. 8 is a specific patient training example for the above described system and technique of training.

While the method of FIG. 3 provides a general procedure for conducting therapy using differential pressure and date measurement feedback, there are alternatives to be provided by the therapy system. These alternative outcomes based on the "adapt therapy" step will now be discussed from a manual feedback to a generally increasing automatically controlled feedback system. It is to be appreciated that while these alternative feedback mechanisms are described as discrete separate configurations, the system may adapt any or all of these feedback mechanisms for any particular user, specific training session, or ongoing therapy protocol.

FIG. 9 describes one alternative outcome based on adapt therapy step. In this outcome the system provides an output of results. Next the user will interpret the output of results. Then, the user makes an adjustment to the therapy system based on the user's interpretation of the results. Thereafter, the therapy session will continue or be set for the next training session.

FIG. 10 illustrates one exemplary system using multiple gait analysis tools and unweighting to provide real-time feedback to assist patients and therapists. In this view, the pressure bag that normally covers the frame and defines the pressure chamber is removed to permit the interior details of the pressure chamber and the instruments contained therein to be observed. To help the therapists identify better treatments, incorporating an analysis aspect into the first system would allow the therapists to receive real-time input on ways to improve the workout from a quantitative standpoint. The state of the art treatments now use either video feedback or force sensors with unweighting to show the therapist or patient limited aspects of their gait. By integrating and synthesizing multiples sensors and measurement systems together, and providing analysis, the patients and therapists will be able to more accurately and thoroughly judge and correct or modify gait in a desired fashion.

That system can be extended to include feedback from other sensors used to capture gait, workout parameters, other physiological measurements, or psychological elements according to specific system, component, therapy or patient requirements. Integrating data from, for example, EEMG sensors and inertial sensors into understandable information would give a depth of information to a patient or therapist to adjust their gait with the assistance of unweighting that does not exist today. Further, in an unweighting environment, such data is more useful to a patient and therapist than it would be in a full weightbearing environment because of the greater ability of the patient to adjust gait mechanics in the unweighting environment. Similarly, the unweighting environment permits greater ability to adjust gait desirably in response to these inputs than does an alternate environment such as pools or harness systems in which the gait measurements would be altered by the forces and restrictions placed on the user by the harness or pool environment and the ability of the user to adjust gait is less in such environments than in an unweighting environment.

FIG. 11 illustrates an exemplary data collection and information processing flow for this specific system configuration and therapy example. FIG. 12 illustrates one exemplary work flow scenario. FIG. 13 is one example of a patient specific therapy procedure using the system and methods above. The patient in this example would likely use a category 2 or category 3 DAP system as described in the '124 application.

FIG. 14 differs from FIG. 9 in the outcome based on the adaptive therapy step in that the system will now provide a recommendation for gait correction. In this alternative outcome, the system provides an output or results with a recommended action. Exemplary recommended actions might be a biomechanical adjustment for gait correction. For example, the system may indicate for the user to change the orientation of their foot, rotate their ankle, bend their knees more, or other adjustments that are based on analysis of the patient gait data to correct or modify that patient's gait. Another exemplary representative recommended action would be for the system to recommend repeating the last gait therapy routine however at a different amount of differential pressure assist. For example, in one possible embodiment, if a desired gait pattern were achieved at a certain degree of unweighting, the system could recommend to the patient every few minutes to slightly increase the amount of loading by unweighting less in order to find the point at which desired mechanics patterns are no longer maintained. This would permit precise determination of the unweighting level needed to train proper mechanics for this patient. Other recommended actions are possible based on the specific patient performance and performance parameters entered into the treatment system. The user next is allowed to accept or reject the recommended action or to accept with modification the recommended action from the system. Thereafter the system performs the therapy either as a next segment of training or in a subsequent training session.

FIG. 15 differs from FIG. 14 in that the outcome based on the adaptive therapy step is more automated in the system's response to the users performance. Here again the analysis is performed based on the collected data and the patient performance. The system analysis will generate an output for the system adjustment based on the accepted protocol. Here this protocol might be for specific postsurgical training, gait correction, or other patient specific therapy endpoints. A significant advantage to this type of system is that it will be able to modify gait in ways a therapist could not. As an example, research may show that attempting to develop a slightly asymmetrical gait in an unweighting environment produces better results at full weightbearing. The system would be able to adjust speed, incline, and bodyweight between left and right footplants, or plant vs. pushoff stages of walking or running. A therapist would not be able to control a system that quickly and accurately, where a fully automated system could. Next, the system will implement the adjustment to the therapy and the therapy session will proceed in the next segment of treatment or in the next session of treatment. Optionally, the system's ability to implement an adjustment to the therapy is limited. This limit is set on the amount that a control parameter can change per session or per training increment during a session. In this way, the system may be able to only change the system parameters within an established safe limit of parameter change for this patient type, age, previous performance, established protocol, or other safety related parameter for system adjustment.

FIG. 16 differs from FIG. 15 in that the outcome based on the analysis is generated by and automatically implemented by the system. This version of the system provides integrated and automated correction of gait therapy and differential pressure support parameters based on patient performance, gait data collection and analysis, and specific inputs of a patient training protocol. Here again the adapt therapy step is based on the prior analysis of collected data and review of patient performance and other parameters. The system analysis will generate an output for system adjustment based on the patient protocol. The system output and adjustment will be applied to the system during therapy with or alternatively without notice to the user depending upon patient specific training parameters. Thereafter, the therapy will continue using the adjusted system parameters.

FIG. 17 illustrates a system using gait analysis tools to directly control workout parameters. In this view, the pressure bag that normally covers the frame and defines the pressure chamber is removed to permit the interior details of the pressure chamber and the instruments contained therein to be observed. If the analysis of the incoming sensor data is appropriate, the system can be extended to directly control workout parameters to automatically optimize a therapy session to improve specific aspects of gait. The system would take input from the sensors such a EMG, video, inertial, and ground force; then evaluate what workout parameters (effective bodyweight, speed, incline, balance, etc...) need to be adjusted to optimally improve the patient's gait. The system can also monitor the gait changes observed during the session to determine if the desired improvement is achieved and test alternate parameter settings within allowed ranges while providing feedback to the patient to assist in guiding patient-directed gait modification attempts while measuring the changes in gait patterns made in response to this feedback. The feedback loop between the patient, the system's sensors, the changes in workout parameters, and the methods of directing gait changes can iteratively interact to enable desired gait modification to be achieved. This allows a patient to recover more quickly, and allows a therapist to concentrate on other aspects of patient health improvement.

Therapists would be enabled to set bounds for how much the workout parameters can change, so as not to cause an injury or overwork the patient. Limitations on particular aspects of the therapy could also be accessed from a database based on research, a physician's recommendations based on the procedure or from a database of comparable patent and/or system configurations therapies and outcomes. Therapists would also be enabled to set specific desired gait parameter changes or targets desired so that the feedback process could be directed by the system to reinforce and enable incremental improvements toward the desired gait mechanics patterns.

FIGs. 18 and 19 provide examples of a work flow (FIG. 19) and data stream/synthesis (FIG. 18) for the exemplary system. FIG. 20 provides one specific example of how a system may work is that the therapist sets the system to improve the pronation of the foot during the push-off phase of walking. The patient in this example would likely use, for example, a category 1 DAP system as described in the '124 application. The therapist also sets the maximum speed at 2 mph, so as not to cause the patient to start running. The system will then go through a diagnostic process where it changes weight, incline, and effective bodyweight while providing audible, visual, tactile or other feedback to the patient regarding the parameter to be modified, determining which combination of settings enables the patient to achieve the best pronation of the foot. As the workout goes along and the patient works on improving their pronation, the unit can incrementally increase the effective bodyweight as a means to eventually train the patient to pronate their foot at full bodyweight. If the system starts to detect the user is having trouble pronating, it can also either slow the treadmill or unweight the patient to a greater degree to give the user more time to pronate the foot or reduce load on the foot to enable better pronation. At the end of the workout, the therapist would receive a report of how the user progressed and a suggestion for where the next workout should begin.

FIG. 21 illustrates still another exemplary system using gait analysis tools, unweighting Technology, and biofeedback to train and/or improve gait. In this view, the pressure bag that normally covers the frame and defines the pressure chamber is removed to permit the interior details of the pressure chamber and the instruments contained therein to be observed. With regard to the training technique of FIG. 21, an additional feature is the continuous recording of the electrical activity of the muscles in the form of electromyograms (EMGs). These are real-time recordings of the electrical activity of the muscles measured with surface electrodes, or, optionally, with fine wire electrodes, or with a mix of electrode types.

FIGs. 22 and 23 provide examples of a work flow (FIG. 23) and data stream/synthesis (FIG. 22) for the exemplary system. FIG. 24 provides a specific example for a patient undergoing such therapy. The patient in this example would likely use a category 3 system as described in the ' 124 application. In one specific aspect, some patients undergoing gait correction therapies may have suffered an injury that impedes the normal biological feedback loops that exist in the body. For example, a stroke patient may no longer be able to feel pressure in their right leg as sensitively as they feel pressure in their left leg. This will cause an asymmetry in gait that needs to be corrected. Even with gait analysis and automatic workout adjustments, the patient may still have problems achieving regular gait due to the damage to the biological feedback loop of the patient. In current therapies, the therapist manually adjusts the position of the patient's legs. In a differential air pressure environment, access to the patient's lower body can prove difficult. By adding some other form of biological feedback being controlled by the system, a patient may be able to more rapidly achieve proper gait mechanics, without the necessity of a therapist manually manipulating the legs.

In various alternative embodiments, there may be used one or a variety of types of biofeedback integrated into a system with gait measurement, analysis, and unweighting based upon the specific therapy needs of a specific patient or class of patient. For purposes of illustration, exemplary types of biofeedback may include indicators to give the patient a sensation that triggers the patient to act such as an audible alarm when the patient needs to lift their leg, an electronic stimulation sequence that starts a muscle firing sequence to extend the foot, a visual cue and the like. One additional aspect of the embodiment of FIG. 21 is the provision for the full stimulation of designated and associated action groups to help with training of a targeting muscle group. The full stimulation may be caused by electronic stimulation controlling one or more muscle groups as well as mechanical apparatuses that work to augment the function of one or more muscle groups. In one example, the targeted stimulation area is a muscle group. In another, the targeted muscle group is a tendon group or area. For example, when the leg is being raised, flexor and associated tendons in the lower hamstring area on the back of the leg are optionally subject to vibration or another type of full stimulation. This is thought to strengthen the desired nerve pathways to allow the patient to develop toward over ground locomotion. Therapeutic stimulators meant to provide sensation may provide electrical stimulation or may be vibrator or other tactile stimulators or other sensory stimulators triggered in synchrony with the therapy, as needed.

### Examples

In one example, a Differential Air Pressure System having gait correction capabilities integrated with a prosthesis or other proprioceptive feedback or training device. In this specific example, the integration of a differential air pressure system with gait capabilities as described above with machine control capabilities, enables feedback or training using muscle memory motion via an assistance device. Additionally or alternatively, there may be modifications to the control system depending upon the control requirements of the type of motion assist device incorporated into the DAP system.

In still another example related to a sensor of the type worn by a patient, the patient may wear shoes having integrated instrumentation such as, for example, motion sensors, inertial sensors, force sensors and the like. The shoe may store the data collected from the onboard sensors onboard for later incorporation and synchronization with other system collected data. Additionally or alternatively, the shoe may include transmission capabilities to send data from the shoe to a suitable receiver on the system. In this way, data from the shoe(s) used by the patient are included into the simultaneously collected data stream as discussed above. In still another embodiment, the shoe sensor is used to record patient activity while outside of the differential air pressure training system described herein. Data may also be collected from sensors worn outside of the training and integrated with the data collected when using the unweighting system with integrated gait capabilities. This would for example enable the system to determine differences in gait pattern evident while training at partial body weight with the sensor data indicating gait parameters in full body weight locomotion. Still further there is provided access for collection of other exercises conducted in support of the patient training. For example, a patient conducting strength training in addition to unweighted gait training may have that training data downloaded or entered along with the unweighted gait training data in order to have a comprehensive data set collected in the unweighted gait system that reflects the patient's entire training and therapy effort. For example, a patient with a stroke causing impairment in one leg, may have strength training data in that leg correlated by the system with gait changes to determine which strength training processes are helping to improve gait and to reinforce which specific muscle groups need further therapy for flexibility, strength or other parameters in order to achieve desired gait improvement.

In one specific example, there is a shoe based sensor system that collects and stores or collects and transmits data on various pressure points to provide gait instruction while using a system described herein or performing one of the illustrative methods of therapy. The DAP gait system integrates with the shoe based data collection system in a feedback loop to unweight a patient to achieve desired gait, and then capture data or, optionally, provide biofeedback based upon sensor inputs when they are off the treadmill in normal activity. In this way, the integrated DAP gait training system becomes part of the treatment modality to use unweighting therapy and biomechanics training as part of the feedback loop to accelerate biomechanics modification.

In still another specific example, patient uses a system with gait training capabilities to unweight and retrain while integrating foot sensor data to achieve desired patterns. The patient practices during several thirty minute sessions at slowly progressing reloading while maintaining the desired pattern. When the patient can achieve the desired sensor and biomechanics pattern at 90% of body weight, the patient is provided shoes with the sensors to take home and use regularly recording the data and feeding back real time data to a mobile device such as a cell phone, personal data assistant (PDA) or smart phone. The data tracking shows how closely the patient is adhering to the desired walking mechanics achieved in the unweighting environment and what deviations are monitored. The next session on the unweighting gait training system, the gait training protocol uses that data to determine unweighting and a training program that specifically helps correct the poor mechanics tracked in the full weightbearing environment. When proper mechanics are achieved in the unweighting environment, another series of 30 minute practice sessions using those mechanics while unweighted with biofeedback to maintain proper gait is provided to help the patient relearn proper gait mechanics. This pattern is repeated several times until the patient reliably and repeatably adopts the new gait pattern and maintains that pattern in full gravity walking.

FIGs. 25, 26, and 27 are flow charts of additional patient training work flows using the unweighting and gait systems described herein.

In some embodiments, the sensors used in conjunction with gait analysis (e.g., symmetry sensors, left/right force variance sensors, etc.) and/or the gait analysis can be used to determine the need for an orthotic device for a user. The system can be configured to select an appropriate type of orthotic or prosthetic for the user based on the gait. The orthotic or prosthetic can be selected so as to improve gait. The system can be configured to direct a user to options for purchasing the device.

The various embodiments of an integrated unweighting and gait training described herein also includes a computer controller in communication with the various system inputs (see, e.g., FIGs. 4, 7, 11, 18, and 22) as well as other components for the control and monitoring of the therapy system. In some embodiments, the system receives inputs from data collected by GaitBox used with the system. A keyboard and a monitor attached to the system or available during use enables the user or a trainer/therapist to input selected unweighting, calibration, kinematic parameters, gait parameters, dynamic stepping parameters and other parameters depending upon patient therapy objectives and system configurations into the computer-based control and performance monitor system. The term user, here, covers the patient and/or a therapist and/or a physician and/or an assistant. A user interface to the system is implemented by a keyboard/monitor setup or GUI screen or touch pad or wireless controller attached to or in communication with the system control computer. In one aspect, the input device is easily reachable by the patient, as long as the patient has enough use of upper limbs. It enables the user (therapist or patient) to input selected kinematic and dynamic stepping parameters, treadmill speed, unweighting and other system specific parameters into the control and monitor system. A condensed stepping performance can also be viewed on this monitor interface in real time, based on preselected performance parameters (see e.g., the display in FIG. 5 or FIG. 10). It is to be appreciated that display in that configuration or in others may be modified to include an externally located digital monitor system displays the patient's gait and/or stepping performance in selected details in real time. In one aspect, the display is triggered for collection or display based on other parameters such as in the heel strike example above for recording a video data stream of knee bend.

In addition, the system control computer includes the components and subsystems used for a data recording system that enables the storage of all training related and time based and time coordinated data, including electromyogram (EMG) signals among others as illustrated and described above in FIGs. 4, 7, 11, 18, and 22. In addition or optionally, the system receiver inputs from data collected by or provided from a GaitBox used with the system. This collected data may be used in real time or near real time during a therapy session. In still further examples, the collected data may be stored for off-line diagnostic analysis, therapy adjustment and planning with other patients of similar type. The architecture of the data recording part of the system enables the storage of all training related and time based and time coordinated data, including electromyogram (EMG), torque and position signals, for off-line diagnostic analysis of patient motion, dependencies and strengths, in order to provide a comparison to expected patterns of nondisabled subjects. The system will be capable of adjusting or correcting for measured abnormalities in the patient's motion. In still further alternatives, the data collected may be normalized to a common data collection standard for differential air pressure treatment systems to remove variations in specific equipment, components, measuring devices and the like. The normalization or standardization of data collection enables the data collected from one patient to be used to guide the therapy of another patient by showing performance parameters and system configurations.

In one aspect, it is to be appreciated that the integrated unweighting system with gait measurement may be operated to use differential pressure assistance to selectively and controllably adjust the mechanical load acting on the patient while optimizing the work or therapy performed by the patient to provide effective stepping and standing during therapy along with measurable and repeatable data collection, synthesis feedback into specific therapy regimes and protocols.

In still another aspect, the systems and method of gait training described herein (optionally including the use of a GaitBox for data collection) provide a true user controlled gait training environment. The integrated unweighting and gait measurement systems of FIGs. 5 and 10, for example, provide the user or trainer with feedback that permits the immediate connection of alteration of system parameters or gait change to feedback. The ability of a user or trainer to see immediately the outcome of the latest change to system settings or gait modification as improving, worsening or have no impact is an important link in the therapy chain as yet unattained by conventional training systems. The freedom of range of motion provided by the unweighting training system minimizes or reduces the impact of patient off-loading from adverse gait impact. In other words, other patient assist devices such as harness or suspension systems tend to alter gait artificially rather than permitting the uninhibited range of motion afforded in an unweighting environment.

The GaitBox provides accurate, real-time measurement of basic gait parameters on any treadmill.

The basic gait parameters are: Speed (distance divided by time);Cadence (number of steps per minute);Left/Right Stride Length (distance between successive impacts of same foot, e.g. left-foot-impact to left-foot-impact); and Left/Right Stride Time (time between successive impacts of same foot). Other additional gait parameters include, by way of example and not limitation, foot placement phase asymmetry (right to left step time compared with left to right step time) and stride time jitter (variation in timing between subsequent footfalls on the same or opposite sides).

FIG. 34 illustrates a method of calculating a variety of factors.

In one aspect, to calculate these values when someone is walking or running on a treadmill requires:
- An accurate (microsecond resolution) clock
- The speed of the tread belt
- The time of foot impact, and
- Which foot (left/right) impacted the tread deck

In one embodiment, the GaitBox obtains these measurements in the following ways:
- Accurate clock - the various sensors are attached to a microprocessor which has a regular clock interrupt with 4 microsecond resolution.
- Tread Belt Speed - an infrared emitter/detector pair (sensor) is positioned over the treadmill belt so that reflectivity of the belt surface under the sensor can be measured. A strip of reflective material of a precise, known length is applied to the treadmill belt, so that reflectivity of the belt surface changes dramatically while the strip is under the sensor. The duration of the period of high reflectivity (as measured by the microprocessor clock) gives the treadmill speed. For example, if a one-foot strip of reflective material takes one second to pass under the sensor, the speed of the tread belt is 1 foot/second, or approximately 0.68 miles per hour. At higher speeds, once the system has been calibrated to the known length marker, front to front or rear to rear edge detection can also be used for greater accuracy for a given sampling rate.
- Time of foot impact - an accelerometer is attached to the treadmill frame. When a foot impacts the tread mill deck (which is supported by the treadmill frame, perhaps with cushioning), the resulting acceleration of the deck is transmitted to the frame and sensed by the accelerometer and "stamped" with the elapsed time in microseconds as measured by the microprocessor clock. An acoustic sensor can also be used to detect for impacts. Alternatively, a different marker of stride periodicity can be used, such as when each leg passes in front of the proximity sensor or sensors.
- Which foot - an infrared proximeter is mounted so that its beam (and hence area of detection) is directed perpendicular to the direction of belt travel. The "near foot" (closest to the proximeter) interrupts the beam twice: once briefly, during the swing forward (towards impact) and again when the foot is planted on the treadmill, moving backwards. When swing forward is detected, the next impact will be for the "near foot" (left or right depends on the side to which the GaitBox is mounted).

FIG. 32A is a perspective view of a GaitBox. The GaitBox is an enclosure with a pair of sensor (S1, S2) positioned in an appropriate location and aspect on the enclosure to obtain information for user calculations as described above. Shown in phantom on the top of the enclosure is an optional display.

FIG. 32B is an illustration of the functional components of a representative GaitBox. The sensors (S1, S2) may be any sensor suited to obtaining the user parameters described herein. Exemplary sensors include IR sensor, optical mouse style laser sensors, proximity sensors, light or other sensors suited for use in the GaitBox operating environment. The processor includes the computer readable instructions to receive and process the output from the sensors (S1, S2). The process may provide the outputs listed or other outputs as desired for any of the above-described Gait analysis or system implementations. As illustrated, the processor may provide an output to a display that is on the GaitBox (see FIG. 32A) or in communication with the GaitBox. The display may be separate from the GaitBox and any associated exercise equipment or Gait processing system or it may be integrated into these other systems. The GaitBox also includes one or more of typical communication modes based on the desired operations or use of the GaitBox outputs.

It is to be appreciated that one or more of the GaitBox characteristics, functions or capabilities may be used to provide inputs/outputs or other information to enhance the operations of the various Gait techniques as shown and described herein.

### Visual Display

The basic visual display of the GaitBox may be on the GaitBox (FIG. 32A) or provided as an output to a dedicated device or to a display that is part of the exercise equipment or Gait system used in cooperation with GaitBox. In general, the visual display presents the following information:
- Elapsed Time (updated every second)
- Elapsed Distance (updated every second)
- Elapsed Steps (updated every step)
- Average values for
   ∘ Speed (total distance / total time - updated once a second)
   ∘ Cadence (total steps / total time - updated every step)
   ∘ Left/Right Stride Length (total length of strides on given side / total time - updated after each stride)
   ∘ Left/Right Stride Time Percentage (total time of strides on given side / total time - updated after every stride)
- Instantaneous values for
   ∘ Speed (current speed reading)
   ∘ Cadence (based on the duration of the last step - updated after every stride)
   ∘ Left/Right Stride Length (length of last stride - updated after every stride)
   ∘ Left/Right Stride Time Percentage (duration of stride on given side / duration of last two strides - updated after every stride)

As mentioned above, the visual display can be presented via native software running on a PC, a tablet, or a smart phone, i.e. a software application designed to run on one or more of these platforms). Although the microprocessor in the GaitBox itself may do some processing of the raw sensor data (e.g. noise filtering or error correction), the actual data display is performed by the software application running on the display device. We will refer to this as the "GaitBox application" (as opposed to the GaitBox hardware, consisting of the sensors and microprocessor).

As shown in FIG. 32B, the Gaitbox will communicate with the display device wirelessly via Bluetooth or Wi-Fi, although other implementations could use a wired connection such as Ethernet or RS-232.

### Video

In an alternative embodiments or in addition, the GaitBox system incorporates one or more video cameras, which can communicate with the processor and/or as well as visual display in either a wired or wireless configuration. In one aspect, the visual display will show the video in real time. In some configurations, the video may appear on a separate "page" which can be selected by the user, or alongside other information on the primary screen. If multiple cameras are available, the GaitBox application provides for selection of the camera to be displayed. In some embodiments, a GaitBox application provides for simultaneous display of multiple camera views.

### Visual Feedback

In some aspects, the computer readable instructions in the application which manage the visual display provide for drawing edits such as lines and shapes (e.g. rectangles or circles) or other visual indicia on top of the video. These user provided drawings may be implemented using a touch screen, for example.

In addition to the basic gait parameters, the application which manages the visual display may provide graphic feedback as to the symmetry of gait. For example, two bars (representing left/right stride length) might appear on the display, and the user instructed to make the two bars equal in length (and of a specific height, i.e. stride length).

### Reporting

The GaitBox application includes computer readable instructions to generate a summary report (total time, total distance, total steps, average speed, average cadence, and statistical measures of left/right stride length and time percentage
(min/max/mean/median/standard deviation) or any other collected parameter, calculated parameter in any combination or as specified by a user. In addition, the report may be preserved in some fashion either on or off the display system (e.g. printing, stored as a file, or e-mailed).

Previous instrumented treadmills have provided GAIT metrics from sensors and cameras, but the systems disclosed herein can provide additional capabilities provided by a cloud-connected medical DAP treadmill.

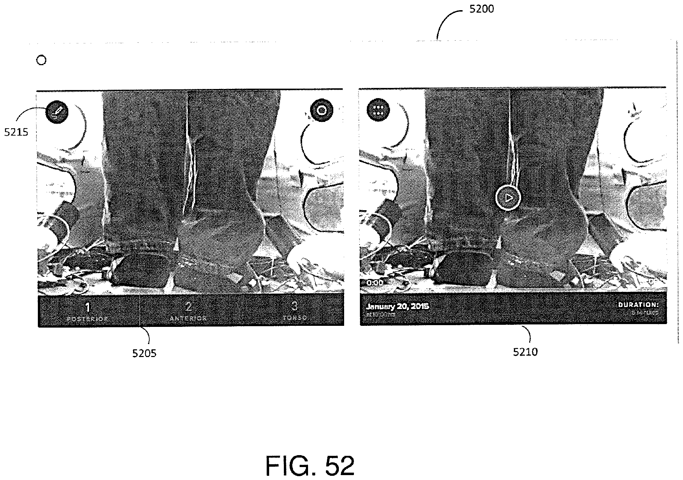

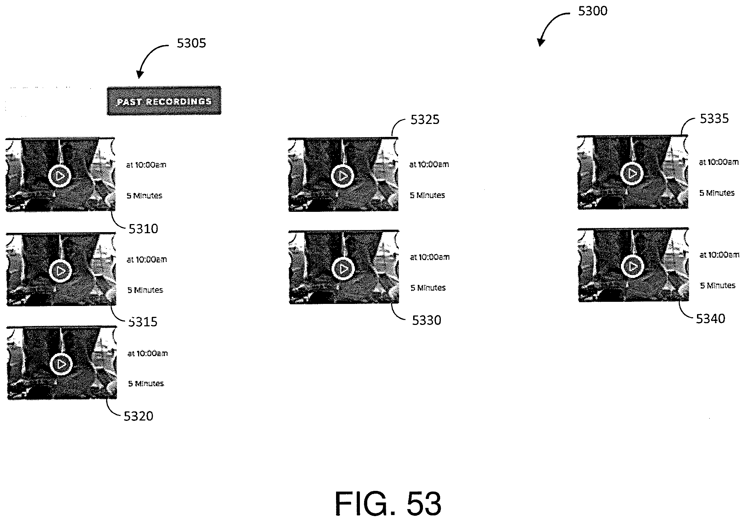

One novel feature is the ability to record segments of video to analyze changes in walking mechanics and demonstrate to users the visual difference in improvement. FIG. 52 illustrates a screen shot of a medical treadmill system display being used to compare live video in a current session 5205 to a past session video recording 5210 with timestamp synchronized data that links video and load cell data used to produce specific GAIT measures. Annotation tools 5215 are provided as well as the ability to select different camera views (1 - posterior, 2 - anterior and 3 - torso are shown). FIG. 53 illustrates a screen shot 5300 of a medical treadmill system display used to access past recordings 5305. The screen shot 5300 illustrates the recall of seven previously recorded videos from the cloud (past video sessions 5310 - 5340). Additionally, ground reaction forces can be compared to video at different body weight percentages. The analysis of ground reaction forces can be used to provide footprints as a visual display to the user or can be recorded for analysis later. Users can also use the touch screen to create annotations for real-time demonstration and feedback to the patient.

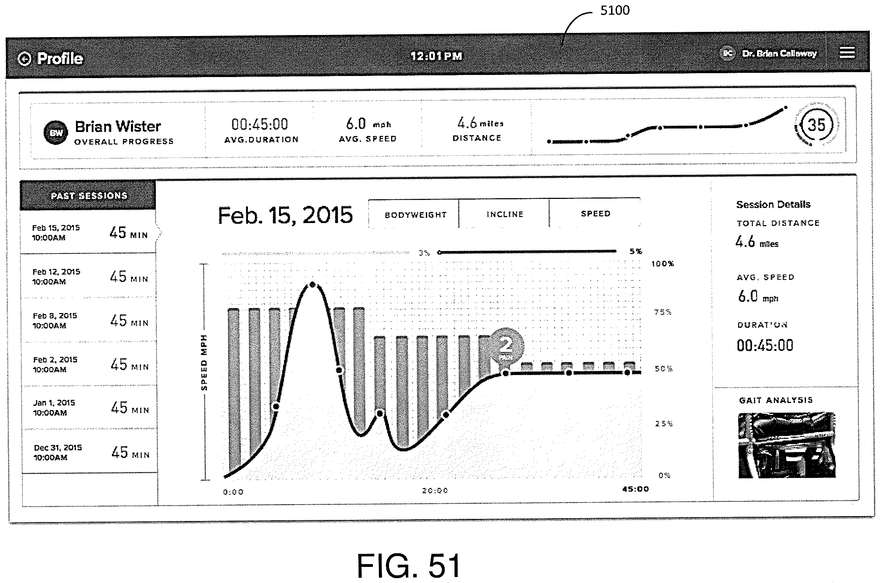

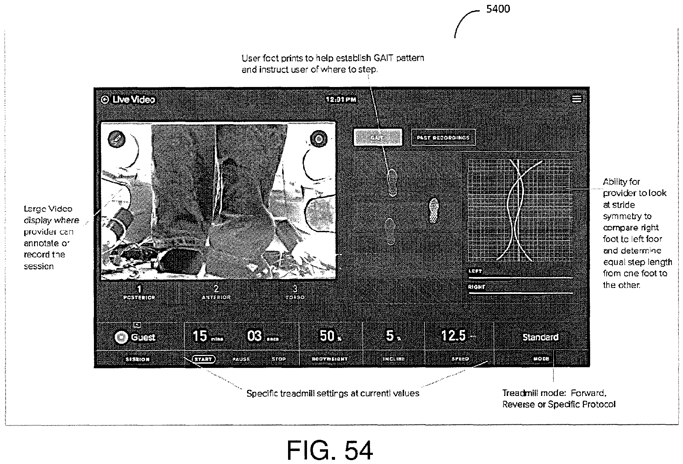

FIG. 54 is a screen shot 5400 of a medical treadmill system display indicating the status is a user session and an indication of GAIT metrics. FIG. 54 depicts the real-time video with feedback on step placement derived from the load cell data and the symmetry between right and left foot in step length. Screen shot 5100 in FIG. 51 illustrates an overall status report for a user including a listing of past sessions.

### Web Access to GAIT Measures

If GaitBox session data is saved to a server on the Internet, a Web-based application will make that information available via a browser. If information is associated with a particular user, they will have the ability to see only the information from their own sessions.

While the various Gait techniques and systems and the GaitBox are shown in use and configured for providing therapy utilizing unweighting systems, the various examples disclosed herein are not so limited. The gait methods and systems described herein, particularly for the GaitBox, may be adapted and configured for use with a treadmill with (as described) or without an unweighting system or other assisted use device.

In addition to the above described, techniques, other variations of implementing the system are possible. In one example, at low walking speeds, detecting a foot strike with an accelerometer mounted to the treadmill deck is challenging, due to the amount of background vibration induced by the treadmill motor itself. An alternate embodiment is to use an acoustic microphone alone or in conjunction with any of the above described aspects to detect foot strikes. In still another alternative embodiment, the detection of foot strikes is neglected altogether and instead leg proximity sensors are employed to measure the intervals between successive passages of the legs in front of the sensors.

To capture more complete workout data, the system can also capture user's heart rate and treadmill incline through wireless heart rate monitoring sensors and gyroscopic or accelerometer sensors

In situations where patients progress through a continuum of care, from immobile, to partially mobile, to fully mobile, gait data generated by the system can be connected and compared with data from devices aimed at other segments of the care continuum. An example might be gait data collected from a Tibion bionic leg matched against data collected from the system, compared to gait data collected from full mobility measurement system such as those produced by Optogait or Zebris. Doing so allows showing efficacy of treatment over time, beyond the range of any single system.

The systems may enable the measurement of gait asymmetry through the use of leg proximity sensor mounted on either side of the treadmill by reference to FIGs. 33A-33C. FIG. 33A is a normal symmetrical stride. FIG. 33B and 33C illustrate two kinds of gait abnormality, phase asymmetry (FIG. 33B) and stride jitter (FIG. 33C). In FIG. 33B A is compared to B. In FIG. 33C, A1 is compared to A2.

### Balance Assessment

Patients suffering from a lack of balance control can be prone to falling and having trouble controlling gait. A number of sensory and/or motor disorders can impair posture and equilibrium control, leading to balance issues. A clinician, such as a physician or therapist, can treat such an individual by performing an assessment of the patient's balance condition. For example, a clinician can observe a patient performing a number of routine motor tasks (e.g., standing, walking, climbing up or down stairs, etc.) and determine whether a patient has a normal or impaired balance condition. An observation of an impaired balance condition can lead to a recommended treatment protocol with the goal of achieving a normal balance condition.

A number of traditional balance assessment tests rely on observational data from a clinician as described above. U.S. Patent No. 5,919,419, Int'l Patent Publication No. WO, 2013019956A, Int'l Patent Publication No. WO 2004103176, U.S Publication No. 20080306412, Int'l Publication No. 2007115565, Int'l Patent Publication No. WO2008058567, and U.S. Patent No. 8,447,401, the disclosures of which are hereby incorporated by references in their entireties, describe methods of assessing and diagnosing balance issues in users. However, quantifiable data regarding a patient's balance condition can help provide a more accurate assessment and recommended therapy for a patient with impaired function.

Quantitative information on the efficacy of the human sense of balance can be obtained by, for example, the electrophysiological measurement of eye movements or of the postural responses of the limbs. A balance control deficit is indicated if a response is outside of the limits expected for individuals having a normal balance function. Quantitative postural information may also be obtained by measuring contractile activity of the muscles generating the internal body forces for maintaining the equilibrium position using electromyographic (EMG) recordings.

Balance deficits are, however, normally quantified by recording body sway, i.e., the displacement of the body from the equilibrium position. Quantification of the postural sway of a subject is known as "stabilometry" or "posturography". One such method for quantifying balance deficits involves the measurement of body sway in terms of displacement of the center of foot pressure (CFP), sometimes termed "center of force", generated by the inherent instability of a test subject standing on a fixed support surface. CFP is computed from the signals provided by force transducers which are typically embedded in the four corners of the support surface. The force transducer outputs are employed to obtain a projection, on the support surface platform, of the resultant forces acting at the subject's center of gravity.

Balance training and assessment can be utilized by physicians, therapists, and trainers as tools to predict recovery and develop treatment. Stroke patients, elderly patients, and patients with neurological conditions are examples of patient groups that can benefit from balance assessment and training. Balance training can include reaching, variations in base of support, use of tilt boards, gait training varying speed, and stair climbing exercises. The type of training can depend on the patient's ability and stage of recovery. Balance assessment can be used to determine what kind of the intensity of balance training to be used. Balance assessment can also be used to develop a more complete user profile for the purpose of data collection and treatment development, including non balance related treatment, such as unweighting treatment or other physical therapy.

Unweighting can be a helpful tool in conducting balance assessment. For example, in some embodiments, a part or parts of the body can be unweighted. Feedback sensors can be used to assess the user's balance response to the uneven weighting. In some embodiments, physical injury or damage can be severe enough that unweighting is helpful in allowing sufficient mobility for the patient during a balance assessment.

Sensors can include those described elsewhere in the application, for example, with respect to gait analysis. In some embodiments, the sensors include cameras, motion sensor, force sensors, gyroscopic, or accelerometer sensors. Other sensors are also possible. For example, the sensors can comprise heart rate monitoring sensors, IR sensor, optical mouse style laser sensors, proximity sensors, light sensor, shoe based sensors.

FIG. 35 illustrates an embodiment of a balance assessment system. An unweighting system can be used to sense and collect data related to the balance function of a user. This data can be stored in an aggregate user database, and analyzed based on stored normal and impaired user data. This analysis can result in a diagnosis of the user and/or a recommended treatment protocol.

### Concussion Assessment

Unweighting systems can also be used to perform assessments of a user's concussive state. A concussion, or a mild traumatic brain injury (MTBI) is the most common type of traumatic brain injury. Concussion can cause a variety of physical, cognitive, and emotional symptoms, which may not be recognized if subtle. Symptoms generally resolve within three weeks, but may persist and may develop into complications. People who have one concussion can be more susceptible to another, especially in cases in which the new injury occurs before symptoms from the previous concussion have resolved. There can also be a negative progressive process in which smaller impacts cause the same symptom severity. Repeated concussions may increase the risk in later life for dementia, Parkinson's disease, and/or depression. As such, it is important to quickly and accurately diagnose a concussion so that further harm can be prevented and recovery can begin.

Unweighting systems provided herein can be used to collect entered and sensed data from a user. As noted above, the unweighting system can comprise a user interface. The user interface can be used to collect user information, for example, related to the aggravating injury and resulting symptoms. Example information to be collected is shown in Appendix A - An Acute Concussion Evaluation provided by the Centers for Disease Control and Prevention (CDC). The system can also be configured to collect physical data using the sensors described above to gather information about the physical function of the user. The user interface can also be used to perform cognitive testing of the user. For example, the system can ask the user questions and seek user input. The collected data can be uploaded to an aggregate database of users and compared to the user's own previous data or to data from other normal or impaired users. Analysis of this data can result in a concussion diagnosis of the user.

FIG. 36 illustrates a schematic representation of the diagnostic process described above. Physical and/or cognitive data can be collected by the unweighting system. Analysis using the aggregate database of users can allow for diagnosis and/or generation of a recommended treatment for the user.

### General Assessment

In some embodiments, the unweighting system (e.g., the systems described in U.S. Provisional Application No. 62/013,999 and U.S. Provisional Application No. 62/024/916, both of which are incorporated by reference herein) can be configured to generally track body parameters, using, for example, infrared sensors, heart rate monitors, etc. The data collected can be analyzed by the aggregate database system to provide the user with an assessment. In this way, users needing therapy, but not under the supervision of a therapist (e.g., self-pay users) can be informed of an indication for treatment. The treatment can also be generated by the system, as described elsewhere herein. In other embodiments, the user can be directed to a physical therapist who can receive the data captured by the system.

The user and therapist can set up live sessions for the therapy. In other embodiments, the therapy can be delivered through the display or a separate system (e.g., tablet, laptop, smartphone) while the patient is using the system. Through the system's sensors, the therapist can monitor the user's function and progress, enabling physical therapy in a facility not offering therapy.

As such, some examples of the disclosed systems and methods can provide a system and method for matching users with the appropriate unweighting systems for the needed treatment and/or diagnostic assessment based on unweighting system features including category type, gait training, balance assessment, and concussion assessment.

### Payment Models

The current embodiment also provides a framework for payments to be made to the healthcare provider performing services, the healthcare provider accountable for the patient's outcome or the patient themselves as an adherence incentive. The system also supports the payment of funds from third party payers, from the patient themselves and from providers or healthcare systems into a patient fund that can be used to reimburse the appropriate parties based on successful improvement in patient function.

The method can further comprise transferring funds from the user to a treatment facility or provider. The method can further comprise providing a cost for the suggested workout routine. Differential pricing can be used to determine the cost. The method can further comprise providing a list of unweighting systems appropriate for the suggested workout routine. The method can further comprise providing available appointment times for suitable unweighting systems. The method can further comprise scheduling an appointment. In some embodiments, generating a suggested workout routine comprises generating workout routine on equipment other than an unweighting system. The method can further comprise uploading the suggested workout routine to the database. The method can further comprise performing the suggested workout and uploading performance data to the database. In some embodiments, the method comprises an iterative process, generating periodic updates for the user or a medical professional. The method can further comprise generating subsequent suggested workout routines based on user progress.

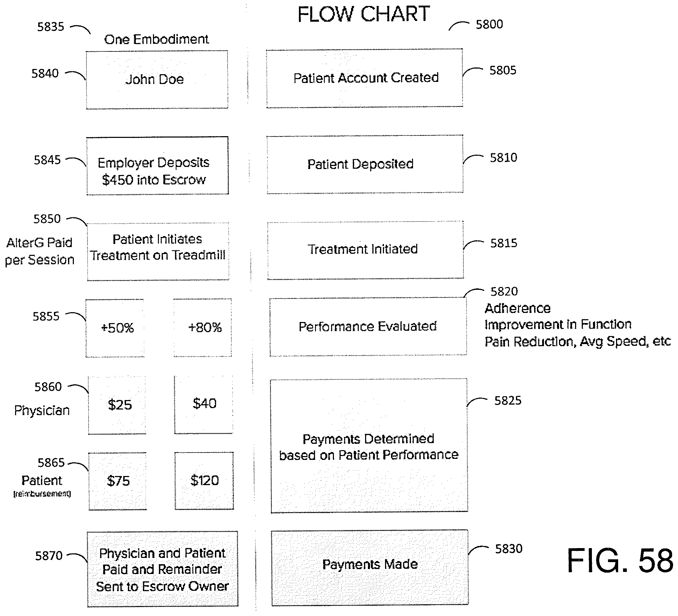

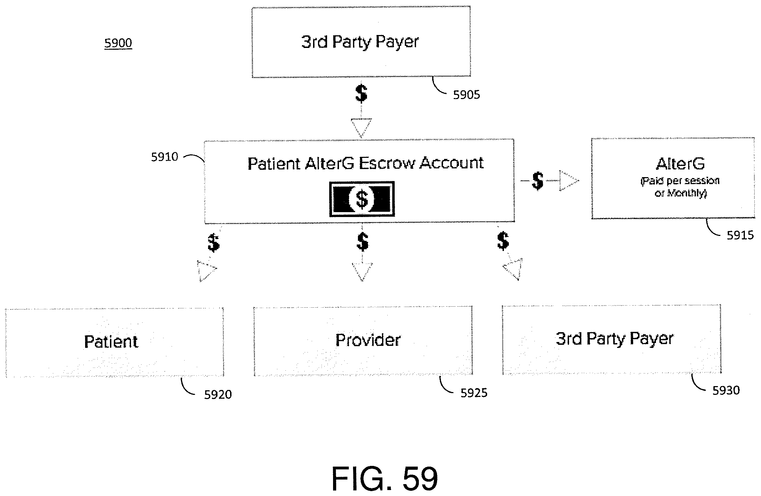

A potential user flow of the payments model is outlined in methods 5800 and 5900, respectively, as shown in FIGs. 58 and 59. These exemplary methods illustrate an embodiment where the 3rd party payer (insurance, employer, etc.) deposits funds into a patient "escrow" account to be withdrawn from once certain performance improvement metrics are achieved.

A specific example of the processes 5800, 5900 outlined above and in FIGs. 58 and 59 is explained in the following example. An orthopedic surgeon creates a patient record for a patient with moderate knee osteoarthritis. The use of instrumented exercise is a known treatment for mild to moderate knee osteoarthritis, and the physician would like to provide a structured exercise program for the patient prior to surgical intervention or in attempt to delay a surgical intervention. The physician uses the software application to create basic exercise recommendations and a plan of care for a 12-week exercise programming using the instrumented treadmill. The patient is scheduled to perform unsupervised self-care therapy sessions on a treadmill at a local physical therapy clinic. The patient schedules an appointment using their mobile device or connected smartwatch to perform the 12-sessions prescribed by the physician. The patient's insurer submits an escrow payment of $450 into the account. Payments of $25 per session are debited for the use of the treadmill and the remaining $150 is paid to the physician based on the meeting of certain metrics with the potential for another $150 in bonus payments if the patient's progress exceeds a certain threshold.

### Connecting Wearables and Additional Measures

Another key item to determining payment amounts and determining patient health improvement is adding additional sensors to provide more data. The interaction diagram described in FIG. 34 depicts the high-level communication occurring within the AlterG system 3400. In particular with regard to "Other Custom Systems" 3445 and "Custom APIs" 3460 which may, in one embodiment, be created, adapted and configured to securely connect to specific peripherals, such as network ready wearables or other network ready patient biometric data collection devices. For example, by using the AlterG system 3400 an AlterG DAP treadmill 3420 would be able to integrate, through custom APIs 3460, with a variety of conventional or network ready devices such as, for example, a blood pressure cuff, a blood glucose monitor, a metabolic cart, a skin temperature monitor, a heart ECG monitor, a muscle EMG, and many other devices to provide a multitude of data inputs. The analysis of these additional variables performed using analytics 3415 may be used to provide a more accurate assessment patient improvement from which to base reimbursement structures.

### Machine Health and Diagnostics

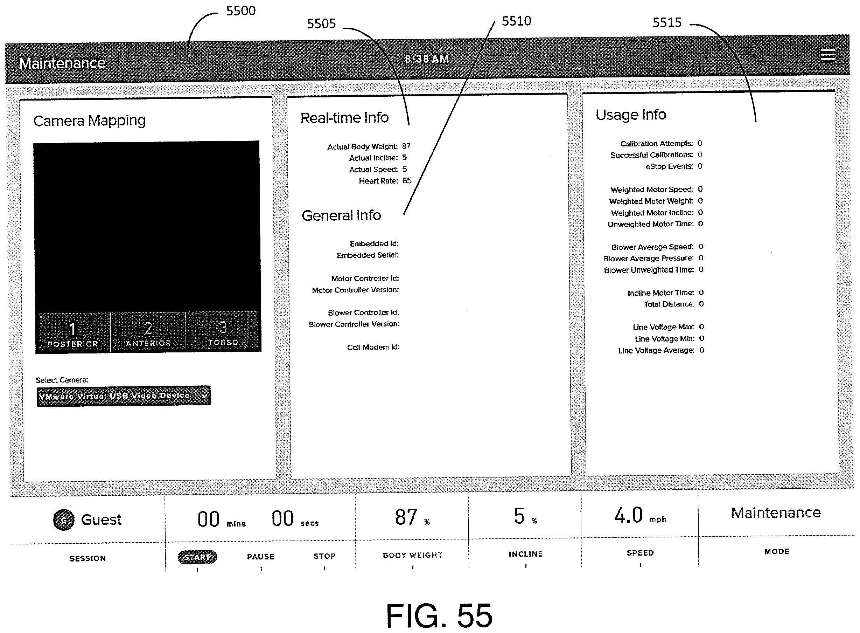

The creation of a "machine health" database that collects and analyzes machine performance data from devices in the field with a software interface to display real-time analytics to a service member of single machine performance, total fleet performance and predictive models of service risk. FIG. 63 may be modified to include within the dataset the various machine health data and metrics provided by the various DAP and mechanical unweighting systems and auxiliary systems described herein. FIG. 55 illustrates a screen shot 5500 of a medical treadmill display when the system is in maintenance mode or other mode to access machine health data at the system or remotely. A number of different aspects of machine health and remote monitoring are illustrated such as the real time info 5505, the general info 5510 and usage info 5515. In one embodiment, the machine health interface provides a dashboard of whole system expected longevity and individual part risk of failure with an advanced notification system that warns the clinic owner, customer support team or maintenance individuals of risk of failure, actions that are leading to advancement of machine wear and failure and a smart warranty system that reviews corrective actions as a result of abusive use and reduces, modifies or negates a warranty.

In one embodiment, the notification system is set up to automatically send periodic email notifications, text messages or other means of communication to the treadmill owner altering them of normal performance or concerning use trends that may be causing harm to the treadmill or specific parts of the treadmill. The notification system provides actionable information and suggested corrective actions to prevent further damage or wear on the treadmill.

In the preferred embodiment, the notification system and performance metrics are tied directly into the warranty of the unit in order to adjust a warranty length, void a warranty, better understanding which customers pose the smallest risk to a warranty or warranty extension and assisting in the price determination of a warranty extension based on current state of a treadmill.

### Treadmill Brake

Treadmills are widely used for rehabilitation and for exercise of users with a wide variety of abilities and mobility. Most treadmills do not have a way to hold the walking belt in place when the treadmill is stopped. Users, especially those with limited mobility, are susceptible to falls if they lean forward or backward because the belt may move and cause them to stumble or fall.

Treadmills are required to have an emergency stop (ESTOP) that can be pulled to remove power from the treadmill motor, and it is especially important for a treadmill brake to be applied after ESTOP is pulled to allow a fallen user to get up without the belt slipping out from under them. However, ESTOP must not cause an immediate stop of the belt because the belt could jerk to a stop and injure a patient that is moving at high speed.

Some treadmills use friction brakes to keep the belt in place, but friction brakes add additional cost and are especially difficult to provide correct operation when ESTOP is pulled. If they are the type that has springs to make them applied when unpowered, they can cause injury when power is cut to the treadmill because the brake will engage and may jerk the belt to a stop. If the friction brake is of the type that is normally not applied when unpowered, then there is no braking after ESTOP is pulled and it may be difficult for a fallen user to get up.

Another drawback of friction brakes is the added cost for the brake and the potential added cost for servicing the brake which may wear down over time.

Examples of the treadmill motor brake provide a number of advantages over the above mentioned shortcomings of conventional approaches to treadmill braking. In one aspect, a treadmill brake can apply motor power to hold the walking belt in place. In another aspect, a treadmill brake only applies power after detecting the beginning of movement of the treadmill belt by the user. In still another aspect, a treadmill brake in one of the currently envisioned configurations will not require the addition of mechanical parts. In still another aspect, a treadmill brake uses the treadmill motor to brake but can utilize a treadmill controller with no provisions for motor braking. In still another aspect, a treadmill brake applies a DC voltage to motor windings using the motor inductance to lower the average current applied to the motor.

The treadmill motor brake may use a treadmill motor to apply the braking force using a technique generally known as DC Injection Braking. Multi-phase brushless motors, including induction motors and brushless DC motors, will hold position when a DC voltage is applied across two of the motor phases. In particular, a three-phase induction motor holds position in this way.

However, standard DC injection braking requires continuous high power that is applied to the locked-rotor which presents a very low impedance. A typical 2 HP motor of the type used in treadmills may have approximately 2 ohms of resistance and 20 uH of inductance when stalled. If the full AC voltage was rectified, say to 300VDC, and continuously applied to the motor windings, the current would be 300V/2 ohms = 150 A and the power would be 300^2/2 = 45 KW. A motor cannot not withstand this power very long without overheating or tripping a circuit breaker.

The solution to this problem is twofold. First, rather than applying the brake continuously, the brake can be applied only when the belt begins to move. This is a good approach because braking is only required when the belt is moved by a user trying to gain footing. Motors typically have an encoder or tachometer for speed feedback and those outputs can be read by a processor and used to apply the brake. In one embodiment, the treadmill motor has a 2048 pulse per revolution incremental encoder. A processor samples the A and B quadrature signals and starts to brake after detecting a few transitions of both signals. (It is generally not sufficient to detect changes in just one signal because the motor could be stopped at the transition point of that signal which could chatter while stopped.) The detection and electronics are sufficiently fast that only a tiny movement of the belt is allowed before the brake is applied.

The second solution to the power problem is to deliver short pulses from the rectified AC to apply to the brake rather than requiring an expensive, high current DC supply. The width of the pulses may be controlled to provide the desired amount of braking force. In one embodiment, the short pulses, are produced by a microcontroller that applies one pulse per ms. By using short pulses, the circuit takes advantage of the large inductance of the motor windings to limit the current. The duty cycle of the pulses can be tuned as needed, but a typical range is from 5 to 25% duty cycle at a frequency of 1 Khz.

FIG. 25 is a block diagram of an embodiment of a treadmill motor brake. The microcontroller disables AC power from the motor controller, enables the brake, and pulses DC power to two motor phases. When the brake is enabled, a freewheeling diode is also connected across the motor windings to limit voltage spikes due to the motor inductance. The high-voltage DC is produced in a conventional manner with a bridge or synchronous rectifier plus a filter formed from capacitors and inductors. The motor relay may be constructed with MOSFETs, TRIACs, or a mechanical relay. The brake pulse switch is preferably a MOSFET that can switch on and off quickly. The brake relay can be a mechanical or MOSFET-based DPDT relay.

Normally the brake control electronics enables power to the motor controller and sets the brake relay to connect motor phases to the motor controller.

When the emergency stop (ESTOP) is pulled, redundant hardware responds to either ESTOP switch and switches both relays to disable AC power from the motor controller and enable the brake. The microcontroller generates pulses to provide a controlled DC power to two motor phases to hold the treadmill belt in place.

The treadmill controller may be separate from the braking apparatus as shown in FIG. 25, or a custom controller may be designed to share components between the brake and the normal motor controller functions. For instance, the bridge rectifier and filter may be shared. Then a single high-voltage DC rail could provide power for both braking and motor operation.

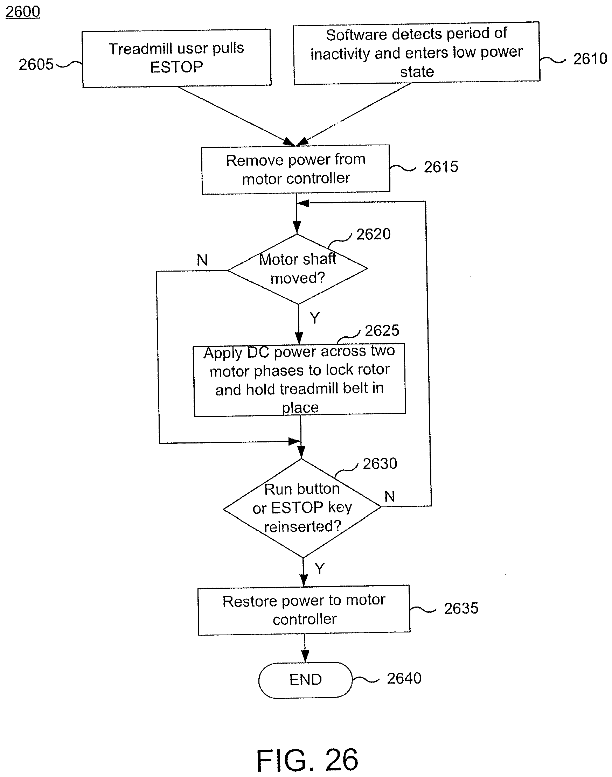

FIG. 26 is a flowchart of an exemplary treadmill motor brake activation method 2600. In one aspect, the treadmill motor brake may occur either by a user pulling the ESTOP (2605) or by software detecting a period of inactivity and entering a lower power state (2610). Once either step 2615 or 2610 occurs, power is removed from the treadmill motor controller (2615). Thereafter, the system remains in ESTOP or lower power state until motor shaft movement is detected. If motor shaft movement is detected (YES to decision block 2620) then apply DC power across two motor phases to lock rotor. With the rotor locked, the treadmill belt will hold in place.

If the answer to "motor shaft moved?" at step 2620 is no, then proceed to step 2630.

At step 2630, after locking rotor (step 2625) on determining the motor shaft has not moved ("NO" to step 2620), next determine is RUN button activated or is the ETOP key re-inserted? (step 2630).

If the RUN button is not activated or the ESTOP key not replaced (step 2630 is "NO"), then the control system will return to the step to monitor motor shaft movement (step 2620).

If the RUN key is activated/ESTOP key is replaced (step 2630 is "YES") tehn power is restored to the motor controller (step 2635) and the method ends (step 2640).

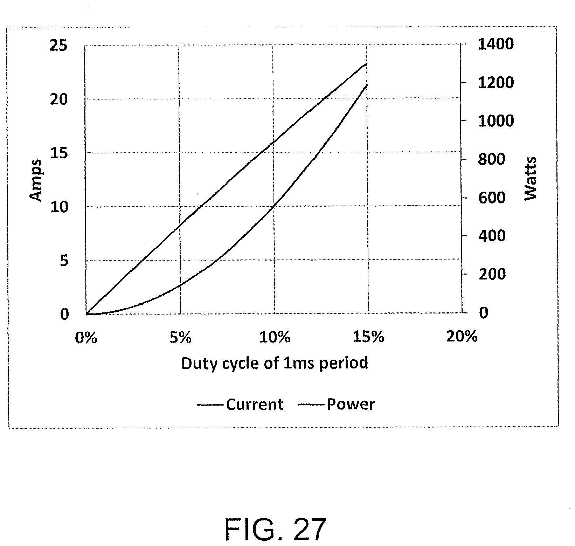

FIG. 27 is a graph of braking current and power vs. duty cycle of a 1 ms period. The braking current is limited by motor inductance. The graph is based on the following assumptions: the treadmill motor has a 2.2ohm phase-phase resistance, and a 17.9 mH inductance. Pulses are provided with a DC rail of 304V.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements, these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present application.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical range recited herein is intended to include all sub-ranges subsumed therein.

In still other alternatives, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims.

## Claims

1. A differential air pressure exercise system (100), comprising:
a frame (150) supporting an exercise device (178) and a user control panel (149);
a latch-able, pressure resisting cockpit assembly (101) coupled to the frame to support the operating pressure of the differential air pressure system;
a DAP unweighting bag (116) coupled to the cockpit assembly, the bag having a plurality of windows (141a, 141b, 141c); and
a support frame adapted and configured to slide-ably support the cockpit assembly along a pair of cockpit supports (102) moving the cockpit relative to the exercise device from an in use position at a first height where the DAP unweighting bag is in an unfolded configuration to an egress position at a second height where the DAP unweighting bag is in a folded configuration,
wherein in the folded configuration none of the plurality of windows is folded.

2. The system of claim 1 wherein all of said plurality of side windows (141) are interspersed with flexible, folding, pleated sections.

3. The system of claim 2 wherein all of the pleated sections are reinforced by horizontal rods (118) that prevent window folding.

4. The system of any one of the preceding claims wherein the cockpit assembly (101) includes a cockpit user opening and wherein heights of the side windows (141) between the pleated sections are less than the spacing between the cockpit supports (102) and the cockpit user opening.

5. The system of any one of the preceding claims wherein the side windows (141a, 141b, 141c) are arranged in horizontal alignment with the frame (150) supporting the exercise device (178).

6. The system of any one of the preceding claims wherein the DAP unweighting bag (116) includes a rear panel (125) and the side windows (141a, 141b, 141c) extend beyond the cockpit supports (102) with a portion towards the user control panel (149) and a portion towards the rear panel (125).

7. The system of any one of claims 1 to 5 wherein the DAP unweighting bag (116) includes a rear panel (125) provided with an upper window (117a) and a lower window (117b).

8. The system of claim 2 or claim 3 wherein the pleated sections are attached to the cockpit supports (102) in a vertically slide-able manner.

9. The system of any one of the preceding claims wherein the DAP unweighting bag (116) includes elastic members (119, 120) to enforce folding of the DAP unweighting bag in a predetermined, preferred direction and sequence.

10. The system of any one of the preceding claims wherein the DAP unweighting bag (116) includes a front panel (127) provided with a camera window (189).

11. The system of any one of the preceding claims further comprising one or more lights (72) within the DAP unweighting bag (116).

12. The system of claim 11 wherein the one or more lights (72) are provided on the frame (150) to illuminate an interior portion of the DAP unweighting bag (116).

13. The system of claim 12 wherein an interior surface of the DAP unweighting bag (116) is coated with a reflective surface to aid in lighting.

14. The system of any one of the preceding claims further comprising one or more cleats (122) on the DAP unweighting bag (116) configured for sliding engagement with an interior cleat guide channel or an exterior cleat guide channel (191) of the support frame.

15. The system of any one of the preceding claims further comprising a pair of cockpit guide roller assemblies (106) each coupled to a respective one the pair of cockpit supports (102).

## Patentansprüche

1. Differentielles Luftdruck-Übungssystem (100), umfassend:
einen Rahmen (150), der eine Übungsvorrichtung (178) und eine Benutzersteuertafel (149) trägt;
eine verriegelbare, druckbeständige Cockpitanordnung (101), die mit dem Rahmen gekoppelt ist, um den Betriebsdruck des differentiellen Luftdrucksystems zu tragen,
einen DAP-Entlastungsbeutel (116), der mit der Cockpitanordnung gekoppelt ist, wobei der Beutel eine Vielzahl von Fenstern (141a, 141b, 141c) aufweist; und
einen Tragrahmen, der angepasst und konfiguriert ist, um die Cockpitanordnung entlang eines Paars von Cockpitträgern (102) gleitend zu tragen, die das Cockpit relativ zu der Übungsvorrichtung aus einer Gebrauchsposition auf einer ersten Höhe, in der sich der DAP-Entlastungsbeutel in einer entfalteten Konfiguration befindet, zu einer Austrittsposition auf einer zweiten Höhe, in der sich der DAP-Entlastungsbeutel in einer gefalteten Konfiguration befindet, zu bewegen, wobei in der gefalteten Konfiguration keines der Vielzahl von Fenstern gefaltet ist.

2. System nach Anspruch 1, wobei alle der Vielzahl von Seitenfenstern (141) mit flexiblen, faltbaren, gefalteten Abschnitten durchsetzt sind.

3. System nach Anspruch 2, wobei alle gefalteten Abschnitte durch horizontale Stangen (118) verstärkt sind, die Fensterfalten verhindern.

4. System nach einem der vorhergehenden Ansprüche, wobei die Cockpitanordnung (101) eine Cockpitbenutzeröffnung beinhaltet und wobei Höhen der Seitenfenster (141) zwischen den gefalteten Abschnitten geringer sind als der Abstand zwischen den Cockpitträgern (102) und der Cockpitbenutzeröffnung.

5. System nach einem der vorhergehenden Ansprüche, wobei die Seitenfenster (141a, 141b, 141c) in horizontaler Ausrichtung mit dem Rahmen (150) angeordnet sind, der die Übungsvorrichtung (178) trägt.

6. System nach einem der vorhergehenden Ansprüche, wobei der DAP-Entlastungsbeutel (116) eine Rückwand (125) beinhaltet und die Seitenfenster (141a, 141b, 141c) sich über die Cockpitträger (102) mit einem Abschnitt auf die Benutzersteuertafel (149) und einem Abschnitt auf die Rückwand (125) hinauserstrecken.

7. System nach einem der Ansprüche 1 bis 5, wobei der DAP-Entlastungsbeutel (116) eine Rückwand (125) beinhaltet, die mit einem oberen Fenster (117a) und einem unteren Fenster (117b) bereitgestellt ist.

8. System nach Anspruch 2 oder 3, wobei die gefalteten Abschnitte auf vertikal gleitbare Weise an den Cockpitträgern (102) angebracht sind.

9. System nach einem der vorhergehenden Ansprüche, wobei der DAP-Entlastungsbeutel (116) elastische Elemente (119, 120) beinhaltet, um das Falten des DAP-Entlastungsbeutels in einer vorbestimmten bevorzugten Richtung und Sequenz zu erzwingen.

10. System nach einem der vorhergehenden Ansprüche, wobei der DAP-Entlastungsbeutel (116) eine Vorderwand (127) beinhaltet, die mit einem Kamerafenster (189) bereitgestellt ist.

11. System nach einem der vorhergehenden Ansprüche, ferner umfassend eine oder mehrere Leuchten (72) in dem DAP-Entlastungsbeutel (116).

12. System nach Anspruch 11, wobei das eine oder die mehreren Leuchten (72) an dem Rahmen (150) bereitgestellt sind, um einen inneren Abschnitt des DAP-Entlastungsbeutels (116) zu beleuchten.

13. System nach Anspruch 12, wobei eine Innenfläche des DAP-Entlastungsbeutels (116) mit einer reflektierenden Fläche beschichtet ist, um das Beleuchten zu unterstützen.

14. System nach einem der vorhergehenden Ansprüche, ferner umfassend einen oder mehrere Klemmen (122) an dem DAP-Entlastungsbeutel (116), die zum Gleiteingriff mit einem inneren Klemmenführungskanal oder einem äußeren Klemmenführungskanal (191) des Tragrahmens konfiguriert sind.

15. System nach einem der vorhergehenden Ansprüche, ferner umfassend ein Paar von Cockpitführungsrollenanordnungen (106), die je mit einem jeweiligen Paar von Cockpitträgern (102) gekoppelt sind.

## Revendications

1. Système d'exercice de pression d'air différentielle (100), comprenant :
un cadre (150) supportant un dispositif d'exercice (178) et un panneau de commande d'utilisateur (149) ;
un ensemble de console de résistance à la pression (101) pouvant être verrouillé couplé au cadre pour supporter la pression de service du système de pression d'air différentielle ;
un sac de délestage de pression d'air différentielle (116) couplé à l'ensemble de console, le sac comportant une pluralité de fenêtres (141a, 141b, 141c) ; et
un cadre de support adapté et conçu pour supporter de manière coulissante l'ensemble de console le long d'une paire de supports de console (102) déplaçant la console par rapport au dispositif d'exercice depuis une position en utilisation à un première hauteur où le sac de délestage de pression d'air différentielle se trouve dans une configuration déployée vers une position d'évacuation à une deuxième hauteur où le sac de délestage de pression d'air différentielle se trouve dans une configuration repliée,
dans la configuration repliée aucune de la pluralité de fenêtres n'étant pliée.

2. Système selon la revendication 1, dans lequel toutes les fenêtres de ladite pluralité de fenêtres latérales (141) sont entrecoupées de sections flexibles, de pliage, plissées.

3. Système selon la revendication 2 dans lequel toutes les sections des sections plissées sont renforcées par des tiges horizontales (118) qui empêchent le pliage à fenêtre.

4. Système selon l'une quelconque des revendications précédentes dans lequel l'ensemble de console (101) comprend une ouverture d'utilisateur de console et dans lequel les hauteurs des fenêtres latérales (141) entre les sections plissées sont inférieures à l'espacement entre les supports de console (102) et l'ouverture d'utilisateur de console.

5. Système selon l'une quelconque des revendications précédentes, dans lequel les fenêtres latérales (141a, 141b, 141c) sont disposées en alignement horizontal avec le cadre (150) supportant le dispositif d'exercice (178).

6. Système selon l'une quelconque des revendications précédentes, dans lequel le sac de délestage de pression d'air différentielle (116) comprend un panneau arrière (125) et les fenêtres latérales (141a, 141b, 141c) s'étendent au-delà des supports de console (102) avec une partie vers le panneau de commande d'utilisateur (149) et une partie vers le panneau arrière (125).

7. Système selon l'une quelconque des revendications 1 à 5, dans lequel le sac de délestage de pression d'air différentielle (116) comprend un panneau arrière (125) doté d'une fenêtre supérieure (117a) et d'une fenêtre inférieure (117b).

8. Système selon la revendication 2 ou la revendication 3 dans lequel les sections plissées sont fixées aux supports de console (102) de manière à coulisser verticalement.

9. Système selon l'une quelconque des revendications précédentes dans lequel le sac de délestage de pression d'air différentielle (116) comprend des éléments élastiques (119, 120) pour renforcer le pliage du sac de délestage de pression d'air différentielle dans une direction et selon une séquence prédéterminées préférées.

10. Système selon l'une quelconque des revendications précédentes, dans lequel le sac de délestage de pression d'air différentielle (116) comprend un panneau avant (127) doté d'une fenêtre de prise de vue (189).

11. Système selon l'une quelconque des revendications précédentes comprenant en outre au moins une lumière (72) à l'intérieur du sac de délestage de pression d'air différentielle (116).

12. Système selon la revendication 11 dans lequel l'au moins une lumière (72) est disposée sur le cadre (150) pour éclairer une partie intérieure du sac de délestage de pression d'air différentielle (116).

13. Système selon la revendication 12 dans lequel une surface intérieure du sac de délestage de pression d'air différentielle (116) est recouvert d'une surface réfléchissante pour faciliter l'éclairage.

14. Système selon l'une quelconque des revendications précédentes comprenant en outre au moins un crampon (122) sur le sac de délestage de pression d'air différentielle (116) conçu pour une mise en prise coulissante avec un canal de guidage de crampon intérieur ou un canal de guidage de crampon extérieur (191) du cadre de support.

15. Système selon l'une quelconque des revendications précédentes comprenant en outre une paire d'ensembles de rouleau de guidage de console (106), chacun couplé à un support de console respectif de la paire de supports de console (102).
